(19) Europäisches Patentamt
European Patent Office
Office européen des brevets

(11) EP 3 392 325 B1

(12) EUROPEAN PATENT SPECIFICATION

(45) Date of publication and mention of the grant of the patent:
**15.04.2020 Bulletin 2020/16**

(21) Application number: **16872833.5**

(22) Date of filing: **25.11.2016**

(51) Int Cl.:
***C09K 19/56*** *(2006.01)* ***C09K 19/12*** *(2006.01)*
***C09K 19/20*** *(2006.01)* ***C09K 19/30*** *(2006.01)*
***C09K 19/34*** *(2006.01)* ***C09K 19/38*** *(2006.01)*
***C09K 19/42*** *(2006.01)* ***G02F 1/13*** *(2006.01)*
***G02F 1/1337*** *(2006.01)* ***C09K 19/44*** *(2006.01)*
***C09K 19/46*** *(2006.01)*

(86) International application number:
**PCT/JP2016/084877**

(87) International publication number:
**WO 2017/098933 (15.06.2017 Gazette 2017/24)**

(54) **LIQUID CRYSTAL COMPOSITION AND LIQUID CRYSTAL DISPLAY ELEMENT**

FLÜSSIGKRISTALLZUSAMMENSETZUNG UND FLÜSSIGKRISTALLANZEIGEELEMENT

COMPOSITION DE CRISTAUX LIQUIDES ET ÉLÉMENT D’AFFICHAGE À CRISTAUX LIQUIDES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **08.12.2015 JP 2015239064**

(43) Date of publication of application:
**24.10.2018 Bulletin 2018/43**

(73) Proprietors:
- **JNC Corporation**
  **Chiyoda-ku**
  **Tokyo 100-8105 (JP)**
- **JNC Petrochemical Corporation**
  **Tokyo 100-0004 (JP)**

(72) Inventor: **SAITO, Masayuki**
**Ichihara-shi**
**Chiba 290-8551 (JP)**

(74) Representative: **TBK**
**Bavariaring 4-6**
**80336 München (DE)**

(56) References cited:
**EP-A2- 2 918 658**
**WO-A1-2013/047359**
**WO-A1-2013/054682**
**WO-A1-2013/080850**
**WO-A1-2014/136770**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 392 325 B1

## Description

### Technical Field

The invention relates to a liquid crystal composition, a liquid crystal display device including the composition, and so forth. In particular, the invention relates to a liquid crystal composition that has negative dielectric anisotropy and contains a polar compound (or a polymer thereof) having a polymerizable group, in which vertical alignment of liquid crystal molecules can be achieved by action of the compound, and a liquid crystal display device.

### Background Art

In a liquid crystal display device, a classification based on an operating mode for liquid crystal molecules includes a phase change (PC) mode, a twisted nematic (TN) mode, a super twisted nematic (STN) mode, an electrically controlled birefringence (ECB) mode, an optically compensated bend (OCB) mode, an in-plane switching (IPS) mode, a vertical alignment (VA) mode, a fringe field switching (FFS) mode and a field-induced photo-reactive alignment (FPA) mode. A classification based on a driving mode in the device includes a passive matrix (PM) and an active matrix (AM). The PM is classified into static, multiplex and so forth, and the AM is classified into a thin film transistor (TFT), a metal insulator metal (MIM) and so forth. The TFT is further classified into amorphous silicon and polycrystal silicon. The latter is classified into a high temperature type and a low temperature type based on a production process. A classification based on a light source includes a reflective type utilizing natural light, a transmissive type utilizing backlight and a transflective type utilizing both the natural light and the backlight.

The liquid crystal display device includes a liquid crystal composition having a nematic phase. The composition has suitable characteristics. An AM device having good characteristics can be obtained by improving characteristics of the composition. Table 1 below summarizes a relationship in two characteristics. The characteristics of the composition will be further described based on a commercially available AM device. A temperature range of the nematic phase relates to a temperature range in which the device can be used. A preferred maximum temperature of the nematic phase is about 70°C or higher, and a preferred minimum temperature of the nematic phase is about -10°C or lower. Viscosity of the composition relates to a response time in the device. A short response time is preferred for displaying moving images on the device. A shorter response time even by one millisecond is desirable. Accordingly, small viscosity in the composition is preferred. Small viscosity at low temperature is further preferred.

Table 1. Characteristics of composition and AM device

| No | Characteristics of composition | Characteristics of AM device |
|---|---|---|
| 1 | Wide temperature range of a nematic phase | Wide usable temperature range |
| 2 | Small viscosity | Short response time |
| 3 | Suitable optical anisotropy | Large contrast ratio |
| 4 | Large positive or negative dielectric an isotropy | Low threshold voltage and small electric power consumption Large contrast ratio |
| 5 | Large specific resistance | Large voltage holding ratio and large contrast ratio |
| 6 | High stability to ultraviolet light and heat | Long service life |

Optical anisotropy of the composition relates to a contrast ratio in the device. According to a mode of the device, large optical anisotropy or small optical anisotropy, more specifically, suitable optical anisotropy is required. A product ($\Delta n \times d$) of the optical anisotropy ($\Delta n$) of the composition and a cell gap (d) in the device is designed so as to maximize the contrast ratio. A suitable value of the product depends on a type of the operating mode. The value is in the range of about 0.30 micrometer to about 0.40 micrometer in a device having the VA mode, and in the range of about 0.20 micrometer to about 0.30 micrometer in a device having the IPS mode or the FFS mode. In the above case, a composition having large optical anisotropy is preferred for a device having a small cell gap. Large dielectric anisotropy in the composition contributes to low threshold voltage, small electric power consumption and a large contrast ratio in the device. Accordingly, the large dielectric anisotropy is preferred. Large specific resistance in the composition contributes to a large voltage holding ratio and the large contrast ratio in the device. Accordingly, a composition having large specific resistance at room temperature and also at a temperature close to the maximum temperature of the nematic phase in

an initial stage is preferred. The composition having large specific resistance at room temperature and also at a temperature close to the maximum temperature of the nematic phase even after the device has been used for a long period of time is preferred. Stability of the composition to ultraviolet light and heat relates to a service life of the device. In the case where the stability is high, the device has a long service life. Such characteristics are preferred for an AM device use in a liquid crystal projector, a liquid crystal television and so forth.

In a general-purpose liquid crystal display device, vertical alignment of liquid crystal molecules is achieved by a specific polyimide alignment film. In a liquid crystal display device having a polymer sustained alignment (PSA) mode, an effect of a polymer is utilized. First, a composition to which a small amount of a polymerizable compound is added is injected into the device. Next, the composition is irradiated with ultraviolet light while voltage is applied between substrates of the device. The polymerizable compound is polymerized to form a network structure of the polymer in the composition. In the composition, alignment of liquid crystal molecules can be controlled by the polymer, and therefore the response time in the device is shortened and also image persistence is improved. Such an effect of the polymer can be expected for a device having the mode such as the TN mode, the ECB mode, the OCB mode, the IPS mode, the VA mode, the FFS mode and the FPA mode.

On the other hand, in a liquid crystal display device having no alignment film, a liquid crystal composition containing a polar compound having no polymer and no polymerizable group is used. First, a composition to which a small amount of the polymerizable compound and a small amount of the polar compound are added is injected into the device. Here, the polar compound is adsorbed onto a substrate surface to be arranged. The liquid crystal molecules are aligned according to the arrangement. Next, the composition is irradiated with ultraviolet light while voltage is applied between substrates of the device. Here, the polymerizable compound is polymerized to stabilize the alignment of liquid crystal molecules. In the composition, alignment of liquid crystal molecules can be controlled by the polymer and the polar compound, and therefore the response time in the device is shortened, and image persistence is improved. Further, in the device having no alignment film, a step of forming the alignment film is unnecessary. The device has no alignment film, and therefore reduction in electric resistance of the device by interaction between the alignment film and the composition is not caused. Such an effect caused by a combination of the polymer and the polar compound can be expected for the device having the mode such as the TN mode, the ECB mode, the OCB mode, the IPS mode, the VA mode, the FFS mode and the FPA mode.

A composition having positive dielectric anisotropy is used in an AM device having the TN mode. A composition having negative dielectric anisotropy is used in an AM device having the VA mode. In an AM device having the IPS mode or the FFS mode, a composition having positive or negative dielectric anisotropy is used. In an AM device having a polymer sustained alignment mode, a composition having positive or negative dielectric anisotropy is used. Examples of a liquid crystal composition having negative dielectric anisotropy are disclosed in Patent literature Nos. 1 to 6 described below. In the invention, a polar compound (or a polymer thereof) having a polymerizable group is combined with a liquid crystal compound, and the resulting composition is used in the liquid crystal display device having no alignment film.

Also EP2918658 (A2), WO2014136770 (A1), WO2013047359 (A1), WO2013080850 (A1), and WO2013054682 (A1) provide relevant background art.

## Citation List

### Patent Literature

Patent literature No. 1: WO 2014/090362 A.
Patent literature No. 2: WO 2014/094959 A.
Patent literature No. 3: WO 2013/004372 A.
Patent literature No. 4: WO 2012/104008 A.
Patent literature No. 5: WO 2012/038026 A.
Patent literature No. 6: JP S50-35076 A.

## Summary of Invention

### Technical Problem

One of aims of the invention is to provide a liquid crystal composition containing a polar compound (or a polymer thereof) having a polymerizable group, in which the polar compound has high compatibility with a liquid crystal compound. Another aim is to provide a liquid crystal composition in which vertical alignment of liquid crystal molecules can be achieved by action of a polymer produced from the polar compound. Another aim is to provide a liquid crystal composition

satisfying at least one of characteristics such as high maximum temperature of a nematic phase, low minimum temperature of the nematic phase, small viscosity, suitable optical anisotropy, large negative dielectric anisotropy, large specific resistance, high stability to ultraviolet light and high stability to heat. Another aim is to provide a liquid crystal composition having a suitable balance regarding at least two of the characteristics. Another aim is to provide a liquid crystal display device including such a composition. Another aim is to provide an AM device having characteristics such as a short response time, a large voltage holding ratio, low threshold voltage, a large contrast ratio and a long service life.

**Solution to Problem**

The invention concerns a liquid crystal composition that has negative dielectric anisotropy, and contains

a compound represented by formula (1) as a first component:

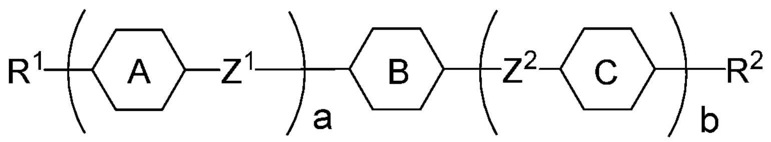

(1)

wherein, in formula (1), $R^1$ is alkenyl having 2 to 12 carbons, or alkenyl having 2 to 12 carbons in which at least one hydrogen is replaced by fluorine or chlorine; $R^2$ is alkyl having 1 to 12 carbons, alkoxy having 1 to 12 carbons, alkenyl having 2 to 12 carbons or alkenyloxy having 2 to 12 carbons; ring A and ring C are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; $Z^1$ and $Z^2$ are independently a single bond, $-CH_2CH_2-$, $-CH_2O-$, $-OCH_2-$, -COO- or -OCO-; and a is 1, 2 or 3, b is 0 or 1, and a sum of a and b is 3 or less, and

at least one polar compound having a polymerizable group selected from the group of compounds represented by formula (4) as a first additive:

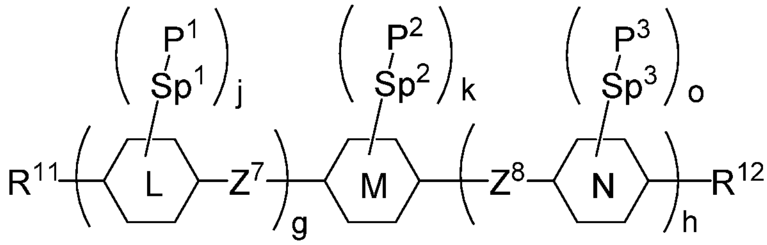

(4)

wherein, in formula (4), $R^{11}$ is hydrogen, fluorine, chlorine or alkyl having 1 to 25 carbons, and in the alkyl, at least one piece of $-CH_2-$may be replaced by $-NR^0-$, -O-, -S-, -CO-, -CO-O-, -O-CO-, -O-CO-O- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons; $R^{12}$ is a polar group having at least one of an oxygen atom having an OH structure, a sulfur atom having an SH structure and a nitrogen atom having a primary, secondary or tertiary amine structure; ring L, ring M and ring N are independently 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; $Z^7$ and $Z^8$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$ may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine; $P^1$, $P^2$ and $P^3$ are a polymerizable group; $Sp^1$, $Sp^2$ and $Sp^3$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C=C-, and in the groups, at least one

hydrogen may be replaced by fluorine, chlorine, $-OCO-CH=CH_2$ or $-OCO-C(CH_3)=CH_2$; g and h are independently 0, 1, 2, 3 or 4, and a sum of g and h is 0, 1, 2, 3 or 4; j and o are independently 0, 1, 2, 3 or 4; and k is 1, 2, 3 or 4.

## Advantageous Effects of Invention

One of advantages of the invention is a liquid crystal composition containing a polar compound (or a polymer thereof) having a polymerizable group, in which the polar compound has high compatibility with a liquid crystal compound. Another advantage is a liquid crystal composition that can achieve vertical alignment of liquid crystal molecules by action of a polymer produced from the polar compound. Another advantage is a liquid crystal composition satisfying at least one of characteristics such as high maximum temperature of a nematic phase, low minimum temperature of the nematic phase, small viscosity, suitable optical anisotropy, large negative dielectric anisotropy, large specific resistance, high stability to ultraviolet light and high stability to heat. Another advantage is a liquid crystal composition having a suitable balance regarding at least two of the characteristics. Another advantage is a liquid crystal display device including such a composition. Another advantage is an AM device having characteristics such as a short response time, a large voltage holding ratio, low threshold voltage, a large contrast ratio and a long service life.

## Description of Embodiments

Usage of terms herein is as described below. Terms "liquid crystal composition" and "liquid crystal display device" may be occasionally abbreviated as "composition" and "device," respectively. "Liquid crystal display device" is a generic term for a liquid crystal display panel and a liquid crystal display module. "Liquid crystal compound" is a generic term for a compound having a liquid crystal phase such as a nematic phase and a smectic phase, and a compound having no liquid crystal phase but to be mixed with the composition for the purpose of adjusting characteristics such as a temperature range of the nematic phase, viscosity and dielectric anisotropy. The compound has a six-membered ring such as 1,4-cyclohexylene or 1,4-phenylene, and has rod-like molecular structure. "Polymerizable compound" is a compound to be added for the purpose of forming a polymer in the composition.

The liquid crystal composition is prepared by mixing a plurality of liquid crystal compounds. An additive such as an optically active compound, an antioxidant, an ultraviolet light absorber, a dye, an antifoaming agent, the polymerizable compound, a polymerization initiator, a polymerization inhibitor and a polar compound is added to the liquid crystal composition when necessary. The liquid crystal compound and the additive are mixed in such a procedure. A proportion (content) of the liquid crystal compound is expressed in terms of weight percent (% by weight) based on the weight of the liquid crystal composition containing no additive, even after the additive has been added. A proportion (amount of addition) of the additive is expressed in terms of weight percent (% by weight) based on the weight of the liquid crystal composition containing no additive. Weight parts per million (ppm) may be occasionally used. A proportion of the polymerization initiator and the polymerization inhibitor is exceptionally expressed based on the weight of the polymerizable compound.

"Maximum temperature of the nematic phase" may be occasionally abbreviated as "maximum temperature." "Minimum temperature of the nematic phase" may be occasionally abbreviated as "minimum temperature." An expression "having large specific resistance" means that the composition has large specific resistance at room temperature and also at a temperature close to the maximum temperature in an initial stage, and the composition has the large specific resistance at room temperature and also at a temperature close to the maximum temperature even after the device has been used for a long period of time. An expression "having a large voltage holding ratio" means that the device has a large voltage holding ratio at room temperature and also at a temperature close to the maximum temperature in an initial stage, and the device has the large voltage holding ratio at room temperature and also at a temperature close to the maximum temperature even after the device has been used for a long period of time. In the composition or the device, the characteristics may be occasionally examined before and after an aging test (including an acceleration deterioration test) . An expression "increase the dielectric anisotropy" means that a value of dielectric anisotropy positively increases in a composition having positive dielectric anisotropy, and the value of dielectric anisotropy negatively increases in a composition having negative dielectric anisotropy.

A compound represented by formula (1) may be occasionally abbreviated as "compound (1)." At least one compound selected from the group of compounds represented by formula (1) may be occasionally abbreviated as "compound (1)." "Compound (1)" means one compound, a mixture of two compounds or a mixture of three or more compounds represented by formula (1). A same rule applies also to any other compound represented by any other formula. An expression "at least one piece of 'A'" means that the number of 'A' is arbitrary. An expression "at least one piece of 'A' may be replaced by 'B'" means that, when the number of 'A' is 1, a position of 'A' is arbitrary, and also when the number of 'A' is 2 or more, positions thereof can be selected without restriction. A same rule applies also to an expression "at least one piece of 'A' is replaced by 'B'."

An expression such as "at least one piece of $-CH_2-$ may be replaced by -O-" is used herein. In the above case,

$-CH_2-CH_2-CH_2-$ may be converted into $-O-CH_2-O-$ by replacement of non-adjacent $-CH_2-$ by -O-. However, a case where $-CH_2-$ adjacent to each other is replaced by -O- is excluded. The reason is that $-O-O-CH_2-$ (peroxide) is formed in the above replacement. More specifically, the expression means both "one piece of $-CH_2-$ may be replaced by -O-" and "at least two pieces of non-adjacent $-CH_2-$ may be replaced by -O-." A same rule applies not only to replacement to -O- but also to replacement to a divalent group such as -CH=CH- or -COO-. In alkyl, at least one piece of $-CH_2-$ may be occasionally replaced by cycloalkylene having 3 to 8 carbons. The number of carbon atoms of such alkyl is increased by replacement of the kind. The maximum number of carbon atoms is 30 in such a case. A same rule applies not only to a monovalent group such as alkyl but also to a divalent group such as alkylene.

A symbol of terminal group $R^2$ is used in a plurality of compounds in chemical formulas of component compounds. In the compounds, two groups represented by two pieces of arbitrary $R^2$ may be identical or different. For example, in one case, $R^2$ of compound (1-1) is ethyl and $R^2$ of compound (1-2) is ethyl. In another case, $R^2$ of compound (1-1) is ethyl and $R^2$ of compound (1-2) is propyl. A same rule applies also to a symbol of any other terminal group or the like. In formula (1), when a is 2, two of ring A exists. In the compound, two rings represented by two of ring A may be identical or different. A same rule applies also to two of arbitrary ring A when a is larger than 2. A same rule applies also to other symbols. A same rule applies also to such a case where two pieces of $-Sp^{10}-P^5$ exists in compound (6-27).

Symbol A, B, C, D or the like surrounded by a hexagonal shape corresponds to a ring such as ring A, ring B, ring C and ring D, respectively, and represents a six-membered ring, a fused ring or the like. In formula (4), an oblique line crossing the hexagonal shape represents that arbitrary hydrogen on the ring may be replaced by a group such as $-Sp^1-P^1$. A subscript such as 'j' represents the number of groups to be replaced. When the subscript 'j' is 0 (zero), no such replacement exists. When the subscript 'j' is 2 or more, a plurality of pieces of $-Sp^1-P^1$ exist on ring L. The plurality of groups represented by $-Sp^1-P^1$ may be identical or different.

Then, 2-fluoro-1,4-phenylene means two divalent groups described below. In a chemical formula, fluorine may be leftward (L) or rightward (R). A same rule applies also to an asymmetrical divalent group formed by removing two hydrogens from a ring, such as tetrahydropyran-2, 5-diyl. A same rule applies also to a divalent bonding group such as carbonyloxy (-COO- or -OCO-).

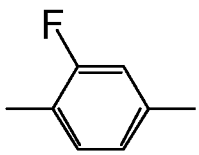

(L)

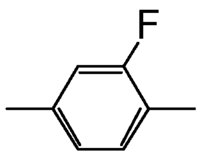

(R)

Alkyl of the liquid crystal compound is straight-chain alkyl or branched-chain alkyl, but includes no cyclic alkyl. Straight-chain alkyl is preferred to branched-chain alkyl. A same rule applies also to a terminal group such as alkoxy and alkenyl. With regard to a configuration of 1,4-cyclohexylene, trans is generally preferred to cis.

The invention includes items described below.

Item 1. A liquid crystal composition that has negative dielectric anisotropy, and contains

a compound represented by formula (1) as a first component:

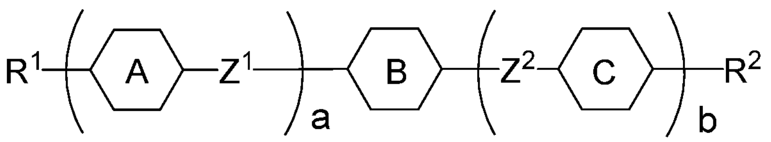

(1)

wherein, in formula (1), $R^1$ is alkenyl having 2 to 12 carbons, or alkenyl having 2 to 12 carbons in which at least one hydrogen is replaced by fluorine or chlorine; $R^2$ is alkyl having 1 to 12 carbons, alkoxy having 1 to 12 carbons, alkenyl having 2 to 12 carbons or alkenyloxy having 2 to 12 carbons; ring A and ring C are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-

2,6-diyl; $Z^1$ and $Z^2$ are independently a single bond, $-CH_2CH_2-$, $-CH_2O-$, $-OCH_2-$, -COO- or -OCO-; and a is 1, 2 or 3, b is 0 or 1, and a sum of a and b is 3 or less, and

at least one polar compound having a polymerizable group selected from the group of compounds represented by formula (4) as a first additive:

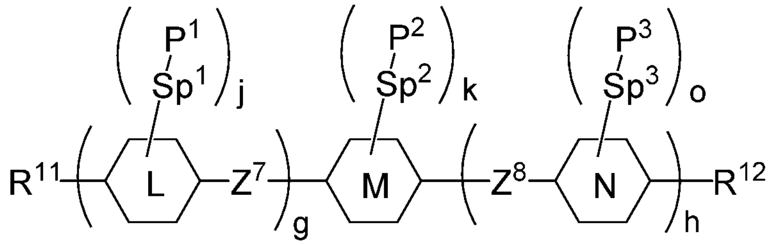

(4)

wherein, in formula (4), $R^{11}$ is hydrogen, fluorine, chlorine or alkyl having 1 to 25 carbons, and in the alkyl, at least one piece of $-CH_2-$may be replaced by $-NR^0-$, -O-, -S-, -CO-, -CO-O-, -O-CO-, -O-CO-O- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons; $R^{12}$ is a polar group having at least one of an oxygen atom having an OH structure, a sulfur atom having an SH structure and a nitrogen atom having a primary, secondary or tertiary amine structure; ring L, ring M and ring N are independently 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; $Z^7$ and $Z^8$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$ may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine; $P^1$, $P^2$ and $P^3$ are a polymerizable group; $Sp^1$, $Sp^2$ and $Sp^3$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine, chlorine, $-OCO-CH=CH_2$ or $-OCO-C(CH_3)=CH_2$; g and h are independently 0, 1, 2, 3 or 4, and a sum of g and h is 0, 1, 2, 3 or 4; j and o are independently 0, 1, 2, 3 or 4; and k is 1, 2, 3 or 4.

Item 2. The liquid crystal composition according to item 1, containing a compound selected from the group of compounds represented by formula (1-1) to formula (1-21) as the first component:

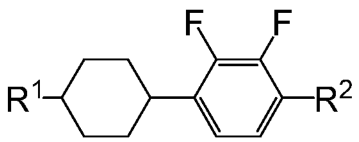

(1-1)

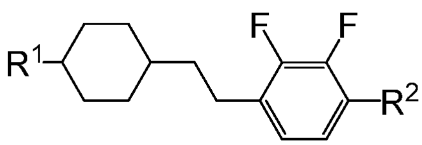

(1-2)

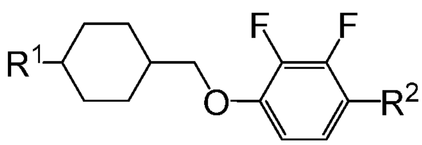

(1-3)

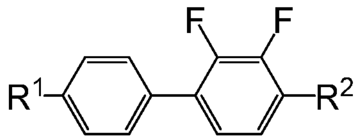

(1-4)

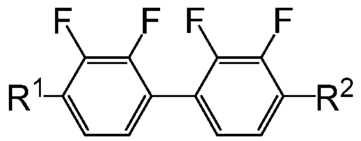

(1-5)

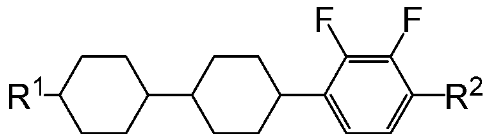

(1-6)

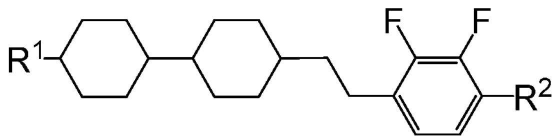

(1-7)

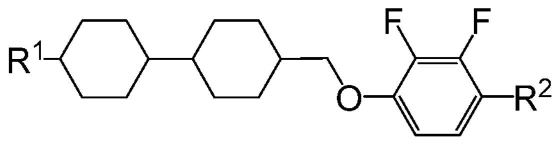

(1-8)

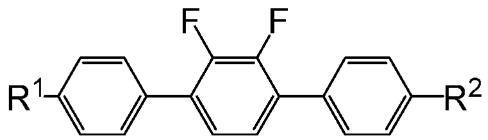

(1-9)

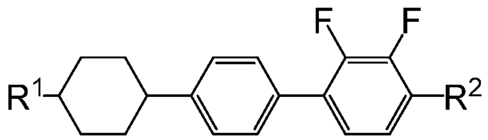

(1-10)

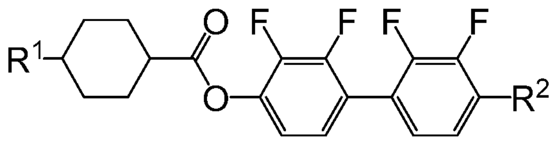

(1-11)

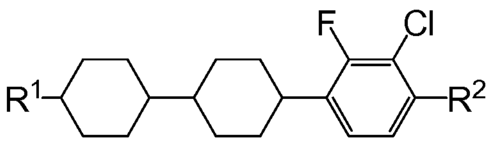

(1-12)

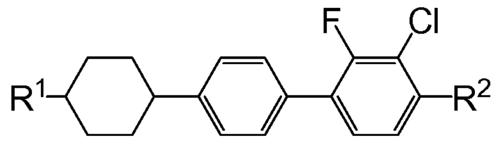

(1-13)

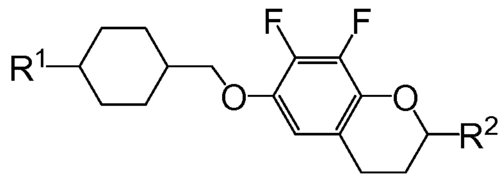

(1-14)

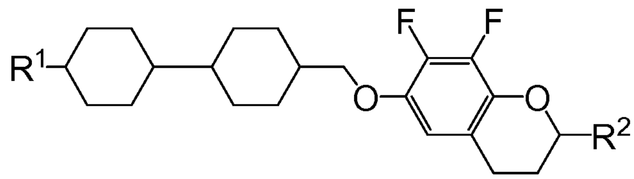

(1-15)

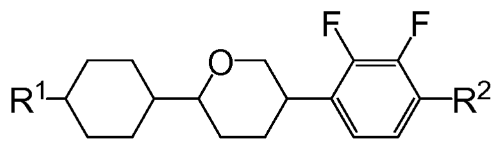

(1-16)

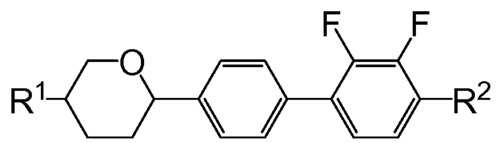

(1-17)

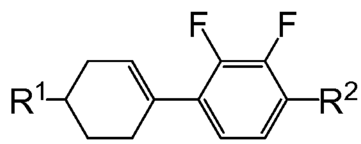

(1-18)

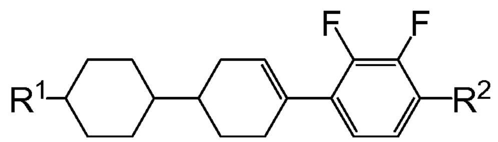

(1-19)

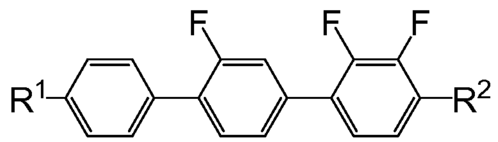

(1-20)

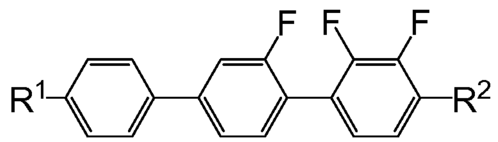

(1-21)

wherein, in formula (1-1) to formula (1-21), $R^1$ is alkenyl having 2 to 12 carbons, or alkenyl having 2 to 12 carbons in which at least one hydrogen is replaced by fluorine or chlorine; and $R^2$ is alkyl having 1 to 12 carbons, alkoxy

having 1 to 12 carbons, alkenyl having 2 to 12 carbons or alkenyloxy having 2 to 12 carbons.

Item 3. The liquid crystal composition according to item 1 or 2, wherein a proportion of the first component is in the range of 5% by weight to 85% by weight based on the weight of the liquid crystal composition.

Item 4. The liquid crystal composition according to any one of items 1 to 3, containing a compound represented by formula (2) as a second component:

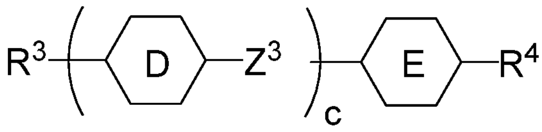

(2)

wherein, in formula (2), $R^3$ and $R^4$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; $Z^3$ is a single bond, $-CH_2CH_2-$, $-CH_2O-$, $-OCH_2-$, -COO- or -OCO-; and c is 1, 2 or 3.

Item 5. The liquid crystal composition according to any one of items 1 to 4, containing a compound selected from the group of compounds represented by formula (2-1) to formula (2-13) as the second component:

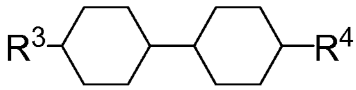

(2-1)

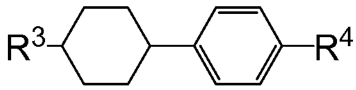

(2-2)

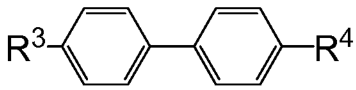

(2-3)

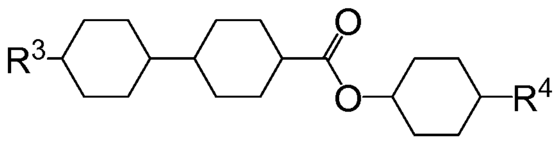

(2-4)

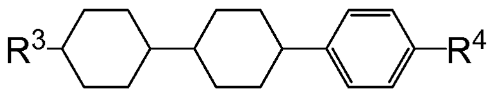

(2-5)

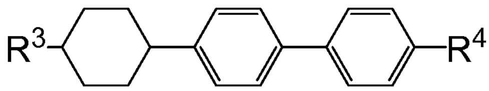

(2-6)

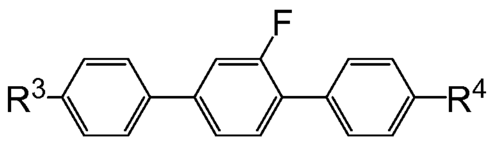

(2-7)

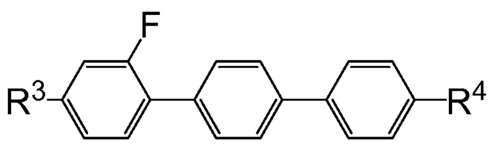

(2-8)

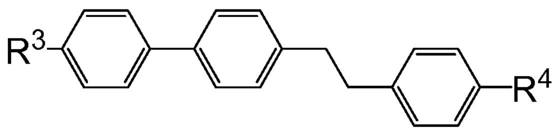

(2-9)

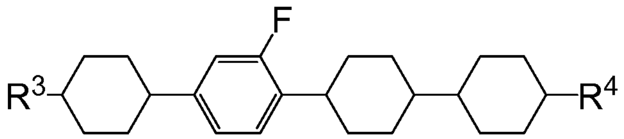

(2-10)

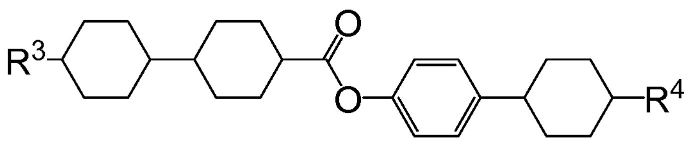

(2-11)

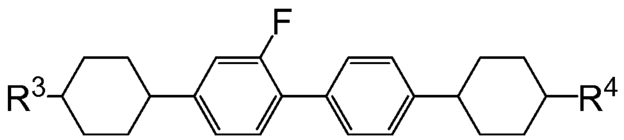

(2-12)

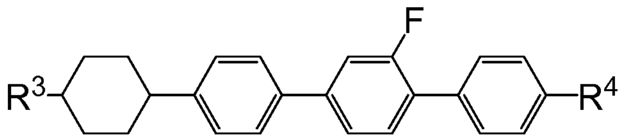

(2-13)

wherein, in formula (2-1) to formula (2-13), $R^3$ and $R^4$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine.

Item 6. The liquid crystal composition according to item 4 or 5, wherein a proportion of the second component is in the range of 5% by weight to 65% by weight based on the weight of the liquid crystal composition.

Item 7. The liquid crystal composition according to any one of items 1 to 6, containing a compound represented by formula (3) as a third component:

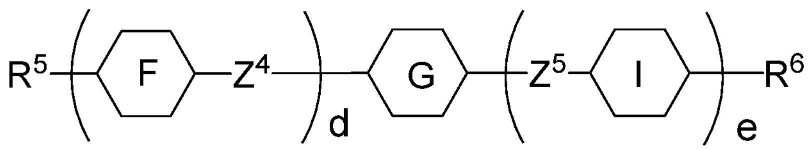

(3)

wherein, in formula (3), $R^5$ and $R^6$ are independently alkyl having 1 to 12 carbons or alkoxy having 1 to 12 carbons; ring F and ring I are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2, 6-diyl in which at least one hydrogen is replaced by fluorine or chlorine; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7, 8-difluorochroman-2, 6-diyl; $Z^4$ and $Z^5$ are independently a single bond, $-CH_2CH_2-$, $-CH_2O-$, $-OCH_2-$, -COO- or -OCO-; d is 1, 2 or 3; e is 0 or 1; and a sum of d and e is 3 or less.

Item 8. The liquid crystal composition according to any one of items 1 to 7, containing a compound selected from the group of compounds represented by formula (3-1) to formula (3-21) as the third component:

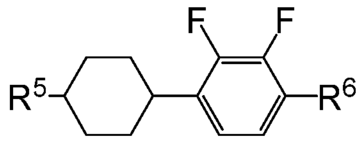

(3-1)

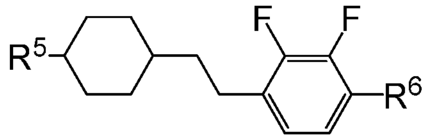

(3-2)

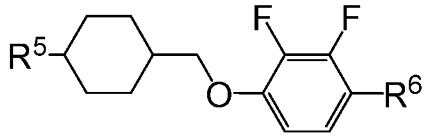

(3-3)

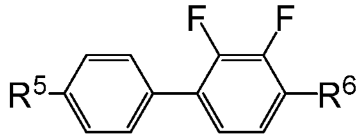

(3-4)

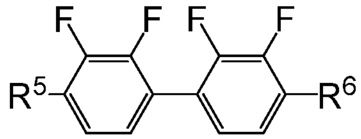

(3-5)

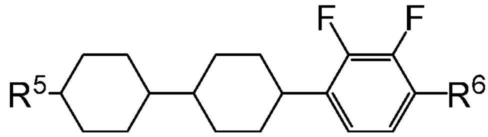

(3-6)

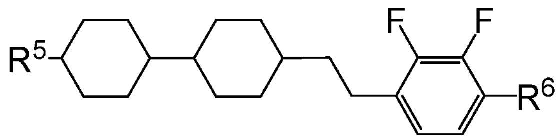

(3-7)

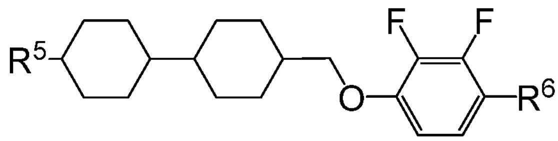

(3-8)

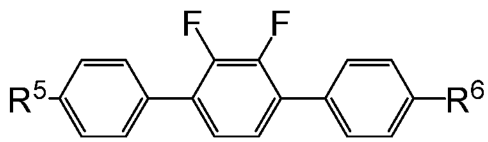

(3-9)

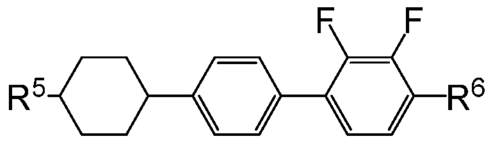 (3-10)

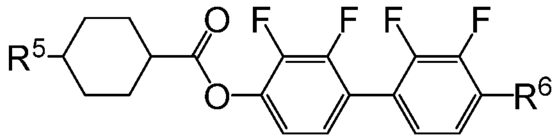 (3-11)

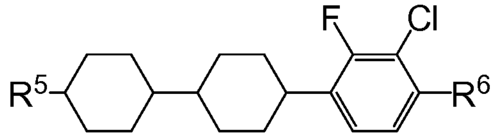 (3-12)

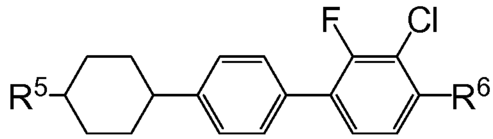 (3-13)

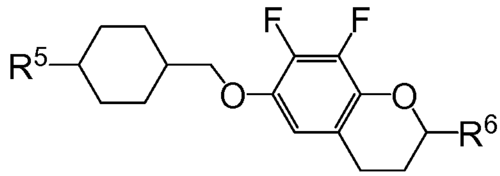 (3-14)

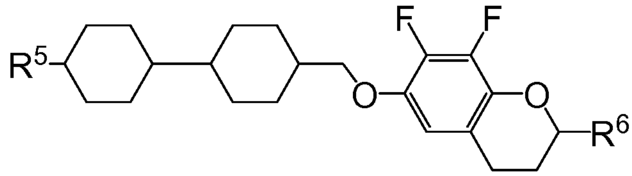 (3-15)

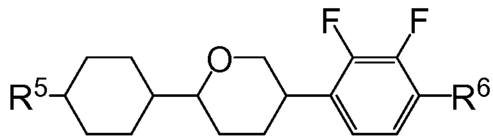 (3-16)

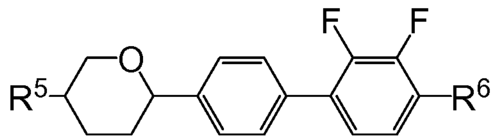 (3-17)

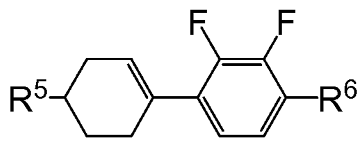 (3-18)

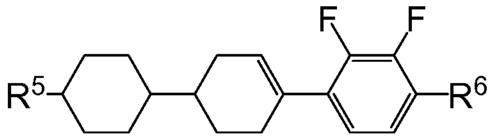

(3-19)

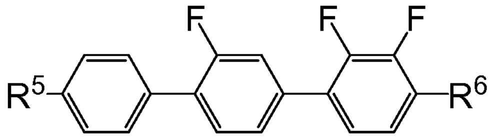

(3-20)

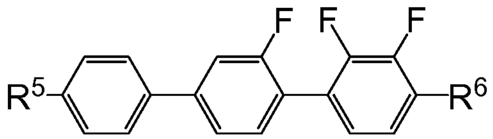

(3-21)

wherein, in formula (3-1) to formula (3-21), $R^5$ and $R^6$ are independently alkyl having 1 to 12 carbons or alkoxy having 1 to 12 carbons.

Item 9. The liquid crystal composition according to item 7 or 8, wherein a proportion of the third component is in the range of 5% by weight to 60% by weight based on the weight of the liquid crystal composition.

Item 10. The liquid crystal composition according to any one of items 1 to 9, wherein, in formula (4) described in item 1, $P^1$, $P^2$ and $P^3$ are independently a polymerizable group selected from the group of groups represented by formula (P-1) to formula (P-5):

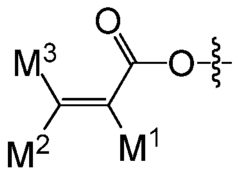

(P-1)

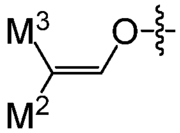

(P-2)

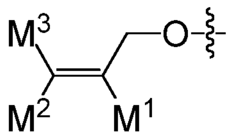

(P-3)

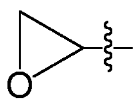

(P-4)

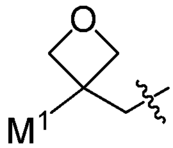

(P-5)

wherein, in formula (P-1) to formula (P-5), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine.

Item 11. The liquid crystal composition according to any one of items 1 to 10, wherein the first additive is a polar compound selected from the group of compounds represented by formula (4-1) to formula (4-15) :

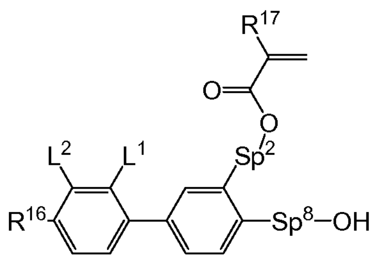

(4-1)

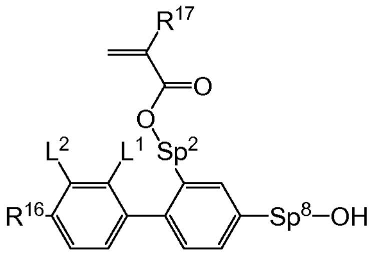

(4-2)

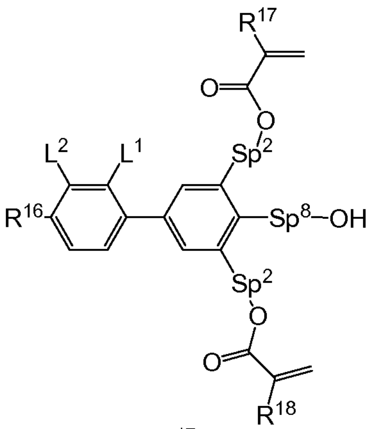

(4-3)

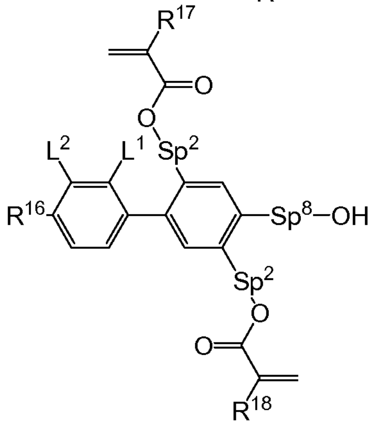

(4-4)

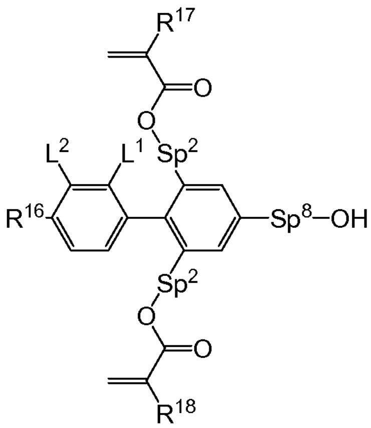

(4-5)

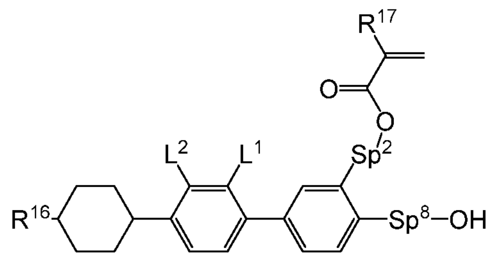

(4-6)

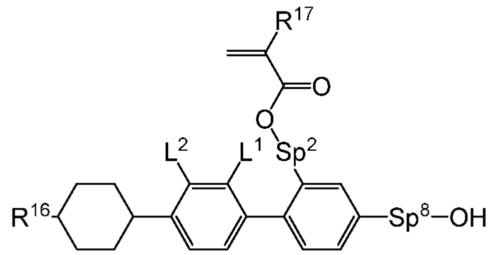

(4-7)

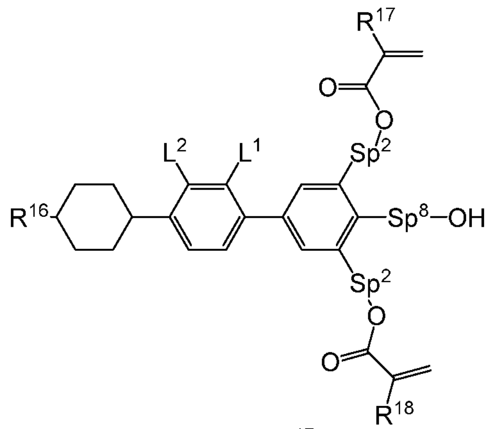

(4-8)

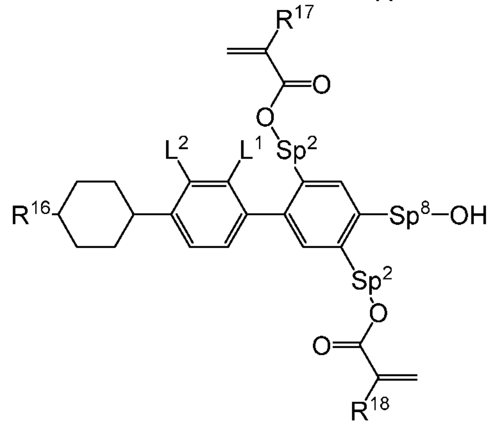

(4-9)

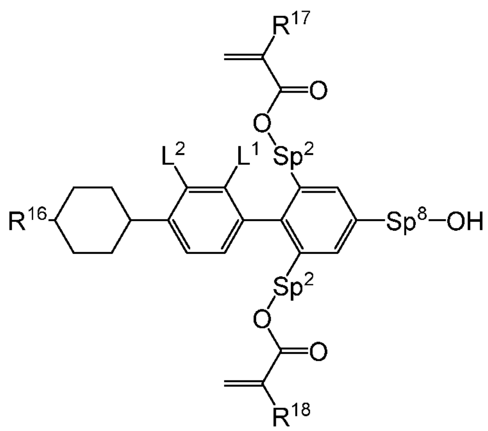

(4-10)

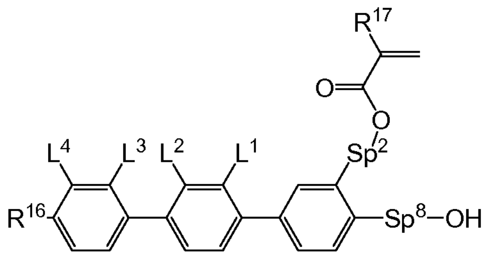

(4-11)

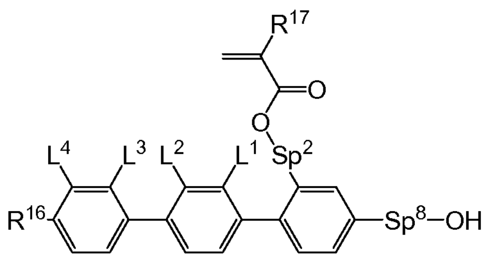

(4-12)

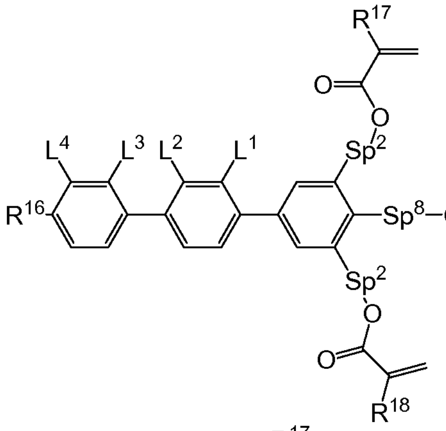

(4-13)

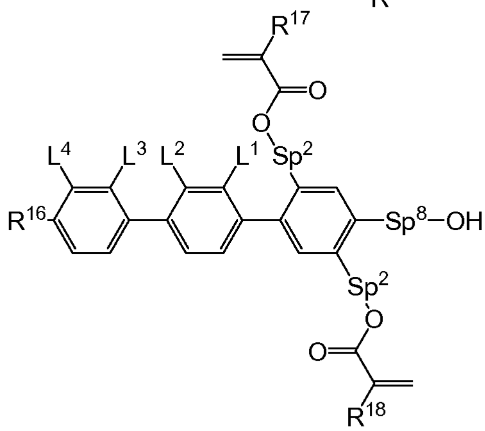

(4-14)

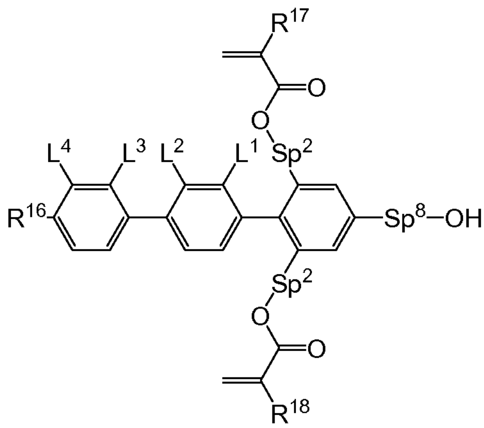

(4-15)

wherein, in formula (4-1) to formula (4-15), $R^{16}$ is hydrogen, fluorine, chlorine or alkyl having 1 to 25 carbons, and in the alkyl, at least one piece of $-CH_2-$ may be replaced by $-NR^0-$, -O-, -S-, -CO-, -CO-O-, -O-CO-, -O-CO-O- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons; $Sp^2$ is a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine, chlorine, $-OCO-CH=CH_2$ or $-OCO-C(CH_3)=CH_2$; $Sp^8$ is a single bond, alkylene having 1 to 5 carbons, or alkylene having 1 to 5 carbons in which one piece of $-CH_2-$ is replaced by -O-; $L^1$, $L^2$, $L^3$ and $L^4$ are independently hydrogen, fluorine, methyl or ethyl; and $R^{17}$ and $R^{18}$ are independently hydrogen or methyl.

Item 12. The liquid crystal composition according to any one of items 1 to 11, wherein a proportion of the first additive is in the range of 0.05% by weight to 10% by weight based on the weight of the liquid crystal composition.

Item 13. The liquid crystal composition according to any one of items 1 to 12, containing a polymerizable compound selected from the group of compounds represented by formula (6) as a second additive:

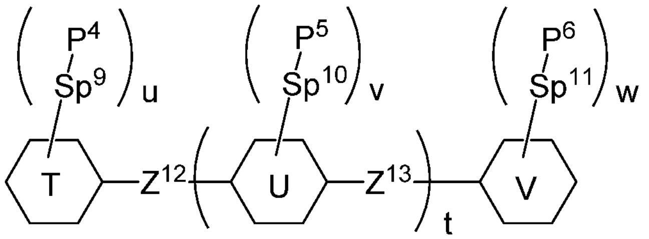

(6)

wherein, in formula (6), ring T and ring V are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; ring U is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; $Z^{12}$ and $Z^{13}$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$ may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine; $P^4$, $P^5$ and $P^6$ are a polymerizable group; $Sp^9$, $Sp^{10}$ and $Sp^{11}$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine or chlorine; t is 0, 1 or 2; and u, v and w are independently 0, 1, 2, 3 or 4, and a sum of u, v and w is 1 or more.

Item 14. The liquid crystal composition according to item 13, wherein, in formula (6) described in item 13, $P^4$, $P^5$ and $P^6$ are independently a polymerizable group selected from the group of groups represented by formula (P-1) to formula (P-5):

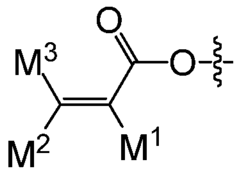

(P-1)

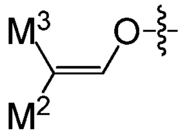

(P-2)

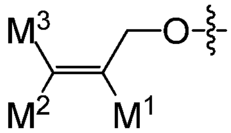

(P-3)

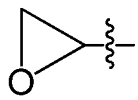

(P-4)

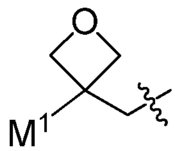

(P-5)

wherein, in formula (P-1) to formula (P-5), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine.

Item 15. The liquid crystal composition according to any one of items 1 to 14, containing a polymerizable compound selected from the group of compounds represented by formula (6-1) to formula (6-28) as the second additive:

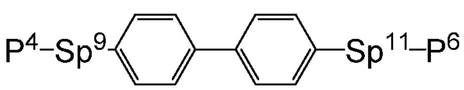

(6-1)

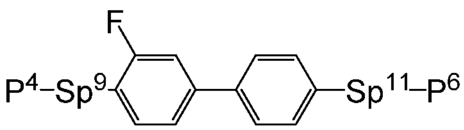

(6-2)

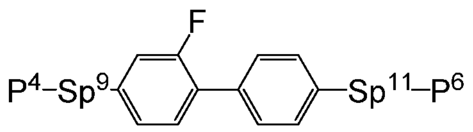

(6-3)

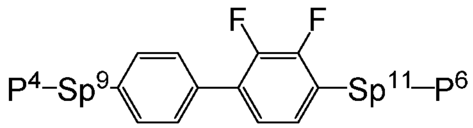

(6-4)

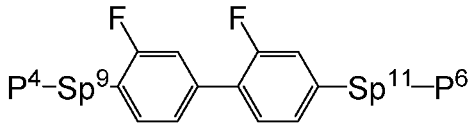

(6-5)

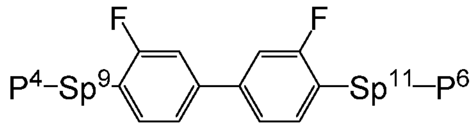

(6-6)

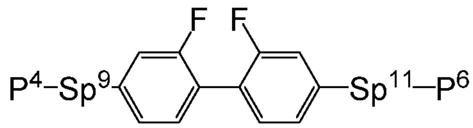

(6-7)

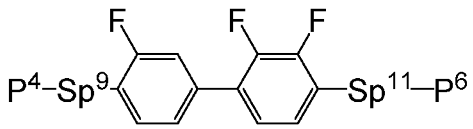

(6-8)

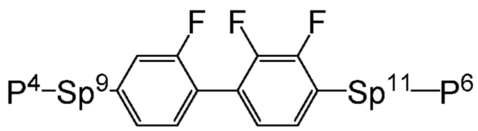

(6-9)

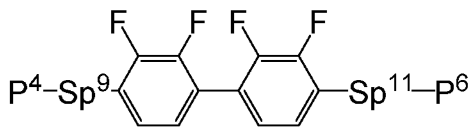

(6-10)

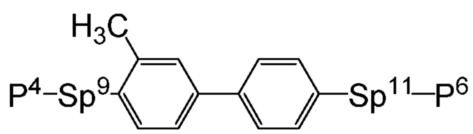

(6-11)

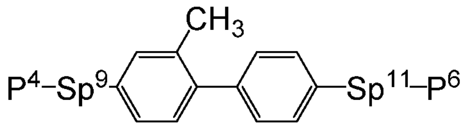

(6-12)

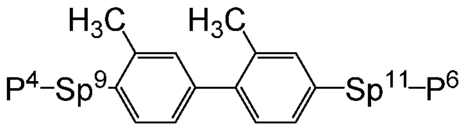

(6-13)

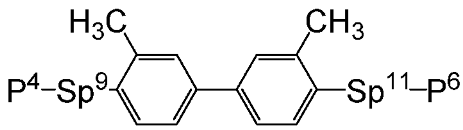

(6-14)

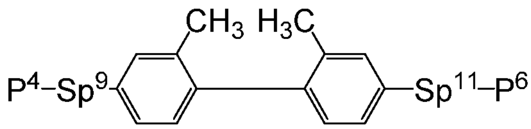

(6-15)

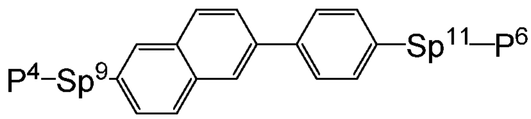

(6-16)

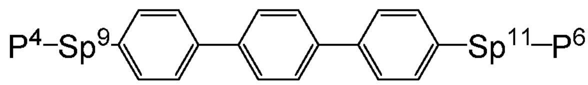

(6-17)

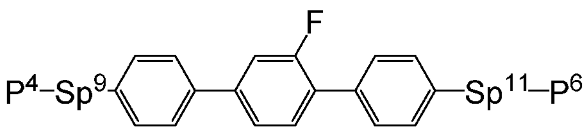

(6-18)

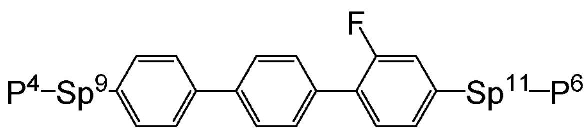

(6-19)

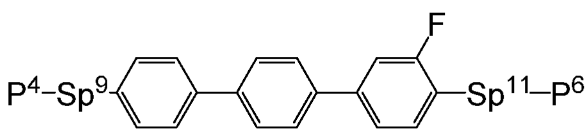

(6-20)

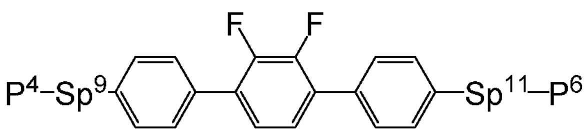

(6-21)

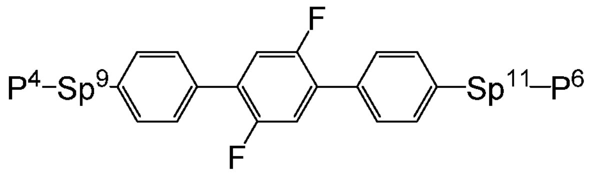

(6-22)

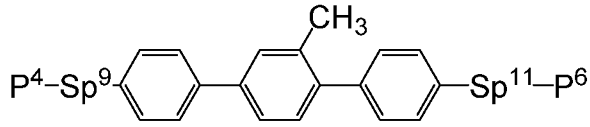

(6-23)

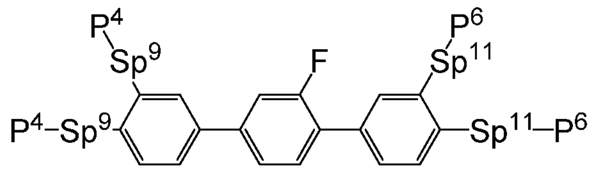

(6-24)

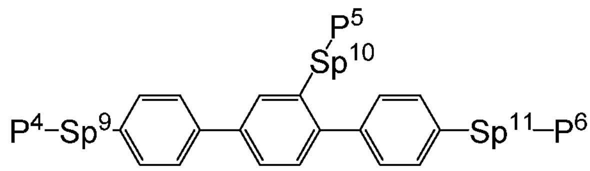

(6-25)

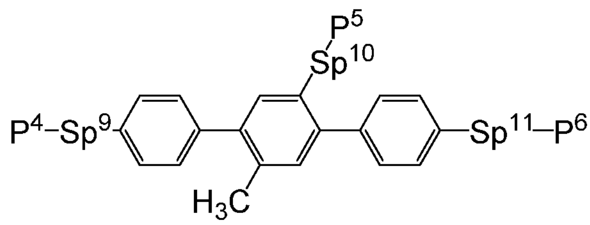

(6-26)

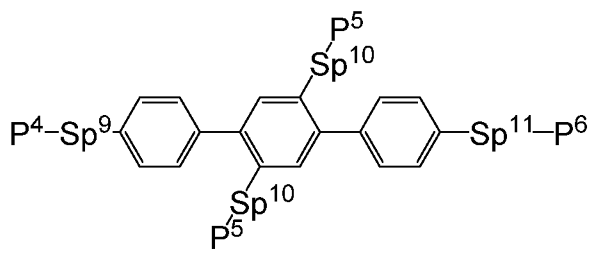

(6-27)

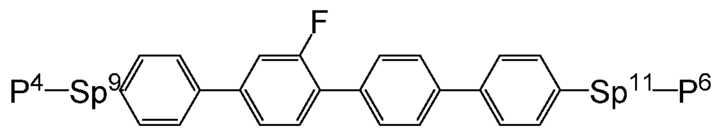

(6-28)

wherein, in formula (6-1) to formula (6-28), $P^4$, $P^5$ and $P^6$ are independently a polymerizable group selected from the group of groups represented by formula (P-1) to formula (P-3), and

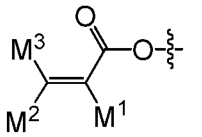
(P-1)

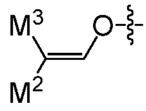
(P-2)

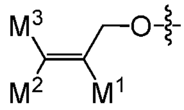
(P-3)

wherein, $M^1$, $M^2$ and $M^3$ are independently hydrogen, fluorine, alkyl having 1 to 5 carbons, or alkyl having 1 to 5 carbons in which at least one hydrogen is replaced by fluorine or chlorine; and $Sp^9$, $Sp^{10}$ and $Sp^{11}$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine or chlorine.

Item 16. The liquid crystal composition according to any one of items 13 to 15, wherein a proportion of the second additive is in the range of 0.03% by weight to 10% by weight based on the weight of the liquid crystal composition.

Item 17. A liquid crystal display device, including the liquid crystal composition according to any one of items 1 to 16.

Item 18. The liquid crystal display device according to item 17, wherein an operating mode in the liquid crystal display device is an IPS mode, a VA mode, an FFS mode or an FPA mode, and a driving mode in the liquid crystal display device is an active matrix mode.

Item 19. A polymer sustained alignment mode liquid crystal display device, wherein the liquid crystal display device includes the liquid crystal composition according to any one of items 1 to 16, the first additive in the liquid crystal composition is polymerized, or the first additive and the second additive are polymerized.

Item 20. A liquid crystal display device having no alignment film, wherein the liquid crystal display device includes the liquid crystal composition according to any one of items 1 to 16, the first additive in the liquid crystal composition is polymerized, or the first additive and the second additive are polymerized.

Item 21. Use of the liquid crystal composition according to any one of items 1 to 16 in a liquid crystal display device.

Item 22. Use of the liquid crystal composition according to any one of items 1 to 16 in a polymer sustained alignment mode liquid crystal display device.

Item 23. Use of the liquid crystal composition according to any one of items 1 to 16 in a liquid crystal display device having no alignment film.

The invention further includes the following items: (a) a method to produce the liquid crystal display device by arranging the liquid crystal composition between two substrates, irradiating the composition with light while voltage is applied thereto, and polymerizing a polar compound having a polymerizable group contained in the composition; and (b) the liquid crystal composition, wherein a maximum temperature of a nematic phase is 70°C or higher, optical anisotropy (measured at 25°C) at a wavelength of 589 nanometers is 0.08 or more, and dielectric anisotropy (measured at 25°C) at a frequency of 1 kHz is -2 or less.

The invention further includes the following items: (c) the composition, containing at least one compound selected from the group of compound (5) to compound (7) described in JP 2006-199941 A, the liquid crystal compound having positive dielectric anisotropy; (d) the composition, containing at least two of the polar compounds described above; (e) the composition, further containing a polar compound different from the polar compounds described above; (f) the composition, containing one, two or at least three of additives such as an optically active compound, an antioxidant, an ultraviolet light absorber, a dye, an antifoaming agent, a polymerizable compound, a polymerization initiator, a polymerization inhibitor and a polar compound. The additive may be identical to or different from the first additive or the second additive; (g) an AM device including the composition; (h) a device including the composition and having a TN mode, an ECB mode, an OCB mode, an IPS mode, an FFS mode, a VA mode or an FPA mode; (i) a transmissive device including the composition; (j) use of the composition as a composition having a nematic phase; and (k) use as an optically active composition by adding the optically active compound to the composition.

The composition of the invention will be described in the following order. First, a constitution of the composition will be described. Second, main characteristics of the component compounds and main effects of the compounds on the composition will be described. Third, a combination of components in the composition, a preferred proportion of the components and the basis thereof will be described. Fourth, a preferred embodiment of the component compounds will be described. Fifth, a preferred component compound will be described. Sixth, an additive that may be added to the composition will be described. Seventh, methods for synthesizing the component compounds will be described. Last, an application of the composition will be described.

First, the constitution of the composition will be described. The composition of the invention is classified into composition A and composition B. Composition A may further contain any other liquid crystal compound, an additive or the like in addition to the liquid crystal compound selected from compound (1), compound (2) and compound (3). An

expression "any other liquid crystal compound" means a liquid crystal compound different from compound (1), compound (2) and compound (3). Such a compound is mixed with the composition for the purpose of further adjusting the characteristics. The additive is the optically active compound, the antioxidant, the ultraviolet light absorber, the dye, the antifoaming agent, the polymerizable compound, the polymerization initiator, the polymerization inhibitor, the polar compound or the like.

Composition B consists essentially of liquid crystal compounds selected from compound (1), compound (2) and compound (3). An expression "essentially" means that the composition may contain the additive, but contains no any other liquid crystal compound. Composition B has a smaller number of components than composition A has. Composition B is preferred to composition A from a viewpoint of cost reduction. Composition A is preferred to composition B from a viewpoint of possibility of further adjusting the characteristics by mixing any other liquid crystal compound.

Second, the main characteristics of the component compounds and the main effects of the compounds on the characteristics of the composition will be described. The main characteristics of the component compounds are summarized in Table 2 on the basis of advantageous effects of the invention. In Table 2, a symbol L stands for "large" or "high," a symbol M stands for "medium," and a symbol S stands for "small" or "low." The symbols L, M and S represent a classification based on a qualitative comparison among the component compounds, and a symbol "0" means that "a value is zero" or "a value is nearly zero."

Table 2. Characteristics of compounds

| Compounds | Compound (1) | Compound (2) | Compound (3) |
|---|---|---|---|
| Maximum temperature | S to L | S to L | S to L |
| Viscosity | M to L | S to M | M to L |
| Optical anisotropy | M to L | S to L | M to L |
| Dielectric anisotropy | M to L[1)] | 0 | M to L[1)] |
| Specific resistance | L | L | L |
| 1) A compound having negative dielectric anisotropy. | | | |

Upon mixing the component compounds with the composition, the main effects of the component compounds on the characteristics of the composition are as described below. Compound (1) increases the dielectric anisotropy. Compound (2) decreases the viscosity. Compound (3) increases the dielectric anisotropy, and decreases the minimum temperature. Compound (4) is adsorbed onto a substrate surface by action of a polar group to control alignment of liquid crystal molecules. Compound (4) is required to have high compatibility with a liquid crystal compound in order to obtain a desired effect. Compound (4) has a six-membered ring such as 1,4-cyclohexylene or 1,4-phenylene, and has rod-like molecular structure, and therefore is optimum for the purpose thereof. Compound (6) is added to the composition for the purpose of further adapting the composition to the polymer sustained alignment mode device. Compound (6) is polymerized to give a polymer. The polymer stabilizes alignment of the liquid crystal molecules, and therefore shortens a response time in the device, and improves image persistence.

Third, the combination of components in the composition, the preferred proportion of the components and the basis thereof will be described. A preferred combination of the components in the composition includes a combination of compound (1) and compound (2), or a combination of compound (1), compound (2) and compound (3). A further preferred combination includes the combination of compound (1), compound (2) and compound (3). The vertical alignment of liquid crystal molecules is achieved by combining such a composition with the first additive (or a polymer thereof). A similar effect is achieved even if "any other liquid crystal compound" is added to such a composition, if an amount is small.

A preferred proportion of compound (1) is about 5% by weight or more for increasing the dielectric anisotropy, and about 85% by weight or less for decreasing the viscosity. A further preferred proportion is in the range of about 10% by weight to about 80% by weight. A particularly preferred proportion is in the range of about 15% by weight to about 75% by weight.

A preferred proportion of compound (2) is about 5% by weight or more for increasing the maximum temperature or decreasing the viscosity, and about 65% by weight or less for increasing the dielectric anisotropy. A further preferred proportion is in the range of about 10% by weight to about 60% by weight. A particularly preferred proportion is in the range of about 15% by weight to about 55% by weight.

A preferred proportion of compound (3) is about 5% by weight or more for increasing the dielectric anisotropy, and about 60% by weight or less for decreasing the minimum temperature. A further preferred proportion is in the range of about 5% by weight to about 50% by weight. A particularly preferred proportion is in the range of about 5% by weight to about 45% by weight.

A preferred proportion of compound (4) is about 0.05% by weight or more for aligning the liquid crystal molecules, and about 10% by weight or less for preventing poor display in the device. A further preferred proportion is in the range of about 0.1% by weight to about 7% by weight. A particularly preferred proportion is in the range of about 0.5% by weight to about 5% by weight.

Compound (6) is added to the composition for the purpose of adapting the composition to the polymer sustained alignment mode device. A preferred proportion of compound (6) is about 0.03% by weight or more for increasing long-term reliability of the device, and about 10% by weight or less for preventing poor display in the device. A further preferred proportion is in the range of about 0.1% by weight to about 2% by weight. A particularly preferred proportion is in the range of about 0.2% by weight to about 1.0% by weight.

Fourth, the preferred embodiment of the component compounds will be described. In formula (1), formula (2) and formula (3), $R^1$ is alkenyl having 2 to 12 carbons, or alkenyl having 2 to 12 carbons in which at least one hydrogen is replaced by fluorine or chlorine. $R^2$ is alkyl having 1 to 12 carbons, alkoxy having 1 to 12 carbons, alkenyl having 2 to 12 carbons or alkenyloxy having 2 to 12 carbons. Preferred $R^2$ is alkyl having 1 to 12 carbons for increasing stability to ultraviolet light or heat, and alkoxy having 1 to 12 carbons for increasing the dielectric anisotropy.

$R^3$ and $R^4$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine. A preferred $R^3$ or $R^4$ is alkyl having 1 to 12 carbons for increasing stability to ultraviolet light or heat, and alkenyl having 2 to 12 carbons for decreasing the minimum temperature or decreasing the viscosity. $R^5$ and $R^6$ are independently alkyl having 1 to 12 carbons or alkoxy having 1 to 12 carbons. Preferred $R^5$ or $R^6$ is alkyl having 1 to 12 carbons for increasing stability to ultraviolet light or heat, and alkoxy having 1 to 12 carbons for increasing the dielectric anisotropy. Alkyl of the liquid crystal compound is straight-chain alkyl or branched-chain alkyl, but includes no cyclic alkyl. Straight-chain alkyl is preferred to branched-chain alkyl. A same rule applies also to a terminal group such as alkoxy and alkenyl.

Preferred alkyl is methyl, ethyl, propyl, butyl, pentyl, hexyl, heptyl or octyl. Further preferred alkyl is ethyl, propyl, butyl, pentyl or heptyl for decreasing the viscosity.

Preferred alkoxy is methoxy, ethoxy, propoxy, butoxy, pentyloxy, hexyloxy or heptyloxy. Further preferred alkoxy is methoxy or ethoxy for decreasing the viscosity.

Preferred alkenyl is vinyl, 1-propenyl, 2-propenyl, 1-butenyl, 2-butenyl, 3-butenyl, 1-pentenyl, 2-pentenyl, 3-pentenyl, 4-pentenyl, 1-hexenyl, 2-hexenyl, 3-hexenyl, 4-hexenyl or 5-hexenyl. Further preferred alkenyl is vinyl, 1-propenyl, 3-butenyl or 3-pentenyl for decreasing the viscosity. A preferred configuration of -CH=CH- in the alkenyl depends on a position of a double bond. Trans is preferred in alkenyl such as 1-propenyl, 1-butenyl, 1-pentenyl, 1-hexenyl, 3-pentenyl and 3-hexenyl for decreasing the viscosity, for instance. Cis is preferred in alkenyl such as 2-butenyl, 2-pentenyl and 2-hexenyl.

Preferred alkenyloxy is vinyloxy, allyloxy, 3-butenyloxy, 3-pentenyloxy or 4-pentenyloxy. Further preferred alkenyloxy is allyloxy or 3-butenyloxy for decreasing the viscosity.

Preferred examples of alkyl in which at least one hydrogen is replaced by fluorine or chlorine include fluoromethyl, 2-fluoroethyl, 3-fluoropropyl, 4-fluorobutyl, 5-fluoropentyl, 6-fluorohexyl, 7-fluoroheptyl or 8-fluorooctyl. Further preferred examples include 2-fluoroethyl, 3-fluoropropyl, 4-fluorobutyl or 5-fluoropentyl for increasing the dielectric anisotropy.

Preferred examples of alkenyl in which at least one hydrogen is replaced by fluorine or chlorine include 2,2-difluorovinyl, 3,3-difluoro-2-propenyl, 4,4-difluoro-3-butenyl, 5,5-difluoro-4-pentenyl or 6,6-difluoro-5-hexenyl. Further preferred examples include 2,2-difluorovinyl or 4,4-difluoro-3-butenyl for decreasing the viscosity.

Ring A and ring C are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine. Preferred ring A or ring C is 1,4-cyclohexylene, 1,4-cyclohexenylene, tetrahydropyran-2,5-diyl, 1,4-phenylene, 2-fluoro-1,4-phenylene, 2,3-difluoro-1,4-phenylene, 3,4,5-trifluoronaphthalene-2,6-diyl or 7,8-difluorochroman-2,6-diyl. Further preferred ring A or ring C is 1,4-cyclohexylene or 1,4-phenylene. In the rings, preferred ring A or ring C is 1,4-cyclohexylene for decreasing the viscosity, tetrahydropyran-2,5-diyl for increasing the dielectric anisotropy, and 1,4-phenylene for increasing the optical anisotropy. With regard to a configuration of 1,4-cyclohexylene, trans is preferred to cis for increasing the maximum temperature. Tetrahydropyran-2,5-diyl includes:

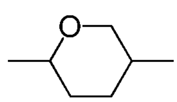

or

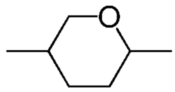

and preferably

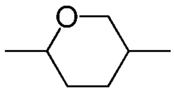

Ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring B is 2,3-difluoro-1,4-phenylene, 2-chloro-3-fluoro-1,4-phenylene or 7,8-difluorochroman-2,6-diyl. Further preferred ring B is 2,3-difluoro-1,4-phenylene or 2-chloro-3-fluoro-1,4-phenylene. Particularly preferred ring B is 2,3-difluoro-1,4-phenylene. In the rings, preferred ring B is 2,3-difluoro-1,4-phenylene for decreasing the viscosity, 2-chloro-3-fluoro-1,4-phenylene for decreasing the optical anisotropy, and 7,8-difluorochroman-2,6-diyl for increasing the dielectric anisotropy.

Ring D and ring E are independently 1,4-cyclohexylene, 1,4-phenylene, 2-fluoro-1,4-phenylene or 2,5-difluoro-1,4-phenylene. Preferred ring D or ring E is 1,4-cyclohexylene for decreasing the viscosity or increasing the maximum temperature, and 1,4-phenylene for decreasing the minimum temperature. With regard to the configuration of 1,4-cyclohexylene, trans is preferred to cis for increasing the maximum temperature.

Ring F and ring I are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine. Preferred ring F or ring I is 1,4-cyclohexylene, 1,4-cyclohexenylene, tetrahydropyran-2,5-diyl, 1,4-phenylene, 2-fluoro-1,4-phenylene, 2,3-difluoro-1,4-phenylene, 3,4,5-trifluoronaphthalene-2,6-diyl or 7,8-difluorochroman-2,6-diyl. Further preferred ring F or ring I is 1,4-cyclohexylene, tetrahydropyran-2,5-diyl, 1,4-phenylene, 2-fluoro-1,4-phenylene, 2,3-difluoro-1,4-phenylene or 7,8-difluorochroman-2,6-diyl. Particularly preferred ring F or ring I is 1,4-cyclohexylene or 1,4-phenylene. In the rings, preferred ring F or ring I is 1,4-cyclohexylene for decreasing the viscosity, tetrahydropyran-2,5-diyl for increasing the dielectric anisotropy, and 1,4-phenylene for increasing the optical anisotropy.

Ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl. Preferred ring G is 2,3-difluoro-1,4-phenylene, 2-chloro-3-fluoro-1,4-phenylene or 7,8-difluorochroman-2,6-diyl. Further preferred ring G is 2,3-difluoro-1,4-phenylene. In the rings, preferred ring G is 2,3-difluoro-1,4-phenylene for decreasing the viscosity, 2-chloro-3-fluoro-1,4-phenylene for decreasing the optical anisotropy, and 7,8-difluorochroman-2,6-diyl for increasing the dielectric anisotropy.

$Z^1$ and $Z^2$ are independently a single bond, $-CH_2CH_2-$, $-CH_2O-$, $-OCH_2-$, -COO- or -OCO-. Preferred $Z^1$ or $Z^2$ is a single bond for decreasing the viscosity, $-CH_2CH_2-$ for decreasing the minimum temperature, and $-CH_2O-$ or $-OCH_2-$ for increasing the dielectric anisotropy. $Z^3$ is a single bond, $-CH_2CH_2-$, $-CH_2O-$, $-OCH_2-$, -COO- or -OCO-. Preferred $Z^3$ is a single bond for decreasing the viscosity, $-CH_2CH_2-$ for decreasing the minimum temperature, and -COO- or -OCO- for increasing the maximum temperature. $Z^4$ and $Z^5$ are independently a single bond, $-CH_2CH_2-$, $-CH_2O-$, $-OCH_2-$, -COO- or -OCO-. Preferred $Z^4$ or $Z^5$ is a single bond for decreasing the viscosity, $-CH_2CH_2-$ for decreasing the minimum temperature, and $-CH_2O-$ or $-OCH_2-$ for increasing the dielectric anisotropy.

Then, a is 1, 2 or 3, b is 0 or 1, and a sum of a and b is 3 or less. Preferred a is 1 for decreasing the viscosity, and 2 or 3 for increasing the maximum temperature. Preferred b is 0 for decreasing the viscosity, and 1 for decreasing the minimum temperature. Then, c is 1, 2 or 3. Preferred c is 1 for decreasing the viscosity, and 2 or 3 for increasing the maximum temperature. Then, d is 1, 2 or 3; e is 0 or 1; and a sum of d and e is 3 or less. Preferred d is 1 for decreasing the viscosity, and 2 or 3 for increasing the maximum temperature. Preferred e is 0 for decreasing the viscosity, and 1 for decreasing the minimum temperature.

In formula (4), $R^{11}$ is hydrogen, fluorine, chlorine or alkyl having 1 to 25 carbons, and in the alkyl, at least one piece of $-CH_2-$ may be replaced by $-NR^0-$, -O-, -S-, -CO-, -CO-O-, -O-CO-, -O-CO-O- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons. Preferred $R^{11}$ is alkyl having 1 to 25 carbons.

$R^{12}$ is a polar group having at least one of an oxygen atom having an OH structure, a sulfur atom having an SH structure and a nitrogen atom having a primary, secondary or tertiary amine structure.

Ring L, ring M and ring N are independently 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine. Preferred ring L, ring M or ring N is 1,4-phenylene or 2-fluoro-1,4-phenylene.

$Z^7$ and $Z^8$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine. Preferred $Z^7$ or $Z^8$ is a single bond, $-CH_2CH_2-$, $-CH_2O-$, $-OCH_2-$, -COO- or -OCO-. Further preferred $Z^7$ or $Z^8$ is a single bond.

$P^1$, $P^2$ and $P^3$ are independently a polymerizable group. Preferred $P^1$, $P^2$ or $P^3$ is a polymerizable group selected from the group of groups represented by formula (P-1) to formula (P-5). Further preferred $P^1$, $P^2$ or $P^3$ is a group represented by formula (P-1), formula (P-2) or formula (P-3) . Particularly preferred $P^1$, $P^2$ or $P^3$ is a group represented by formula (P-1) or formula (P-2) . Most preferred $P^1$, $P^2$ or $P^3$ is a group represented by formula (P-1). A preferred group represented by formula (P-1) is $-OCO-CH=CH_2$ or $-OCO-C(CH_3)=CH_2$. A wavy line in formula (P-1) to formula (P-5) represents a site to form a bonding.

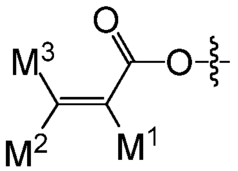
(P-1)

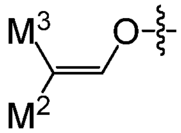
(P-2)

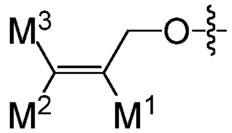
(P-3)

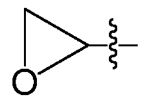
(P-4)

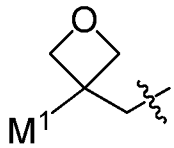
(P-5)

In formula (P-1) to formula (P-5), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine. Preferred $M^1$, $M^2$ or $M^3$ is hydrogen or methyl for increasing reactivity. Further preferred $M^1$ is hydrogen or methyl, and further preferred $M^2$ or $M^3$ is hydrogen.

$Sp^1$, $Sp^2$ and $Sp^3$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine, chlorine, $-OCO-CH=CH_2$ or $-OCO-C(CH_3)=CH_2$. Preferred $Sp^1$, $Sp^2$ or $Sp^3$ is a single bond, $-CH_2CH_2-$, $-CH_2O-$, $-OCH_2-$, -COO-, -OCO-, -CO-CH=CH- or -CH=CH-CO-. Further preferred $Sp^1$, $Sp^2$ or $Sp^3$ is a single bond. However, when ring A and ring C are phenyl, $Sp^1$ and $Sp^3$ are a single bond.

Then, g and h are independently 0, 1, 2, 3 or 4, and a sum of g and h is 0, 1, 2, 3 or 4. Preferred g or h is 0, 1 or 2. Then, k is 1, 2, 3 or 4. Preferred k is 1 or 2. Then, j and o are independently 0, 1, 2, 3 or 4. Preferred j or o is 1 or 2.

In formula (4-1) to formula (4-15), $R^{16}$ is hydrogen, fluorine, chlorine or alkyl having 1 to 25 carbons, and in the alkyl, at least one piece of $-CH_2-$ may be replaced by $-NR^0-$, -O-, -S-, -CO-, -CO-O-, -O-CO-, -O-CO-O- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons.

$Sp^8$ is a single bond, alkylene having 1 to 5 carbons, or alkylene having 1 to 5 carbons in which one piece of $-CH_2-$ is replaced by -O-. $L^1$, $L^2$, $L^3$ and $L^4$ are independently hydrogen, fluorine, methyl or ethyl. $R^{17}$ and $R^{18}$ are independently hydrogen or methyl.

An aromatic group refers to aryl or substituted aryl. Heteroaryl represents an aromatic group having at least one hetero atom. Aryl and heteroaryl may be either monocyclic or polycyclic. More specifically, the above groups have at least one ring, the ring may be fused (for example, naphthyl), two rings may be linked by a covalent bond (for example, biphenyl), or may have a combination of a fused ring and a linked ring. Preferred heteroaryl has at least one hetero atom selected from the group of nitrogen, oxygen, sulfur and phosphorus.

Preferred aryl or heteroaryl may have 6 to 25 carbons, and may be a five-membered ring, a six-membered ring or a seven-membered ring. Preferred aryl or heteroaryl may be monocyclic, bicyclic or tricyclic. The above groups may be the fused ring, or may be substituted.

Preferred aryl is a monovalent group derived therefrom by eliminating one hydrogen from benzene, biphenyl, terphenyl, [1,1':3',1"]terphenyl, naphthalene, anthracene, binaphtyl, phenanthrene, pyrene, dihydropyrene, chrysene, perylene, tetracene, pentacene, benzopyrene, fluorene, indene, indenofluorene and spirobifluorene.

Preferred heteroaryl is a monovalent group derived therefrom by eliminating one hydrogen from a five-membered

ring compound such as pyrrole, pyrazole, imidazole, 1,2,3-triazole, 1,2,4-triazole, tetrazole, furan, thiophene, selenophene, oxazole, isoxazole, 1,2-thiazole, 1,3-thiazole, 1,2,3-oxadiazole, 1,2,4-oxadiazole, 1,2,5-oxadiazole, 1,3,4-oxadiazole, 1,2,3-thiadiazole, 1,2,4-thiadiazole, 1,2,5-thiadiazole and 1,3,4-thiadiazole, or from a six-membered ring compound such as pyridine, pyridazine, pyrimidine, pyrazine, 1,3,5-triazine, 1,2,4-triazine, 1,2,3-triazine, 1,2,4,5-tetrazine, 1,2,3,4-tetrazine and 1,2,3,5-tetrazine.

Preferred heteroaryl is also a monovalent group derived therefrom by eliminating one hydrogen from a fused ring compound such as indole, isoindole, indolizine, indazole, benzoimidazole, benzotriazol, purine, naphthimidazole, phenanthreneimidazole, pyridaimidazole, pyrazineimidazole, quinoxalineimidazole, benzoxazole, naphthaxazole, antroxazole, phenanthroxazole, isoxazole, benzothiazole, benzofuran, isobenzofuran, dibenzofuran, quinoline, isoquinoline, pteridine, benzo-5,6-quinoline, benzo-6,7-quinoline, benzo-7,8-quinoline, benzoisoquinoline, acridine, phenothiazine, phenoxazine, benzopyridazine, benzopyrimidine, quinoxaline, phenazine, naphthyridine, azacarbazole, benzocarboline, phenanthridine, phenanthroline, thieno[2,3b]thiophene, thieno[3,2b]thiophene, dithienothiophene, isobenzothiophene, dibenzothiophene and benzothiadiazothiophene. Preferred heteroaryl is also a monovalent group derived therefrom by eliminating one hydrogen from a ring obtained by combining two groups selected from the five-membered ring, the six-membered ring and the fused ring. The heteroaryl may be replaced by alkyl, alkoxy, thioalkyl, fluorine, fluoroalkyl, aryl or heteroaryl.

An alicyclic group may be saturated or unsaturated. More specifically, the above groups may have only a single bond or may have a combination of a single bond and a multiple bond. A saturated ring is preferred to an unsaturated ring.

An alicyclic group may have one ring, or a plurality of rings. Preferred examples of the groups include a monocyclic ring, a bicyclic ring or a tricyclic ring each having 3 to 25 carbons, and the groups may be the fused ring or may be substituted. Preferred examples of the groups include a five-membered ring, a six-membered ring, a seven-membered ring or an eight-membered ring, and in the groups, at least one carbon may be replaced by silicon, at least one piece of >CH-may be replaced by >N-, and at least one piece of $-CH_2-$ may be replaced by -O- or -S-.

A preferred alicyclic group is a divalent group derived therefrom by eliminating two hydrogens from a five-membered ring such as cyclopentane, tetrahydrofuran, tetrahydrothiofuran and pyrrolidine; a six-membered ring such as cyclohexane, cyclohexene, tetrahydropyran, tetrahydrothiopyran, 1,3-dioxane, 1,3-dithian and piperidine; a seven-membered ring such as cycloheptane; and a fused ring such as tetrahydronaphthalene, decahydronaphthalene, indan, bicyclo[1.1.1]pentane, bicyclo[2.2.2]octane, spiro[3.3]heptane and octahydro-4,7-methanoindan.

In formula (6), $P^4$, $P^5$ and $P^6$ are independently a polymerizable group. Preferred $P^4$, $P^5$ or $P^6$ is a polymerizable group selected from the group of groups represented by formula (P-1) to formula (P-5). Further preferred $P^4$, $P^5$ or $P^6$ is a group represented by formula (P-1), formula (P-2) or formula (P-3) . Particularly preferred $P^4$, $P^5$ or $P^6$ is a group represented by formula (P-1) or formula (P-2) . Most preferred $P^4$, $P^5$ or $P^6$ is a group represented by formula (P-1). A preferred group represented by formula (P-1) is $-OCO-CH=CH_2$ or $-OCO-C(CH_3)=CH_2$. A wavy line in formula (P-1) to formula (P-5) represents a site to form a bonding.

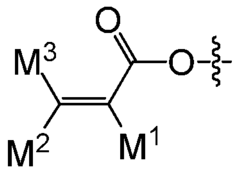
(P-1)

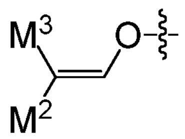
(P-2)

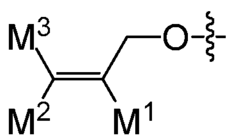
(P-3)

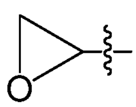
(P-4)

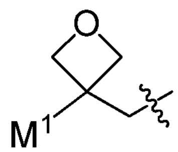
(P-5)

In formula (P-1) to formula (P-5), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine. Preferred $M^1$, $M^2$ or $M^3$ is hydrogen or methyl for increasing reactivity. Further preferred $M^1$ is hydrogen or methyl, and further preferred $M^2$ or $M^3$ is hydrogen.

$Sp^9$, $Sp^{10}$ and $Sp^{11}$ are independently a single bond or alkylene having 1 to 10 carbons, and in the alkylene, at least one piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine or chlorine. Preferred $Sp^9$, $Sp^{10}$ or $Sp^{11}$ is a single bond, $-CH_2CH_2-$, $-CH_2O-$, $-OCH_2-$, -COO-, -OCO-, -CO-CH=CH- or -CH=CH-CO-. Further preferred $Sp^9$, $Sp^{10}$ or $Sp^{11}$ is a single bond.

Ring T and ring V are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine. Preferred ring T or ring V is phenyl. Ring U is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine. Preferred ring U is 1,4-phenylene or 2-fluoro-1,4-phenylene.

$Z^{12}$ and $Z^{13}$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$ may be replaced by -CH=CH-, $-C(CH_3)=CH-$, $-CH=C(CH_3)-$ or $-C(CH_3)=C(CH_3)-$, and in the groups, at least one hydrogen may be replaced by fluorine or chlorine. Preferred $Z^{12}$ or $Z^{13}$ is a single bond, $-CH_2CH_2-$, $-CH_2O-$, $-OCH_2-$, -COO- or -OCO-. Further preferred $Z^{12}$ or $Z^{13}$ is a single bond.

Then, t is 0, 1 or 2. Preferred t is 0 or 1. Then, u, v and w are independently 0, 1, 2, 3 or 4, and a sum of u, v and w is 1 or more. Preferred u, v or w is 1 or 2.

Fifth, the preferred component compound will be described. Preferred compound (1) includes compound (1-1) to compound (1-21) described in item 2. In the compounds, at least one of the first components preferably includes compound (1-1), compound (1-3), compound (1-4), compound (1-6), compound (1-8) or compound (1-10) . At least two of the first components preferably includes a combination of compound (1-1) and compound (1-6), a combination of compound (1-1) and compound (1-10), a combination of compound (1-3) and compound (1-6), a combination of compound (1-3) and compound (1-10), a combination of compound (1-4) and compound (1-6), or a combination of compound (1-4) and compound (1-8).

Preferred compound (2) includes compound (2-1) to compound (2-13) described in item 5. In the compounds, at least one of the second components preferably includes compound (2-1), compound (2-3), compound (2-5), compound (2-6), compound (2-8) or compound (2-9). At least two of the second components preferably includes a combination of compound (2-1) and compound (2-3), a combination of compound (2-1) and compound (2-5), or a combination of compound (2-1) and compound (2-6) .

Preferred compound (3) includes compound (3-1) to compound (3-21) described in item 8. In the compounds, at least one of the third components preferably includes compound (3-1), compound (3-3), compound (3-4), compound (3-6), compound (3-8) or compound (3-10). At least two of the third components preferably includes a combination of compound (3-1) and compound (3-6), a combination of compound (3-1) and compound (3-10), a combination of compound (3-3) and compound (3-6), a combination of compound (3-3) and compound (3-10), a combination of compound (3-4) and compound (3-6), or a combination of compound (3-4) and compound (3-8).

Preferred compound (4) includes compound (4-1) to compound (4-15) described in item 12. In the compounds, at least one of the first additives preferably includes compound (4-6), compound (4-8), compound (4-10), compound (4-11), compound (4-13) or compound (4-15). At least two of the first additives preferably includes a combination of compound (4-1) and compound (4-11), or a combination of compound (4-3) and compound (4-8).

Preferred compound (6) includes compound (6-1) to compound (6-28) described in item 16. In the compounds, at least one of the second additives preferably includes compound (6-1), compound (6-2), compound (6-24), compound (6-25), compound (6-26) or compound (6-27). At least two of the second additives preferably includes a combination of compound (6-1) and compound (6-2), a combination of compound (6-1) and compound (6-18), a combination of compound (6-2) and compound (6-24), a combination of compound (6-2) and compound (6-25), a combination of compound (6-2) and compound (6-26), a combination of compound (6-25) and compound (6-26), or a combination of compound (6-18) and compound (6-24).

Sixth, the additive that may be added to the composition will be described. Such an additive includes the optically active compound, the antioxidant, the ultraviolet light absorber, the dye, the antifoaming agent, the polymerizable compound, the polymerization initiator, the polymerization inhibitor and the polar compound. The optically active compound is added to the composition for the purpose of inducing a helical structure in liquid crystal molecules to give a twist angle. Examples of such a compound include compound (7-1) to compound (7-5). A preferred proportion of the optically active compound is about 5% by weight or less. A further preferred proportion is in the range of about 0.01% by weight to about 2% by weight.

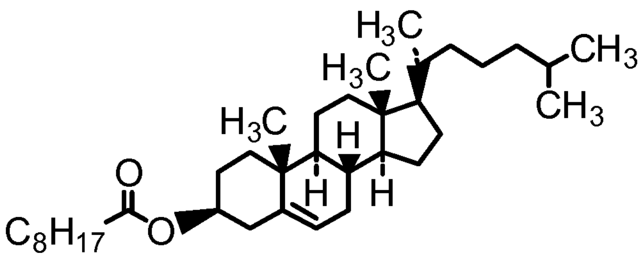

(7-1)

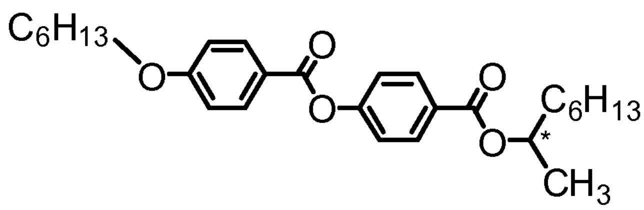

(7-2)

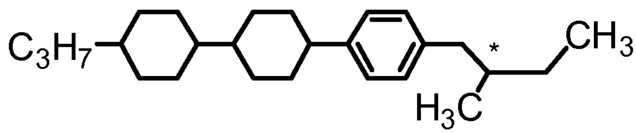

(7-3)

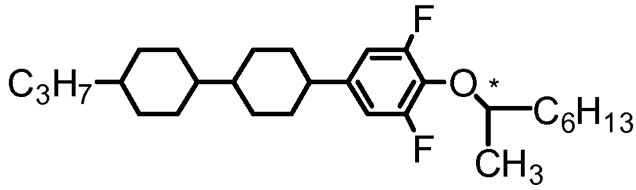

(7-4)

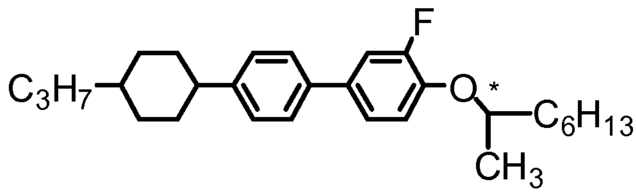

(7-5)

The antioxidant is added to the composition for preventing a decrease in the specific resistance caused by heating in air, or for maintaining a large voltage holding ratio at room temperature and also at a temperature close to the maximum temperature even after the device has been used for a long period of time. Preferred examples of the antioxidant include compound (8) in which n is an integer from 1 to 9.

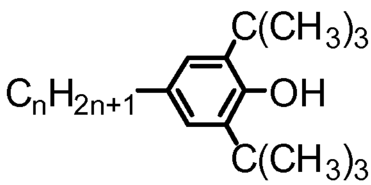

(8)

In compound (8), preferred n is 1, 3, 5, 7 or 9. Further preferred n is 7. Compound (8) in which n is 7 is effective in maintaining a large voltage holding ratio at room temperature and also at a temperature close to the maximum temperature even after the device has been used for a long period of time because such compound (8) has small volatility. A preferred proportion of the antioxidant is about 50 ppm or more for achieving an effect thereof, and about 600 ppm or less for avoiding a decrease in the maximum temperature or an increase in the minimum temperature. A further preferred proportion is in the range of about 100 ppm to about 300 ppm.

Preferred examples of the ultraviolet light absorber include a benzophenone derivative, a benzoate derivative and a triazole derivative. A light stabilizer such as an amine having steric hindrance is also preferred. A preferred proportion of the absorber or the stabilizer is about 50 ppm or more for achieving an effect thereof, and about 10,000 ppm or less for avoiding a decrease in the maximum temperature or an increase in the minimum temperature. A further preferred proportion is in the range of about 100 ppm to about 10,000 ppm.

A dichroic dye such as an azo dye or an anthraquinone dye is added to the composition to be adapted for a device having a guest host (GH) mode. A preferred proportion of the dye is in the range of about 0.01% by weight to about 10% by weight. The antifoaming agent such as dimethyl silicone oil or methylphenyl silicone oil is added to the composition for preventing foam formation. A preferred proportion of the antifoaming agent is about 1 ppm or more for achieving an effect thereof, and about 1,000 ppm or less for preventing poor display. A further preferred proportion is

in the range of about 1 ppm to about 500 ppm.

The polymerizable compound is used to be adapted for a polymer sustained alignment (PSA) mode device. Compound (4) and compound (6) are suitable for the purpose. Any other polymerizable compound that is different from compound (4) and compound (6) may be added to the composition together with compound (4) and compound (6). Preferred examples of any other polymerizable compound include a compound such as acrylate, methacrylate, a vinyl compound, a vinyloxy compound, propenyl ether, an epoxy compound (oxirane, oxetane) and vinyl ketone. Further preferred examples include acrylate or methacrylate. A preferred proportion of compound (4) and compound (6) is about 10% by weight or more based on the total weight of the polymerizable compound. A further preferred proportion is about 50% by weight or more based thereon. A particularly preferred proportion is about 80% by weight or more based thereon. A particularly preferred proportion is also 100% by weight based thereon. Reactivity of the polymerizable compound and a pretilt angle of liquid crystal molecules can be adjusted by changing a kind of compound (4) and compound (6), or by combining any other polymerizable compound with compound (4) and compound (6) at a suitable ratio. A short response time in the device can be achieved by optimizing the pretilt angle. Alignment of the liquid crystal molecules is stabilized, and therefore a large contrast ratio or a long service life can be achieved.

The polymerizable compound is polymerized by irradiation with ultraviolet light. The polymerizable compound may be polymerized in the presence of a suitable initiator such as a photopolymerization initiator. Suitable conditions for polymerization, suitable types of the initiator and suitable amounts thereof are known to those skilled in the art and are described in literature. For example, Irgacure 651 (registered trademark; BASF), Irgacure 184 (registered trademark; BASF) or Darocur 1173 (registered trademark; BASF), each being the photopolymerization initiator, is suitable for radical polymerization. A preferred proportion of the photopolymerization initiator is in the range of about 0.1% by weight to about 5% by weight based on the total weight of the polymerizable compound. A further preferred proportion is in the range of about 1% by weight to about 3% by weight based thereon.

Upon storing the polymerizable compound, the polymerization inhibitor may be added thereto for preventing polymerization. The polymerizable compound is ordinarily added to the composition without removing the polymerization inhibitor. Examples of the polymerization inhibitor include hydroquinone, a hydroquinone derivative such as methylhydroquinone, 4-t-butylcatechol, 4-methoxyphenol and phenothiazine.

The polar compound is an organic compound having polarity. Here, a compound having an ionic bond is not contained. An atom such as oxygen, sulfur and nitrogen is electrically more negative, and tends to have a partial negative charge. Carbon and hydrogen are neutral or tend to have a partial positive charge. The polarity is formed when the partial electric charge is not uniformly distributed between different kinds of atoms in the compound. For example, the polar compound has at least one of partial structures such as -OH, -COOH, -SH, $-NH_2$, >NH and >N-.

Seventh, the methods for synthesizing the component compounds will be described. The compounds can be prepared according to known methods. Examples of the synthetic methods are described. Compound (1-6) is prepared according to a method described in JP 2000-053602 A. Compound (2-1) is prepared according to a method described in JP S59-176221 A. Compound (3-1) is prepared according to a method described in JP H2-503441 A. A method for synthesizing compound (4-1) is described in a section of Examples. Compound (6-18) is prepared according to a method described in JP H7-101900 A. A part of compound (8) is commercially available. A compound in which n in formula (8) is 1 is available from Sigma-Aldrich Corporation. Compound (8) in which n is 7 or the like is prepared according to a method described in US 3660505 B.

Any compounds whose synthetic methods are not described above can be prepared according to methods described in books such as Organic Syntheses (John Wiley & Sons, Inc.), Organic Reactions (John Wiley & Sons, Inc.), Comprehensive Organic Synthesis (Pergamon Press) and New Experimental Chemistry Course (Shin Jikken Kagaku Koza in Japanese) (Maruzen Co., Ltd.). The composition is prepared according to a publicly known method using the thus obtained compounds. For example, the component compounds are mixed and dissolved in each other by heating.

Last, the application of the composition will be described. Most of the compositions have a minimum temperature of about -10°C or lower, a maximum temperature of about 70°C or higher, and optical anisotropy in the range of about 0.07 to about 0.20. A composition having optical anisotropy in the range of about 0.08 to about 0.25 may be prepared by controlling a proportion of the component compounds or by mixing any other liquid crystal compound. Further, a composition having optical anisotropy in the range of about 0.10 to about 0.30 may be prepared by trial and error. A device including the composition has the large voltage holding ratio. The composition is suitable for use in the AM device. The composition is particularly suitable for use in a transmissive AM device. The composition can be used as the composition having the nematic phase, or as the optically active composition by adding the optically active compound.

The composition can be used in the AM device. The composition can also be used in a PM device. The composition can also be used in the AM device and the PM device each having a mode such as the PC mode, the TN mode, the STN mode, the ECB mode, the OCB mode, the IPS mode, the FFS mode, the VA mode and the FPA mode. Use in the AM device having a mode such as the TN mode, the OCB mode, the IPS mode and the FFS mode is particularly preferred. In the AM device having the IPS mode or the FFS mode, alignment of liquid crystal molecules when no voltage is applied may be parallel or perpendicular to a glass substrate. The devices may be of a reflective type, a transmissive

type or a transflective type. Use in the transmissive device is preferred. The composition can also be used in an amorphous silicon-TFT device or a polycrystal silicon-TFT device. The composition can also be used in a nematic curvilinear aligned phase (NCAP) device prepared by microencapsulating the composition, or a polymer dispersed (PD) device in which a three-dimensional network-polymer is formed in the composition.

One example of a conventional method for producing the polymer sustained alignment mode device is as described below. A device having two substrates referred to as an array substrate and a color filter substrate is assembled. The substrates have an alignment film. At least one of the substrates has an electrode layer. The liquid crystal composition is prepared by mixing the liquid crystal compounds. The polymerizable compound is added to the composition. The additive may be further added thereto when necessary. The composition is injected into the device. The device is irradiated with light in a state in which voltage is applied thereto. Ultraviolet light is preferred. The polymerizable compound is polymerized by irradiation with light. A composition containing a polymer is formed by the polymerization. The polymer sustained alignment mode device is produced by such a procedure .

In the procedure, when voltage is applied, the liquid crystal molecules are aligned by action of the alignment film and an electric field. Molecules of the polymerizable compound are also aligned according to the alignment. The polymerizable compound is polymerized by ultraviolet light in the above state, and therefore a polymer maintaining the alignment is formed. The response time in the device is shortened by an effect of the polymer. The image persistence is caused due to poor operation in the liquid crystal molecules, and therefore the persistence is also simultaneously improved by the effect of the polymer. Moreover, the polymerizable compound in the composition is previously polymerized, and the resulting composition can also be arranged between the substrates of the liquid crystal display device.

When compound (4), more specifically, the polar compound having the polymerizable group is used as the polymerizable compound, the alignment film is unnecessary in the substrates of the device. A device having no alignment film is produced according to the procedure described in the second to the present paragraph.

In the procedure, compound (4) is arranged on the substrate because the polar group interacts with the surface of the substrate. Liquid crystal molecules are aligned according to the arrangement. When voltage is applied thereto, the alignment of the liquid crystal molecules is further promoted. The polymerizable group is polymerized by ultraviolet light in the above state, and therefore a polymer maintaining the alignment is formed. The alignment of the liquid crystal molecules is additionally stable by an effect of the polymer, and the response time in the device is shortened. The image persistence is caused due to poor operation in the liquid crystal molecules, and therefore the persistence is also simultaneously improved by the effect of the polymer.

## Examples

The invention will be described in greater detail by way of Examples. However, the invention is not limited by the Examples. The invention includes a mixture of composition M1 and composition M2. The invention also includes a mixture in which at least two compositions in Examples are mixed. The thus prepared compound was identified by methods such as an NMR analysis. Characteristics of the compound, the composition and a device were measured by methods described below.

NMR analysis: For measurement, DRX-500 made by Bruker BioSpin Corporation was used. In $^{1}$H-NMR measurement, a sample was dissolved in a deuterated solvent such as $CDCl_3$, and measurement was carried out under conditions of room temperature, 500 MHz and 16 times of accumulation. Tetramethylsilane was used as an internal standard. In $^{19}$F-NMR measurement, $CFCl_3$ was used as an internal standard, and measurement was carried out under conditions of 24 times of accumulation. In explaining nuclear magnetic resonance spectra obtained, s, d, t, q, quin, sex and m stand for a singlet, a doublet, a triplet, a quartet, a quintet, a sextet and a multiplet, and br being broad, respectively.

Gas chromatographic analysis: For measurement, GC-14B Gas Chromatograph made by Shimadzu Corporation was used. A carrier gas was helium (2 mL per minute). A sample vaporizing chamber and a detector (FID) were set to 280°C and 300°C, respectively. A capillary column DB-1 (length 30 m, bore 0.32 mm, film thickness 0.25 μm; dimethylpolysiloxane as a stationary liquid phase; non-polar) made by Agilent Technologies, Inc. was used for separation of component compounds. After the column was kept at 200°C for 2 minutes, the column was heated to 280°C at a rate of 5°C per minute. A sample was prepared in an acetone solution (0.1% by weight), and then 1 microliter of the solution was injected into the sample vaporizing chamber. A recorder was C-R5A Chromatopac made by Shimadzu Corporation or the equivalent thereof. The resulting gas chromatogram showed a retention time of a peak and a peak area corresponding to each of the component compounds.

As a solvent for diluting the sample, chloroform, hexane or the like may also be used. The following capillary columns may also be used for separating component compounds: HP-1 (length 30 m, bore 0.32 mm, film thickness 0.25 μm) made by Agilent Technologies, Inc., Rtx-1 (length 30 m, bore 0.32 mm, film thickness 0.25 μm) made by Restek Corporation and BP-1 (length 30 m, bore 0.32 mm, film thickness 0.25 μm) made by SGE International Pty. Ltd. A capillary column CBP1-M50-025 (length 50 m, bore 0.25 mm, film thickness 0.25 μm) made by Shimadzu Corporation may also be used for the purpose of preventing an overlap of peaks of the compounds.

A proportion of liquid crystal compounds contained in the composition may be calculated by a method as described below. A mixture of liquid crystal compounds is analyzed by gas chromatograph (FID). An area ratio of each peak in the gas chromatogram corresponds to the ratio of the liquid crystal compounds. When the capillary columns described above were used, a correction coefficient of each of the liquid crystal compounds may be regarded as 1 (one). Accordingly, the proportion (% by weight) of the liquid crystal compounds can be calculated from the area ratio of each peak.

Sample for measurement: When characteristics of the composition and the device were measured, the composition was used as a sample as was. Upon measuring characteristics of the compound, a sample for measurement was prepared by mixing the compound (15% by weight) with a base liquid crystal (85% by weight). Values of characteristics of the compound were calculated, according to an extrapolation method, using values obtained by measurement. (Extrapolated value) = { (measured value of a sample) - 0.85 × (measured value of a base liquid crystal)} / 0.15. When a smectic phase (or crystals) precipitates at the ratio thereof at 25°C, a ratio of the compound to the base liquid crystal was changed step by step in the order of (10% by weight : 90% by weight), (5% by weight : 95% by weight) and (1% by weight : 99% by weight). Values of maximum temperature, optical anisotropy, viscosity and dielectric anisotropy with regard to the compound were determined according to the extrapolation method.

A base liquid crystal described below was used. A proportion of the component compound was expressed in terms of weight percent (% by weight).

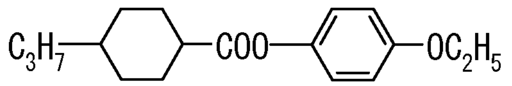 17.2%

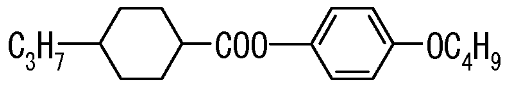 27.6%

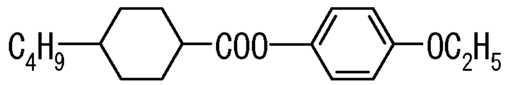 20.7%

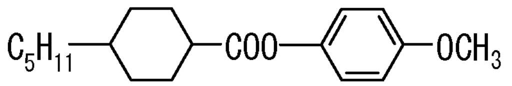 20.7%

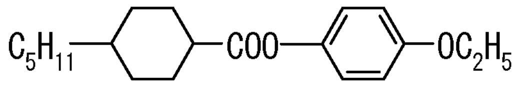 13.8%

Measuring method: Characteristics were measured according to methods described below. Most of the measuring methods are applied as described in the Standard of Japan Electronics and Information Technology Industries Association (hereinafter abbreviated as JEITA) (JEITA ED-2521B) discussed and established by JEITA, or modified thereon. No thin film transistor (TFT) was attached to a TN device used for measurement.

(1) Maximum temperature of nematic phase (NI; °C): A sample was placed on a hot plate in a melting point apparatus equipped with a polarizing microscope, and heated at a rate of 1°C per minute. Temperature when part of the sample began to change from a nematic phase to an isotropic liquid was measured. A maximum temperature of the nematic phase may be occasionally abbreviated as "maximum temperature."

(2) Minimum temperature of nematic phase ($T_C$; °C): Samples each having a nematic phase were put in glass vials and kept in freezers at temperatures of 0°C, -10°C, -20°C, -30°C and -40°C for 10 days, and then liquid crystal phases were observed. For example, when the sample was maintained in the nematic phase at -20°C and changed to crystals or a smectic phase at -30°C, $T_C$ was expressed as $T_C$ < -20°C. A minimum temperature of the nematic phase may be occasionally abbreviated as "minimum temperature."

(3) Viscosity (bulk viscosity; η; measured at 20°C; mPa·s): For measurement, a cone-plate (E type) rotational viscometer made by Tokyo Keiki Inc. was used.

(4) Viscosity (rotational viscosity; γ1; measured at 25°C; mPa·s): Measurement was carried out according to a method described in M. Imai et al., Molecular Crystals and Liquid Crystals, Vol. 259, p. 37 (1995). A sample was injected into a VA device in which a distance (cell gap) between two glass substrates was 20 micrometers. Voltage was applied stepwise to the device in the range of 39 V to 50 V at an increment of 1 V. After a period of 0.2 second with no voltage application, voltage was repeatedly applied under conditions of only one rectangular wave (rectangular pulse; 0.2 second) and no voltage application (2 seconds) . A peak current and a peak time of transient current generated by the applied voltage were measured. A value of rotational viscosity was obtained from the measured

values and calculation equation (8) on page 40 of the paper presented by M. Imai et al. Dielectric anisotropy required for the calculation was measured according to a method described in measurement (6).

(5) Optical anisotropy (refractive index anisotropy; $\Delta n$; measured at 25°C): Measurement was carried out by an Abbe refractometer with a polarizing plate mounted on an ocular, using light at a wavelength of 589 nanometers. A surface of a main prism was rubbed in one direction, and then a sample was added dropwise onto the main prism. A refractive index ($n\|$) was measured when a direction of polarized light was parallel to a direction of rubbing. A refractive index ($n\perp$) was measured when the direction of polarized light was perpendicular to the direction of rubbing. A value of optical anisotropy was calculated from an equation: $\Delta n = n\| - n\perp$.

(6) Dielectric anisotropy ($\Delta\varepsilon$; measured at 25°C): A value of dielectric anisotropy was calculated from an equation: $\Delta\varepsilon = \varepsilon\| - \varepsilon\perp$. A dielectric constant ($\varepsilon\|$ and $\varepsilon\perp$) was measured as described below.

> (1) Measurement of dielectric constant ($\varepsilon\|$): An ethanol (20 mL) solution of octadecyltriethoxysilane (0.16 mL) was applied to a well-cleaned glass substrate. After rotating the glass substrate with a spinner, the glass substrate was heated at 150°C for 1 hour. A sample was put in a VA device in which a distance (cell gap) between two glass substrates was 4 micrometers, and the device was sealed with an ultraviolet-curable adhesive. Sine waves (0.5 V, 1 kHz) were applied to the device, and after 2 seconds, a dielectric constant ($\varepsilon\|$) of liquid crystal molecules in a major axis direction was measured.
>
> (2) Measurement of dielectric constant ($\varepsilon\perp$) : A polyimide solution was applied to a well-cleaned glass substrate. After calcining the glass substrate, rubbing treatment was applied to the alignment film obtained. A sample was injected into a TN device in which a distance (cell gap) between two glass substrates was 9 micrometers and a twist angle was 80 degrees. Sine waves (0.5 V, 1 kHz) were applied to the device, and after 2 seconds, a dielectric constant ($\varepsilon\perp$) of liquid crystal molecules in a minor axis direction was measured.

(7) Threshold voltage (Vth; measured at 25°C; V): For measurement, an LCD-5100 luminance meter made by Otsuka Electronics Co., Ltd. was used. A light source was a halogen lamp. A sample was put in a normally black mode VA device in which a distance (cell gap) between two glass substrates was 4 micrometers and a rubbing direction was anti-parallel, and the device was sealed with an ultraviolet-curable adhesive. A voltage (60 Hz, rectangular waves) to be applied to the device was stepwise increased from 0 V to 20 V at an increment of 0.02 V. On the occasion, the device was irradiated with light from a direction perpendicular to the device, and an amount of light transmitted through the device was measured. A voltage-transmittance curve was prepared, in which the maximum amount of light corresponds to 100% transmittance and the minimum amount of light corresponds to 0% transmittance. A threshold voltage is expressed in terms of voltage at 10% transmittance .

(8) Voltage holding ratio (VHR-1; measured at 25°C; %) : A TN device used for measurement had a polyimide alignment film, and a distance (cell gap) between two glass substrates was 5 micrometers. A sample was injected into the device, and then the device was sealed with an ultraviolet-curable adhesive. A pulse voltage (60 microseconds at 5 V) was applied to the TN device, and the device was charged. A decaying voltage was measured for 16.7 milliseconds with a high-speed voltmeter, and area A between a voltage curve and a horizontal axis in a unit cycle was determined. Area B is an area without decay. A voltage holding ratio is expressed in terms of a percentage of area A to area B.

(9) Voltage holding ratio (VHR-2; measured at 80°C; %) : A voltage holding ratio was measured according to procedures identical with the procedures described above except that measurement was carried out at 80°C in place of 25°C. The thus obtained value was expressed in terms of VHR-2.

(10) Voltage holding ratio (VHR-3; measured at 25°C; %) : Stability to ultraviolet light was evaluated by measuring a voltage holding ratio after a device was irradiated with ultraviolet light. A TN device used for measurement had a polyimide alignment film, and a cell gap was 5 micrometers. A sample was injected into the device, and the device was irradiated with light for 20 minutes. A light source was an ultra high-pressure mercury lamp USH-500D (made by Ushio, Inc.), and a distance between the device and the light source was 20 centimeters. In measurement of VHR-3, a decaying voltage was measured for 16.7 milliseconds. A composition having large VHR-3 has large stability to ultraviolet light. A value of VHR-3 is preferably 90% or more, and further preferably 95% or more.

(11) Voltage holding ratio (VHR-4; measured at 25°C; %) : Stability to heat was evaluated by measuring a voltage holding ratio after a TN device into which a sample was injected was heated in a constant-temperature bath at 80°C for 500 hours. In measurement of VHR-4, a decaying voltage was measured for 16.7 milliseconds. A composition having large VHR-4 has large stability to heat.

(12) Response time ($\tau$; measured at 25°C; ms): For measurement, an LCD-5100 luminance meter made by Otsuka Electronics Co., Ltd. was used. A light source was a halogen lamp. A low-pass filter was set to 5 kHz. A sample was put in a VA device having no alignment film in which a distance (cell gap) between two glass substrates was 3.5 micrometers. The device was sealed with an ultraviolet-curable adhesive. The device was irradiated with ultraviolet light of 78 $mW/cm^2$ (405 nm) for 449 seconds (35J) while a voltage of 30 V was applied to the device. A multi-metal lamp M04-L41 for ultraviolet curing made by EYE GRAPHICS CO., LTD. was used for irradiation with ultraviolet light. Rectangular waves (120 Hz) were applied to the device. On the occasion, the device was irradiated with light from a direction perpendicular to the device, and an amount of light transmitted through the device was measured. The maximum amount of light corresponds to 100% transmittance, and the minimum amount of light corresponds to 0% transmittance. The maximum voltage of the rectangular wave was set to be 90% transmittance. The minimum voltage of the rectangular wave was set to be 2.5V at 0% transmittance. A response time was expressed in terms of time required for a change from 10% transmittance to 90% transmittance (rise time; millisecond).

(13) Elastic constant (K11: splay elastic constant, K33: bend elastic constant; measured at 25°C; pN): For measurement, Elastic Constant Measurement System Model EC-1 made by TOYO Corporation was used. A sample was injected into a vertical alignment device in which a distance (cell gap) between two glass substrates was 20 micrometers. An electric charge of 20 V to 0 V was applied to the device, and electrostatic capacity and applied voltage were measured. The measured values of electrostatic capacity (C) and applied voltage (V) were fitted to equation (2.98) and equation (2.101) on page 75 of "Liquid Crystal Device Handbook (Ekisho Debaisu Handobukku in Japanese; Nikkan Kogyo Shimbun, Ltd.)," and values of elastic constant were obtained from equation (2.100).

(14) Specific resistance (ρ; measured at 25°C; Qcm): In a vessel equipped with electrodes, 1.0 milliliter of a sample was put. A direct current voltage (10 V) was applied to the vessel, and a direct current after 10 seconds was measured. Specific resistance was calculated from the following equation: (specific resistance)={(voltage) × (electric capacity of a vessel)} / {(direct current) × (dielectric constant of vacuum)}.

(15) Pretilt angle (degree): For measurement of a pretilt angle, a spectroscopic ellipsometer M-2000U (made by J. A. Woollam Co., Inc.) was used.

(16) Alignment stability (liquid crystal alignment axis stability) : A change in a liquid crystal alignment axis of the liquid crystal display device on an electrode side was evaluated. A liquid crystal alignment angle $\phi$ (before) on the electrode side before stress application was measured, and then rectangular waves of 4.5 V and 60 Hz were applied to the device for 20 minutes, and then short-circuited for 1 second, and a liquid crystal alignment angle $\phi$ (after) on the electrode side was measured again after 1 second and 5 minutes . A change $\Delta\phi$ (deg) in the liquid crystal alignment angle after 1 second and after 5 minutes was calculated from the above values using the following formula:

$$\Delta\varnothing\ (deg) = \varnothing\ (after) - \varnothing\ (before) \qquad (Formula\ 2)$$

The measurements were carried out with reference to J. Hilfiker, B. Johs, C. Herzinger, J. F. Elman, E. Montbach, D. Bryant, and P. J. Bos, Thin Solid Films, 455-456, (2004) 596-600. As $\Delta\phi$ is smaller, a change rate of the liquid crystal alignment axis is reasonably smaller, and the stability of the liquid crystal alignment axis is reasonably better.

## Synthesis Example 1

Compound (4-1) was prepared according to a method described below.

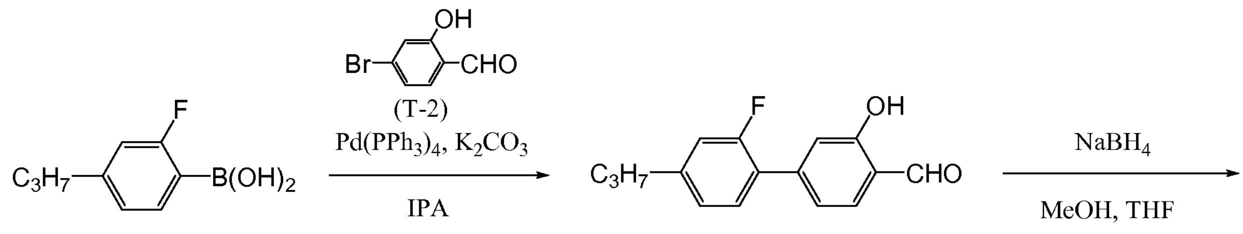


(T-1) (T-3)

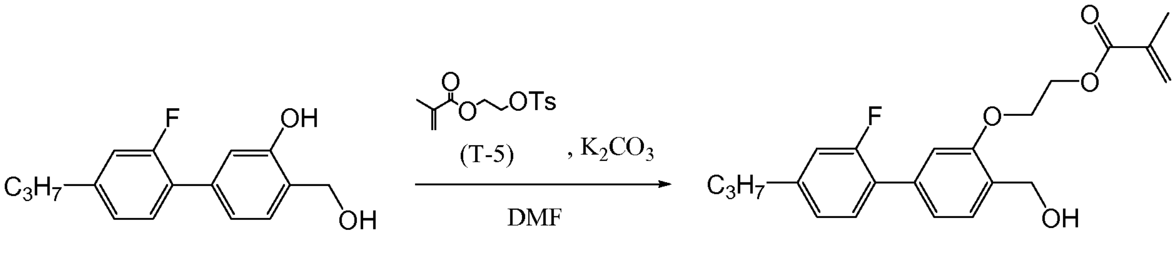


(T-4) (4-1)

First step:

Compound (T-1) (4.98 g), compound (T-2) (5.00 g), potassium carbonate (6.88 g), tetrakis(triphenylphosphine)palladium (0.289 g) and isopropanol (IPA; 100 mL) were put in a reaction vessel, and the resulting mixture was heated and refluxed at 80°C for 2 hours. The resulting reaction mixture was poured into water, and neutralized by using 1 N hydrochloric acid, and then subjected to extraction with ethyl acetate. Combined organic layers were washed with brine, and dried over anhydrous magnesium sulfate. The solution was concentrated under reduced pressure, and the residue was purified by silica gel chromatography (toluene) to obtain compound (T-3) (6.38 g; 99%).

Second step:

Sodium borohydride (1.88 g) and methanol (90 mL) were put in a reaction vessel, and the resulting mixture was cooled down to 0°C. A THF (40 mL) solution of compound (T-3) (6.38 g) was slowly added dropwise thereto, and stirred for 8 hours while returning to room temperature. The resulting reaction mixture was poured into water, and an aqueous layer was subjected to extraction with ethyl acetate. Combined organic layers were washed with water, and dried over anhydrous magnesium sulfate. The solution was concentrated under reduced pressure, and the residue was purified by silica gel chromatography (toluene : ethyl acetate = 3 : 1 in a volume ratio) . The resulting solution was further purified by recrystallization from a mixed solvent of heptane and toluene (1 : 1 in a volume ratio) to obtain compound (T-4) (5.50 g; 85%).

Third step:

Compound (T-4) (0.600 g), potassium carbonate (0.637 g) and DMF (6 mL) were put in a reaction vessel, and the resulting mixture was stirred at 80°C for 1 hour. The resulting reaction mixture was cooled down to room temperature, and then a DMF (6 mL) solution of compound (T-5) (0.983 g) prepared according to a technique described in JP 2013-177561 A was slowly added dropwise thereto, and the resulting mixture was stirred at 80 °C for 8 hours . The resulting reaction mixture was poured into water, and an aqueous layer was subjected to extraction with toluene. Combined organic layers were washed with water, and dried over anhydrous magnesium sulfate. The solution was concentrated under reduced pressure, and the residue was purified by silica gel chromatography (toluene : ethyl acetate = 7 : 1 in a volume ratio) to obtain compound (4-1) (0.350 g; 40%).

$^1$H-NMR: Chemical shift $\delta$ (ppm; $CDCl_3$): 7.35 - 7.29 (m, 2H), 7.15 - 7.10 (m, 1H), 7.07 - 6.94 (m, 3H), 6.14 (s, 1H), 5.60 (s, 1H), 4.71 (d, 6.6 Hz, 2H), 4.58 (t, J = 4.5 Hz, 2H), 4.32 (t, J = 4.5 Hz, 2H), 2.65 - 2.58 (m, 3H), 1.95 (s, 3H), 1.72 - 1.63 (m, 2H), 0.98 (t, J = 7.5 Hz, 3H).

Examples of compositions will be described below. The component compounds were represented using symbols according to definitions in Table 3 described below. In Table 3, the configuration of 1,4-cyclohexylene is trans. A parenthesized number next to a symbolized compound represents a chemical formula to which the compound belongs. A symbol (-) means any other liquid crystal compound. A proportion (percentage) of the liquid crystal compound is expressed

in terms of weight percent (% by weight) based on the weight of the liquid crystal composition containing no additive. Values of the characteristics of the composition are summarized in a last part.

Table 3 Method for description of compounds using symbols

| $R-(A_1)-Z_1-\cdots\cdots-Z_n-(A_n)-R'$ | | | |
|---|---|---|---|
| 1) Left-terminal group R- | Symbol | 4) Ring structure $-A_n-$ | Symbol |
| $FC_nH_{2n}-$ | Fn- | | |
| $C_nH_{2n+1}-$ | n- | 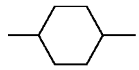 | H |
| $C_nH_{2n+1}O-$ | nO- | | |
| $C_mH_{2m+1}OC_nH_{2n}-$ | mOn- | | |
| $CH_2=CH-$ | V- | 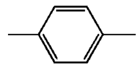 | B |
| $C_nH_{2n+1}-CH=CH-$ | nV- | | |
| $CH_2=CH-C_nH_{2n}-$ | Vn- | 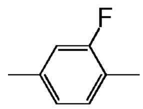 | B(F) |
| $C_mH_{2m+1}-CH=CH-C_nH_{2n}-$ | mVn- | | |
| $CF_2=CH-$ | VFF- | | |
| $CF_2=CH-C_nH_{2n}-$ | VFFn- | 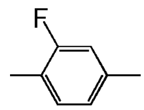 | B(2F) |
| $C_mH_{2m+1}CF_2C_nH_{2n}-$ | m(CF2)n- | | |
| $CH_2=CHCOO-$ | AC- | | |
| $CH_2=C(CH_3)COO-$ | MAC- | | |
| 2) Right-terminal group -R' | Symbol | 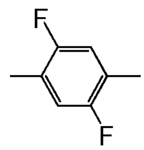 | B(2F,5F) |
| $-C_nH_{2n+1}$ | -n | | |
| $-OC_nH_{2n+1}$ | -On | | |
| $-CH=CH_2$ | -V | 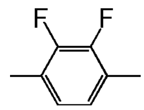 | B(2F,3F) |
| $-CH=CH-C_nH_{2n+1}$ | -Vn | | |
| $-C_nH_{2n}-CH=CH_2$ | -nV | | |
| $-C_mH_{2m}-CH=CH-C_nH_{2n+1}$ | -mVn | 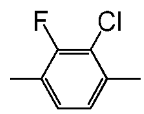 | B(2F,3Cl) |
| $-CH=CF_2$ | -VFF | | |
| $-OCOCH=CH_2$ | -AC | | |
| $-OCOC(CH_3)=CH_2$ | -MAC | 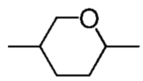 | dh |
| 3) Bonding group $-Z_n-$ | Symbol | | |
| $-C_nH_{2n}-$ | n | 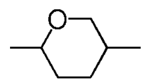 | Dh |
| -COO- | E | | |
| -CH=CH- | V | | |
| -CH=CHO- | VO | | |
| -OCH=CH- | OV | 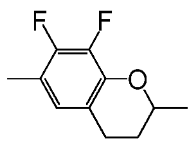 | Cro(7F,8F) |
| $-CH_2O-$ | 1O | | |
| $-OCH_2-$ | O1 | 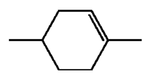 | ch |
| 5) Examples of description | | | |
| Example 1 V-HHB(2F,3F)-O2 | | Example 2 5-DhB(2F,3 F)-O2 | |
| 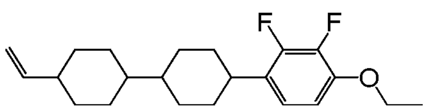 | | 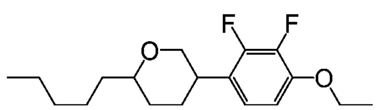 | |
| Example 3 3-HBB-1 | | Example 4 AC-BB-AC | |

(continued)

| $R\text{-}(A_1)\text{-}Z_1\text{-}\cdots\cdots\text{-}Z_n\text{-}(A_n)\text{-}R'$ | |
|---|---|
| 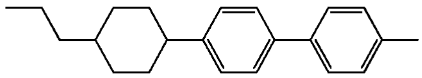 | 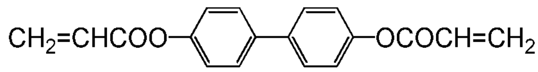 |

**Examples of device**

1. Raw material

A composition to which a polar compound was added was injected into a device having no alignment film. After the device was irradiated with ultraviolet light, vertical alignment of liquid crystal molecules in the device was examined. A raw material will be first described. The raw material was appropriately selected from compositions (M1) to (M16), polar compounds (PC-1) to (PC-12) and polymerizable compounds (RM-1) to (RM-11). The composition is as described below.

**Composition M1**

| | | |
|---|---|---|
| V-HB(2F,3F)-O2 | (1-1) | 10% |
| V2-HB(2F,3F)-O2 | (1-1) | 7% |
| V-BB(2F,3F)-O2 | (1-4) | 7% |
| V2-BB(2F,3F)-O2 | (1-4) | 7% |
| V2-B(2F,3F)B(2F,3F)-O2 | (1-5) | 3% |
| V-HHB(2F,3F)-O2 | (1-6) | 5% |
| V2-HHB(2F,3F)-O2 | (1-6) | 10% |
| V2-HBB(2F,3F)-O2 | (1-10) | 8% |
| V-HBB(2F,3F)-O2 | (1-10) | 10% |
| 2-HH-3 | (2-1) | 14% |
| 3-HB-O1 | (2-2) | 5% |
| 3-HHB-1 | (2-5) | 3% |
| 3-HHB-O1 | (2-5) | 3% |
| 3-HHB-3 | (2-5) | 4% |
| 2-BB(F)B-3 | (2-7) | 4% |

NI = 78.4°C; Tc < -20°C; $\Delta n$ = 0.124; $\Delta\varepsilon$ = -3.8; Vth = 2.20 V; $\eta$ = 21.0 mPa·s.

**Composition M2**

| | | |
|---|---|---|
| V2-H2B(2F,3F)-O2 | (1-2) | 8% |
| V2-H1OB(2F,3F)-O4 | (1-3) | 4% |
| V-HH2B(2F,3F)-O2 | (1-7) | 6% |
| V2-HBB(2F,3F)-O2 | (1-10) | 5% |
| V-HBB(2F,3F)-O2 | (1-10) | 5% |
| V-HBB(2F,3F)-O4 | (1-10) | 6% |
| 2-HH-3 | (2-1) | 12% |
| 1-BB-5 | (2-3) | 12% |
| 3-HHB-1 | (2-5) | 4% |

(continued)

| | | |
|---|---|---|
| 3-HHB-O1 | (2-5) | 3% |
| 3-HBB-2 | (2-6) | 3% |
| 3-BB(2F,3F)-O2 | (3-4) | 7% |
| 2-HHB(2F,3F)-O2 | (3-6) | 7% |
| 3-HHB(2F,3F)-O2 | (3-6) | 7% |
| 3-HH2B(2F,3F)-O2 | (3-7) | 7% |
| 5-HH2B(2F,3F)-O2 | (3-7) | 4% |

NI = 89.9°C; Tc < -20°C; Δn = 0.122; Δε = -4.2; Vth = 2.16 V; η = 23.4 mPa·s.

**Composition M3**

| | | |
|---|---|---|
| V-HB(2F,3F)-O2 | (1-1) | 3% |
| V2-HB(2F,3F)-O2 | (1-1) | 5% |
| V2-BB(2F,3F)-O2 | (1-4) | 3% |
| 1V2-BB(2F,3F)-O2 | (1-4) | 3% |
| V-HHB(2F,3F)-O2 | (1-6) | 6% |
| V-HHB(2F,3F)-O4 | (1-6) | 5% |
| V2-HHB(2F,3F)-O2 | (1-6) | 4% |
| V2-BB(2F,3F)B-1 | (1-9) | 4% |
| V2-HBB(2F,3F)-O2 | (1-10) | 5% |
| V-HBB (2F,3F)-O2 | (1-10) | 4% |
| V-HBB(2F,3F)-O4 | (1-10) | 5% |
| V-HHB(2F,3CL)-O2 | (1-12) | 3% |
| 3-HH-V | (2-1) | 27% |
| 3-HH-V1 | (2-1) | 6% |
| V-HHB-1 | (2-5) | 3% |
| 3-HB(2F,3F)-O2 | (3-1) | 3% |
| 5-H2B(2F,3F)-O2 | (3-2) | 5% |
| 3-HHB(2F,3F)-O2 | (3-6) | 6% |

NI = 77.1°C; Tc < -20°C; Δn = 0.101; Δε = -3.0; Vth = 2.04 V; η = 13.9 mPa·s.

**Composition M4**

| | | |
|---|---|---|
| V-HB(2F,3F)-O2 | (1-1) | 10% |
| V2-HB(2F,3F)-O2 | (1-1) | 10% |
| V2-BB(2F,3F)-O2 | (1-4) | 8% |
| V2-HHB(2F,3F)-O2 | (1-6) | 5% |
| V-HBB(2F,3F)-O2 | (1-10) | 6% |
| V-HBB(2F,3F)-O4 | (1-10) | 8% |
| V-HHB(2F,3CL)-O2 | (1-12) | 7% |
| 3-HH-4 | (2-1) | 14% |

(continued)

| | | |
|---|---|---|
| V-HHB-1 | (2-5) | 10% |
| 3-HBB-2 | (2-6) | 7% |
| 2-H1OB2F,3F)-O2 | (3-3) | 3% |
| 3-H1OB(2F,3F)-O2 | (3-3) | 3% |
| 2O-BB(2F,3F)-O2 | (3-4) | 3% |
| 2-HBB(2F,3F)-O2 | (3-10) | 3% |
| 3-HBB(2F,3F)-O2 | (3-10) | 3% |

NI = 75.9°C; Tc < -20°C; Δn = 0.114; Δε = -3.9; Vth = 2.20 V; η = 24.7 mPa·s.

**Composition M5**

| | | |
|---|---|---|
| V-HB(2F,3F)-O2 | (1-1) | 5% |
| V-HB(2F,3F)-O4 | (1-1) | 6% |
| V2-H2B(2F,3F)-O2 | (1-2) | 7% |
| V2-BB(2F,3F)-O2 | (1-4) | 10% |
| V-HHB(2F,3F)-O1 | (1-6) | 6% |
| V-HHB(2F,3F)-O2 | (1-6) | 7% |
| V2-HHB(2F,3F)-O2 | (1-6) | 3% |
| 1V-HHB(2F,3F)-02 | (1-6) | 6% |
| V-HH2B(2F,3F)-O2 | (1-7) | 5% |
| V-HH2B(2F,3F)-O4 | (1-7) | 4% |
| V-HBB(2F,3F)-O2 | (1-10) | 6% |
| V-HBB (2F,3F)-O4 | (1-10) | 6% |
| 3-HH-O1 | (2-1) | 5% |
| 1-BB-5 | (2-3) | 4% |
| V-HHB-1 | (2-5) | 4% |
| 5-HB(F)BH-3 | (2-12) | 5% |
| 5-HB(2F,3F)-O2 | (3-1) | 3% |
| 3-B(2F,3F)B(2F,3F)-O2 | (3-5) | 3% |
| 5-HHB(2F,3F)-O2 | (3-6) | 5% |

NI = 75.9°C; Tc < -20°C; Δn = 0.118; Δε = -4.5; Vth = 1.68 V; η = 28.3 mPa·s.

**Composition M6**

| | | |
|---|---|---|
| V-HB(2F,3F)-O4 | (1-1) | 15% |
| V2-HHB(2F,3F)-O2 | (1-6) | 5% |
| V-HBB(2F,3F)-O4 | (1-10) | 8% |
| V-chB(2F,3F)-O2 | (1-18) | 5% |
| V-HchB(2F,3F)-O2 | (1-19) | 7% |
| 5-HH-V | (2-1) | 18% |
| 7-HB-1 | (2-2) | 5% |

(continued)

| | | |
|---|---|---|
| V-HHB-1 | (2-5) | 7% |
| V2-HHB-1 | (2-5) | 7% |
| 3-HBB(F)B-3 | (2-13) | 8% |
| 2-HHB(2F,3F)-O2 | (3-6) | 5% |
| 3-HHB(2F,3F)-O2 | (3-6) | 5% |
| 3-HH1OB(2F,3F)-O2 | (3-8) | 5% |

NI = 95.5°C; Tc < -20°C; $\Delta n$ = 0.099; $\Delta\varepsilon$ = -3.2; Vth = 2.45 V; $\eta$ = 21.7 mPa·s.

**Composition M7**

| | | |
|---|---|---|
| V2-H2B(2F,3F)-O2 | (1-2) | 5% |
| V-H1OB(2F,3F)-O2 | (1-3) | 4% |
| V-HHB(2F,3F)-O2 | (1-6) | 4% |
| V2-HHB(2F,3F)-O2 | (1-6) | 6% |
| 3-HH-V | (2-1) | 11% |
| 3-HH-VFF | (2-1) | 7% |
| F3-HH-V | (2-1) | 10% |
| 3-HHEH-3 | (2-4) | 4% |
| 3-HB(F)HH-2 | (2-10) | 4% |
| 3-HHEBH-3 | (2-11) | 4% |
| 3-HB(2F,3F)-O4 | (3-1) | 3% |
| 3-H2B(2F,3F)-O2 | (3-2) | 3% |
| 2-HHB(2F,3F)-1 | (3-6) | 3% |
| 3-HHB(2F,3F)-1 | (3-6) | 3% |
| 2-HH1OB(2F,3F)-O2 | (3-8) | 4% |
| 2-BB(2F,3F)B-3 | (3-9) | 3% |
| 2-BB(2F,3F)B-4 | (3-9) | 3% |
| 2-HBB(2F,3F)-O2 | (3-10) | 4% |
| 3-HBB(2F,3F)-O2 | (3-10) | 5% |
| 4-HBB(2F,3F)-O2 | (3-10) | 4% |
| 5-HBB(2F,3F)-O2 | (3-10) | 3% |
| 3-HEB(2F,3F)B(2F,3F)-O2 | (3-11) | 3% |

NI = 92.0°C; Tc < -20°C; $\Delta n$ = 0.104; $\Delta\varepsilon$ = -2.7; Vth = 2.44 V; $\eta$ = 21.7 mPa·s.

**Composition M8**

| | | |
|---|---|---|
| V-HB(2F,3F)-O2 | (1-1) | 7% |
| V2-HB(2F,3F)-O2 | (1-1) | 10% |
| V-BB(2F,3F)-O2 | (1-4) | 7% |
| V2-BB(2F,3F)-O2 | (1-4) | 7% |
| V2-B(2F,3F)B(2F,3F)-O2 | (1-5) | 3% |

(continued)

| | | |
|---|---|---|
| V-HHB(2F,3F)-O1 | (1-6) | 5% |
| V-HHB(2F,3F)-O2 | (1-6) | 10% |
| V2-HBB(2F,3F)-O2 | (1-10) | 8% |
| V-HBB (2F,3F)-O2 | (1-10) | 10% |
| V-HBB(2F,3F)-O4 | (1-10) | 3% |
| 3-HH-V | (2-1) | 11% |
| 1-BB-5 | (2-3) | 5% |
| 3-HHB(2F,3F)-O2 | (3-6) | 4% |
| 5-HHB(2F,3F)-O2 | (3-6) | 4% |
| 3-HHB(2F,3CL)-O2 | (3-12) | 3% |
| 3-HBB(2F,3CL)-O2 | (3-13) | 3% |

NI = 70.6°C; Tc < -20°C; Δn = 0.131; Δε = -4.7; Vth = 1.65 V; η = 27.7 mPa·s.

**Composition M9**

| | | |
|---|---|---|
| V-HB(2F,3F)-O4 | (1-1) | 15% |
| V2-H1OB(2F,3F)-O4 | (1-3) | 4% |
| V2-BB(2F,3F)-O2 | (1-4) | 8% |
| 1V2-BB(2F,3F)-O2 | (1-4) | 5% |
| V-HHB(2F,3F)-O1 | (1-6) | 3% |
| V-HHB(2F,3F)-O2 | (1-6) | 7% |
| 1V-HH1OB(2F,3F)-O2 | (1-8) | 5% |
| V-HBB (2F,3F)-O2 | (1-10) | 4% |
| V-HBB(2F,3F)-O4 | (1-10) | 3% |
| 3-HH-V | (2-1) | 14% |
| 1-BB-3 | (2-3) | 3% |
| 3-HHB-1 | (2-5) | 4% |
| 3-HHB-O1 | (2-5) | 4% |
| V-HBB-2 | (2-6) | 4% |
| 1-BB(F)B-2V | (2-7) | 6% |
| 3-HH1OCro(7F,8F)-5 | (3-15) | 3% |
| 5-HDhB(2F,3F)-O2 | (3-16) | 4% |
| 5-HBBH-1O1 | (-) | 4% |

NI = 88.2°C; Tc < -20°C; Δn = 0.122; Δε = -4.1; Vth = 2.26 V; η = 29.7 mPa·s.

**Composition M10**

| | | |
|---|---|---|
| V2-H2B(2F,3F)-O2 | (1-2) | 8% |
| V2-H1OB(2F,3F)-O4 | (1-3) | 5% |
| V2-BB(2F,3F)-O2 | (1-4) | 10% |
| 1V2-BB(2F,3F)-O2 | (1-4) | 3% |

(continued)

| | | |
|---|---|---|
| V-HHB(2F,3F)-O2 | (1-6) | 6% |
| V2-HHB(2F,3F)-O2 | (1-6) | 5% |
| V-HBB(2F,3F)-O*2 | (1-10) | 4% |
| V-HBB (2F,3F)-O4 | (1-10) | 7% |
| 1V-HHB(2F,3CL)-O2 | (1-12) | 6% |
| 3-HH-V | (2-1) | 11% |
| 1-BB-3 | (2-3) | 6% |
| 3-HHB-1 | (2-5) | 4% |
| 3-HHB-O1 | (2-5) | 4% |
| 3-HBB-2 | (2-6) | 4% |
| 3-B(F)BB-2 | (2-8) | 4% |
| 3-HBB (2F,3F)-O2 | (3-10) | 3% |
| 5-HBB(2F,3F)-O2 | (3-10) | 4% |
| 3-H1OCro(7F,8F)-5 | (3-14) | 3% |
| 3-HDhB(2F,3F)-O2 | (3-16) | 3% |

NI = 92.3°C; Tc < -20°C; Δn = 0.134; Δε = -4.5; Vth = 2.25 V; η = 28.6 mPa·s.

**Composition M11**

| | | |
|---|---|---|
| V2-H2B(2F,3F)-O2 | (1-2) | 8% |
| V2-H1OB(2F,3F)-O4 | (1-3) | 4% |
| V2-BB(2F,3F)-O2 | (1-4) | 7% |
| V-HHB(2F,3F)-O1 | (1-6) | 5% |
| V-HHB(2F,3F)-O2 | (1-6) | 10% |
| V-HHB(2F,3F)-O4 | (1-6) | 6% |
| V-HBB (2F,3F)-O2 | (1-10) | 7% |
| V-HBB (2F,3F)-O4 | (1-10) | 5% |
| V2-HHB(2F,3CL)-O2 | (1-12) | 5% |
| 2-HH-3 | (2-1) | 12% |
| 1-BB-3 | (2-3) | 6% |
| 3-HHB-1 | (2-5) | 3% |
| 3-HHB-O1 | (2-5) | 4% |
| 3-HBB-2 | (2-6) | 6% |
| 3-B(F)BB-2 | (2-8) | 3% |
| 3-dhBB(2F,3F)-O2 | (3-17) | 5% |
| 3-chB(2F,3F)-O2 | (3-18) | 4% |

NI = 91.1°C; Tc < -20°C; Δn = 0.129; Δε = -4.4; Vth = 2.24 V; η = 26.9 mPa·s. [0166]

**Composition M12**

| | | |
|---|---|---|
| V-HB(2F,3F)-O2 | (1-1) | 7% |

(continued)

| | | |
|---|---|---|
| V2-HB(2F,3F)-O2 | (1-1) | 7% |
| V2-BB(2F,3F)-O2 | (1-4) | 8% |
| V-HHB(2F,3F)-O2 | (1-6) | 4% |
| V-HHB(2F,3F)-O4 | (1-6) | 5% |
| 1V-HH1OB(2F,3F)-O2 | (1-8) | 5% |
| V2-BB(2F,3F)B-1 | (1-9) | 4% |
| V-HBB (2F,3F)-O2 | (1-10) | 3% |
| V-HBB(2F,3F)-O4 | (1-10) | 8% |
| 3-HH-V | (2-1) | 33% |
| V-HHB-1 | (2-5) | 3% |
| 3-HHB(2F,3F)-O2 | (3-6) | 7% |
| 2-HchB(2F,3F)-O2 | (3-19) | 6% |

NI = 71.7°C; Tc < -20°C; Δn = 0.099; Δε = -3.1; Vth = 2.10 V; η = 13.5 mPa·s.

**Composition M13**

| | | |
|---|---|---|
| V-H1OB(2F,3F)-O4 | (1-3) | 6% |
| V2-H1OB(2F,3F)-O4 | (1-3) | 4% |
| V2-BB(2F,3F)-O2 | (1-4) | 3% |
| V-HH1OB(2F,3F)-O2 | (1-8) | 14% |
| V-HBB(2F,3F)-O2 | (1-10) | 7% |
| V-HBB(2F,3F)-O4 | (1-10) | 11% |
| 2-HH-3 | (2-1) | 5% |
| 3-HH-VFF | (2-1) | 30% |
| 1-BB-3 | (2-3) | 5% |
| 3-HHB-1 | (2-5) | 3% |
| 3-HBB-2 | (2-6) | 3% |
| 3-HBB(2F,3F)-O2 | (3-10) | 6% |
| 5-BB(2F)B(2F,3F)-O2 | (3-20) | 3% |

NI = 76.4°C; Tc < -20°C; Δn = 0.108; Δε = -3.1; Vth = 2.18 V; η = 18.0 mPa·s.

**Composition M14**

| | | |
|---|---|---|
| V-HB(2F,3F)-O2 | (1-1) | 5% |
| V2-HB(2F,3F)-O2 | (1-1) | 7% |
| V2-BB(2F,3F)-O2 | (1-4) | 8% |
| V-HHB(2F,3F)-O2 | (1-6) | 5% |
| V-HHB(2F,3F)-O4 | (1-6) | 4% |
| 1V-HH1OB(2F,3F)-O2 | (1-8) | 5% |
| V2-BB(2F,3F)B-1 | (1-9) | 4% |
| V-HBB (2F,3F)-O2 | (1-10) | 3% |

(continued)

| | | |
|---|---|---|
| V-HBB(2F,3F)-O4 | (1-10) | 9% |
| 3-HH-V | (2-1) | 27% |
| 3-HH-V1 | (2-1) | 6% |
| V-HHB-1 | (2-5) | 5% |
| 3-HBB(2F,3F)-O2 | (3-10) | 5% |
| 5-HBB(2F,3CL)-O2 | (3-13) | 4% |
| 3-BB(F)B(2F,3F)-O2 | (3-21) | 3% |

NI = 76.3°C; Tc < -20°C; $\Delta n$ = 0.112; $\Delta\varepsilon$ = -3.1; Vth = 2.13 V; $\eta$ = 16.6 mPa·s.

**Composition M15**

| | | |
|---|---|---|
| V2-H2B(2F,3F)-O2 | (1-2) | 5% |
| V2-BB(2F,3F)-O2 | (1-4) | 8% |
| V-HHB(2F,3F)-O2 | (1-6) | 10% |
| V2-BB(2F,3F)B-1 | (1-9) | 5% |
| V2-HBB(2F,3F)-O2 | (1-10) | 7% |
| V-dhBB(2F,3F)-O2 | (1-17) | 4% |
| V2-dhBB(2F,3F)-O2 | (1-17) | 3% |
| 4-HH-V | (2-1) | 15% |
| 3-HH-V1 | (2-1) | 6% |
| 1-HH-2V1 | (2-1) | 6% |
| 3-HH-2V1 | (2-1) | 4% |
| V2-BB-1 | (2-3) | 5% |
| 1V2-BB-1 | (2-3) | 5% |
| 3-HHB-1 | (2-5) | 6% |
| 3-HB(F)BH-3 | (2-12) | 4% |
| 2-BB(2F,3F)-O2 | (3-4) | 3% |
| 2-BB(2F,3F)B-3 | (3-9) | 4% |

NI = 73.0°C; Tc < -20°C; $\Delta n$ = 0.124; $\Delta\varepsilon$ = -2.0; Vth = 2.80 V; $\eta$ = 15.5 mPa·s.

**Composition M16**

| | | |
|---|---|---|
| V-HB(2F,3F)-O4 | (1-1) | 6% |
| V2-H2B(2F,3F)-O2 | (1-2) | 8% |
| V-H1OB(2F,3F)-O2 | (1-3) | 5% |
| V2-BB(2F,3F)-O2 | (1-4) | 10% |
| V-HHB(2F,3F)-O2 | (1-6) | 6% |
| V2-HHB(2F,3F)-O2 | (1-6) | 6% |
| 1V-HHB(2F,3F)-O2 | (1-6) | 6% |
| V2-HBB(2F,3F)-O2 | (1-10) | 4% |
| V-HBB(2F,3F)-O2 | (1-10) | 7% |

(continued)

| | | |
|---|---|---|
| V-HBB(2F,3F)-O4 | (1-10) | 6% |
| V-HDhHB(2F,3F)-O2 | (1-16) | 3% |
| 3-HH-V | (2-1) | 11% |
| 1-BB-3 | (2-3) | 6% |
| 3-HHB-1 | (2-5) | 4% |
| 3-HHB-O1 | (2-5) | 4% |
| V2-BB2B-1 | (2-9) | 4% |
| 1-BB2B-2V | (2-9) | 4% |

NI = 83.4°C; Tc < -20°C; Δn = 0.131; Δε = -4.5; Vth = 2.20 V; η = 24.1 mPa·s.

The first additives are polar compounds (PC-1) to (PC-12).

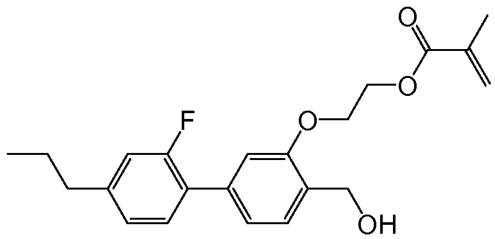

(PC-1)

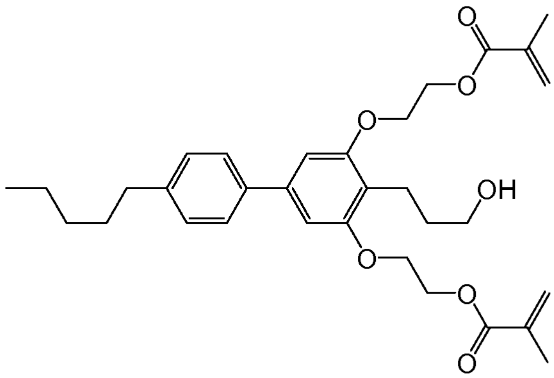

(PC-2)

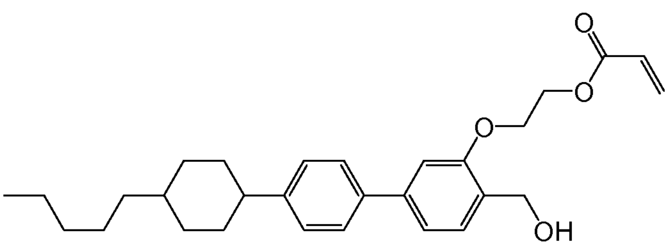

(PC-3)

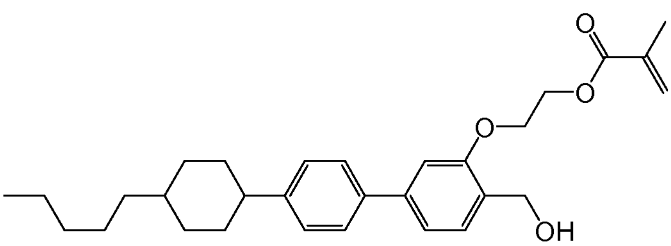

(PC-4)

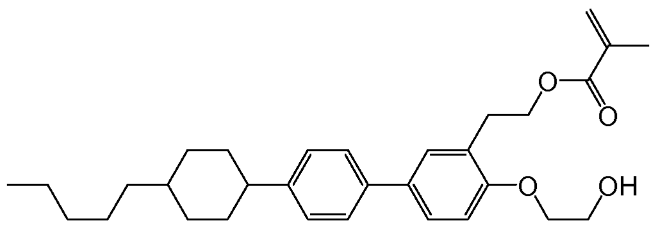

(PC-5)

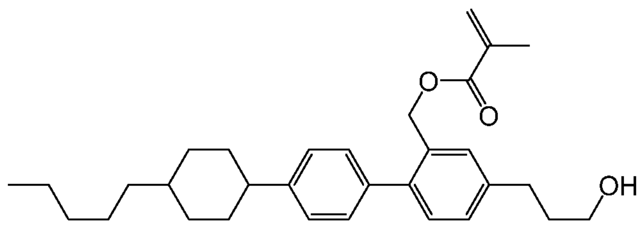

(PC-6)

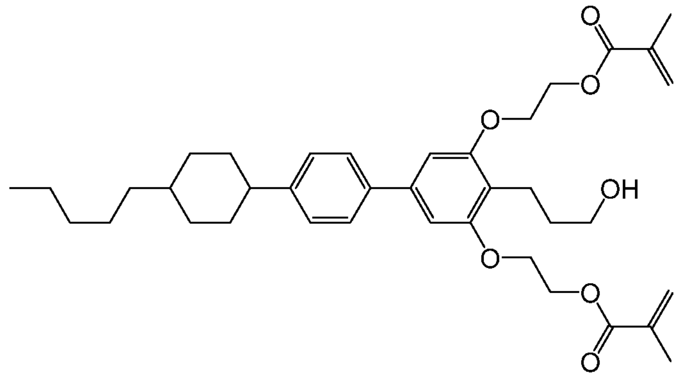

(PC-7)

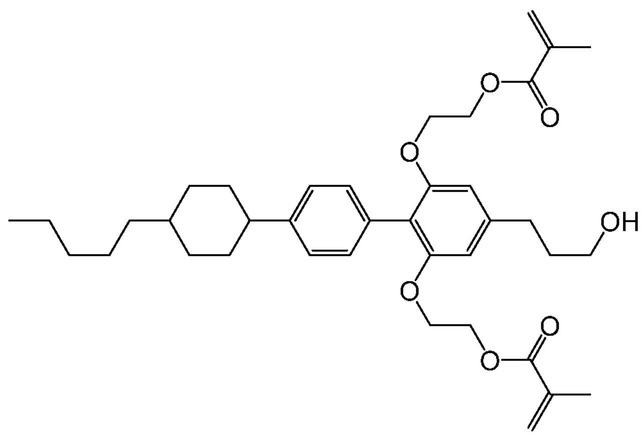

(PC-8)

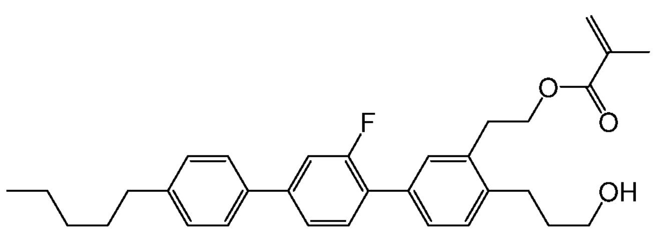

(PC-9)

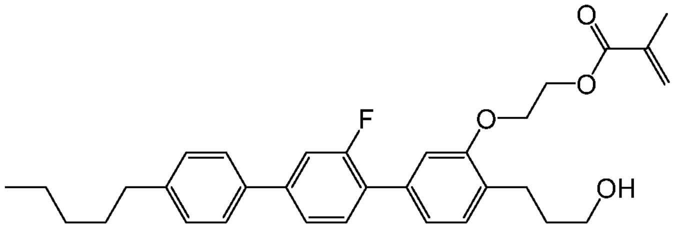

(PC-10)

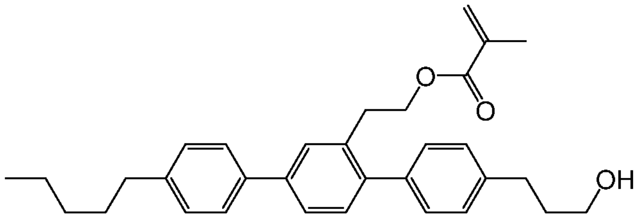

(PC-11)

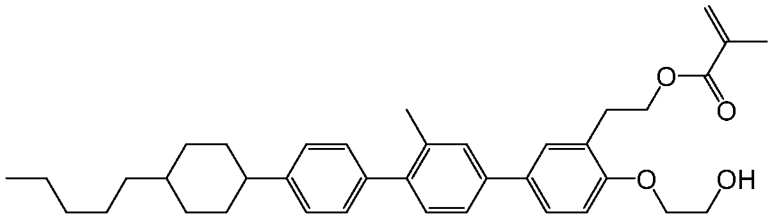

(PC-12)

The second additives are polymerizable compounds (RM-1) to (RM-11).

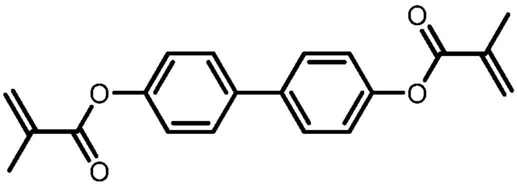

(RM-1)

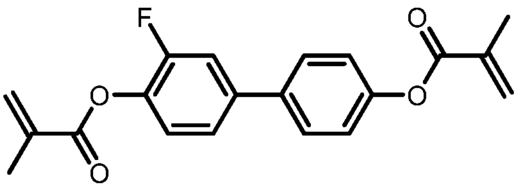

(RM-2)

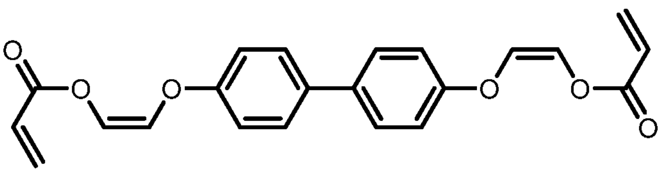

(RM-3)

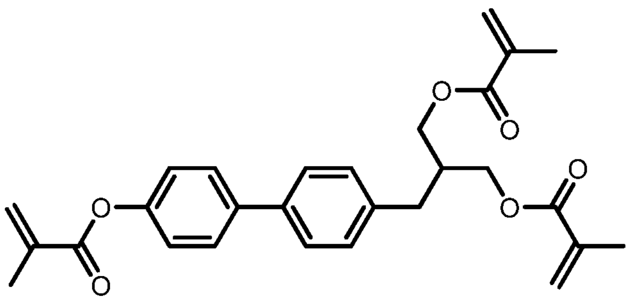

(RM-4)

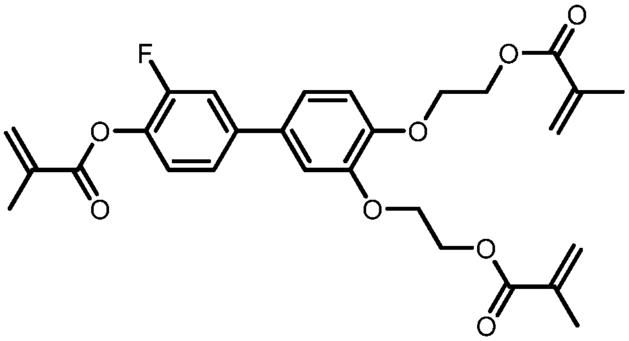

(RM-5)

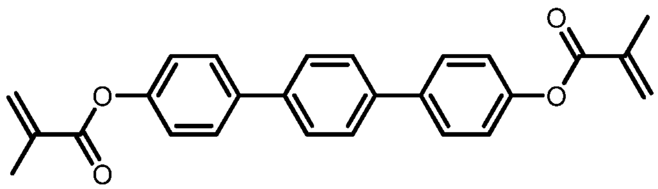

(RM-6)

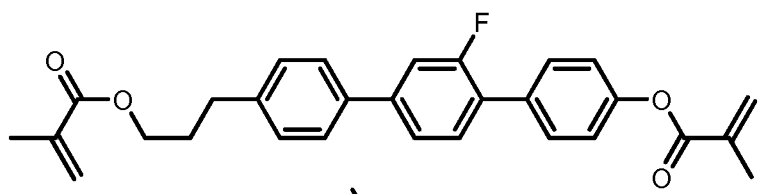

(RM-7)

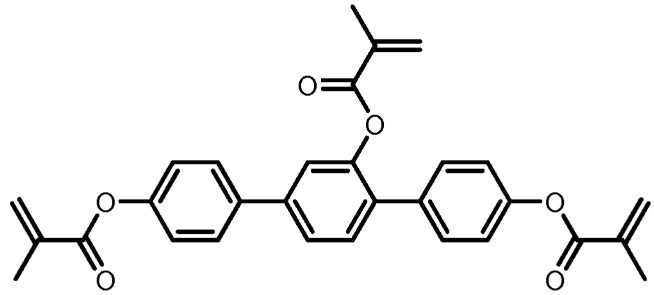

(RM-8)

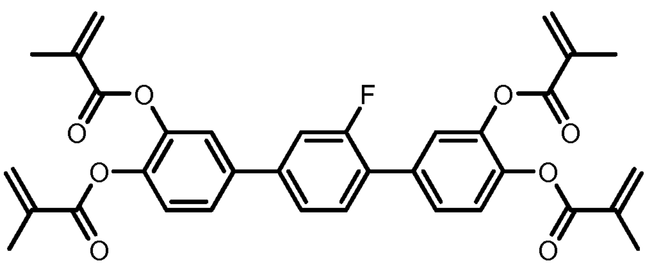

(RM-9)

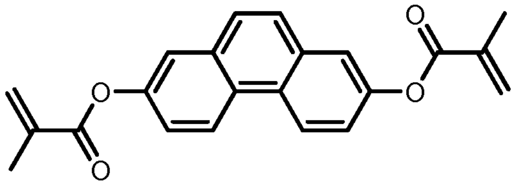

(RM-10)

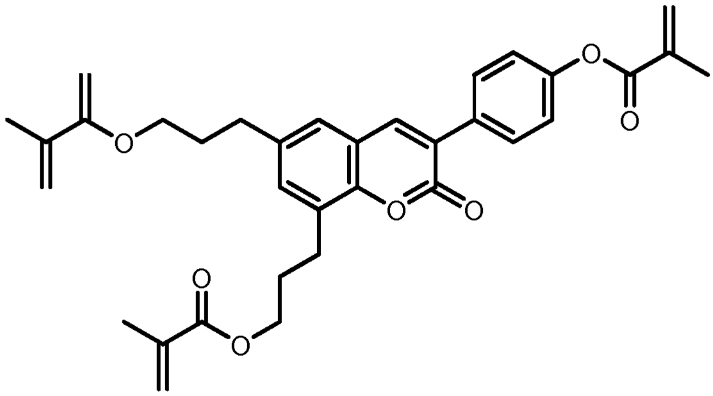

(RM-11)

2. Vertical alignment of liquid crystal molecules

**Example 1**

Polar compound (PC-1) was added to composition (MI) in a proportion of 5% by weight. The resulting mixture was injected, on a hot stage at 100°C, into a device having no alignment film in which a distance (cell gap) between two glass substrates was 4.0 micrometers. Polar compound (PC-1) was polymerized by irradiating the device with ultraviolet light (28J) using an ultra high-pressure mercury lamp USH-250-BY (made by Ushio, Inc.) . The device was set to a polarizing microscope in which a polarizer and an analyzer were arranged perpendicularly to each other, and irradiated with light from below, and presence or absence of light leakage was observed. When liquid crystal molecules were sufficiently aligned and no light passed through the device, the vertical alignment was taken as "Good." When light passing through the device was observed, the vertical alignment was expressed as "poor."

**Examples 2 to 16 and Comparative Example 1**

In Examples, a device having no alignment film was prepared by using a mixture prepared by adding a polar compound to a composition. Presence or absence of light leakage was observed in a manner similar to Example 1. The results are summarized in Table 4. In Example 16, polymerizable compound (PM-1) was also added in a proportion of 0.5% by weight. In Comparative Example 1, polar compound (PC-13) described below was selected for comparison. The compound has no polymerizable group, and therefore is different from compound (4).

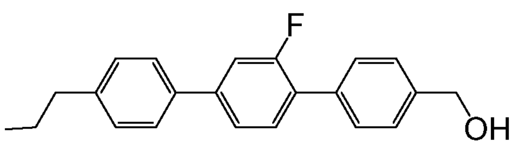

(PC-13)

Table 4. Vertical alignment of liquid crystal molecules

| Examples | Liquid crystal composition | Polar compound (5% by weight) | Polymerizable compound (0.5% by weight) | Vertical alignment |
|---|---|---|---|---|
| 1 | M1 | PC-1 | - | Good |
| 2 | M2 | PC-2 | - | Good |
| 3 | M3 | PC-3 | - | Good |

(continued)

| Examples | Liquid crystal composition | Polar compound (5% by weight) | Polymerizable compound (0.5% by weight) | Vertical alignment |
|---|---|---|---|---|
| 4 | M4 | PC-4 | - | Good |
| 5 | M5 | PC-5 | - | Good |
| 6 | M6 | PC-6 | - | Good |
| 7 | M7 | PC-7 | - | Good |
| 8 | M8 | PC-8 | - | Good |
| 9 | M9 | PC-9 | - | Good |
| 10 | M10 | PC-10 | - | Good |
| 11 | M11 | PC-11 | - | Good |
| 12 | M12 | PC-12 | - | Good |
| 13 | M13 | PC-1 | - | Good |
| 14 | M14 | PC-2 | - | Good |
| 15 | M15 | PC-3 | - | Good |
| 16 | M16 | PC-4 | RM-1 | Good |
| Comparative Example 1 | M1 | PC-13 | - | Poor |

As shown in Table 4, in Examples 1 to 16, a kind of the composition or the polar compound was changed, but no light leakage was observed. The above results indicate that the vertical alignment was good even without the alignment film in the device, and the liquid crystal molecules were stably aligned. In Example 16, polymerizable compound (RM-1) was further added, and the same results were obtained. On the other hand, in Comparative Example 1, light leakage was observed. The above results indicate that the vertical alignment was poor. Accordingly, a polymer formed of a polar compound having a polymerizable group is found to play a role important for the vertical alignment of liquid crystal molecules.

## Industrial Applicability

In a liquid crystal composition of the invention, alignment of liquid crystal molecules can be controlled in a device having no alignment film. A liquid crystal display device including the composition has characteristics such as a short response time, a large voltage holding ratio, low threshold voltage, a large contrast ratio and a long service life, and therefore can be used in a liquid crystal projector, a liquid crystal television and so forth.

## Claims

**1.** A liquid crystal composition that has negative dielectric anisotropy, and contains a compound represented by formula (1) as a first component:

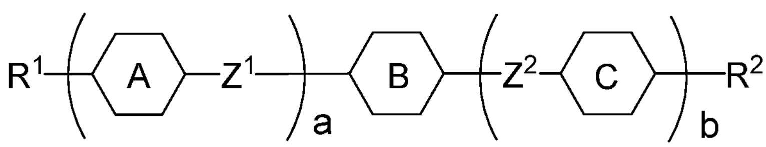

(1)

wherein, in formula (1), $R^1$ is alkenyl having 2 to 12 carbons, or alkenyl having 2 to 12 carbons in which at least one hydrogen is replaced by fluorine or chlorine; $R^2$ is alkyl having 1 to 12 carbons, alkoxy having 1 to 12 carbons, alkenyl having 2 to 12 carbons or alkenyloxy having 2 to 12 carbons; ring A and ring C are independently 1,4-cyclohexylene, 1,4-cyclohexenylene, tetrahydropyran-2,5-diyl, 1,4-phenylene, 1,4-phenylene in which at least one

hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring B is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^1$ and $Z^2$ are independently a single bond, $-CH_2CH_2-$, $-CH_2O-$, $-OCH_2-$, - COO- or -OCO-; and a is 1, 2 or 3, b is 0 or 1, and a sum of a and b is 3 or less, and

at least one polar compound having a polymerizable group selected from the group of compounds represented by formula (4) as a first additive:

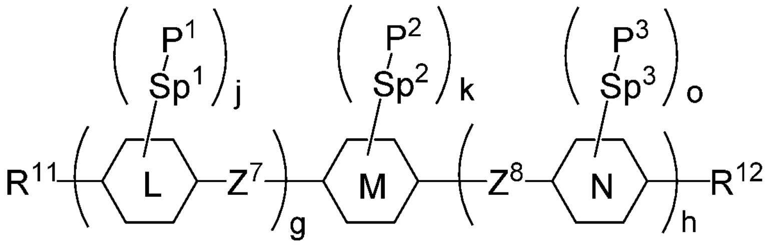

(4)

wherein, in formula (4), $R^{11}$ is hydrogen, fluorine, chlorine or alkyl having 1 to 25 carbons, and in the alkyl, at least one piece of $-CH_2-$ may be replaced by $-NR^0-$, -O-, -S-, -CO-, -CO-O-, -O-CO-, -O-CO-O- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons; $R^{12}$ is a polar group having at least one of an oxygen atom having an OH structure, a sulfur atom having an SH structure and a nitrogen atom having a primary, secondary or tertiary amine structure; ring L, ring M and ring N are independently 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; $Z^7$ and $Z^8$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$ may be replaced by -CH=CH-, - $C(CH_3)=CH-$, $-CH=C(CH_3)-$ or $-C(CH_3)=C(CH_3)-$, and in the groups, at least one hydrogen may be replaced by fluorine or chlorine; $P^1$, $P^2$ and $P^3$ are a polymerizable group; $Sp^1$, $Sp^2$ and $Sp^3$ are independently a single bond or alkylene having 1 to 10 carbons, and in the alkylene, at least one piece of - $CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine, chlorine, $-OCO-CH=CH_2$ or $-OCO-C(CH_3)=CH_2$; g and h are independently 0, 1, 2, 3 or 4, and a sum of g and h is 0, 1, 2, 3 or 4; j and o are independently 0, 1, 2, 3 or 4; and k is 1, 2, 3 or 4.

**2.** The liquid crystal composition according to claim 1, containing a compound selected from the group of compounds represented by formula (1-1) to formula (1-21) as the first component:

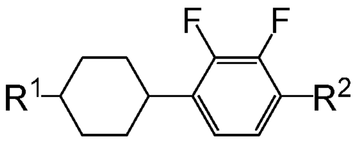

(1-1)

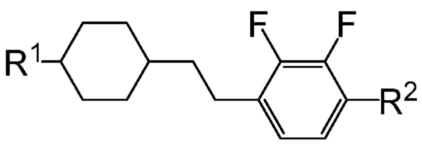

(1-2)

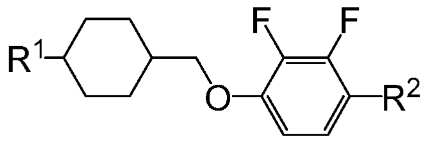

(1-3)

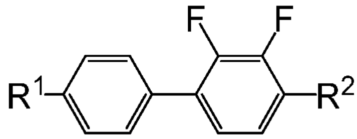

(1-4)

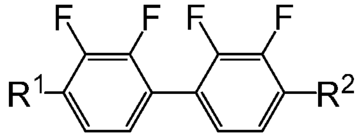

(1-5)

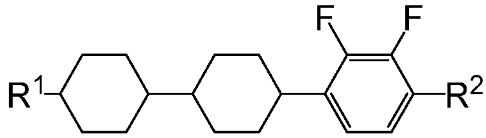

(1-6)

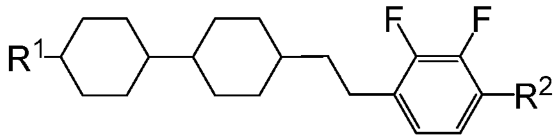

(1-7)

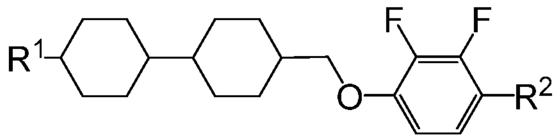

(1-8)

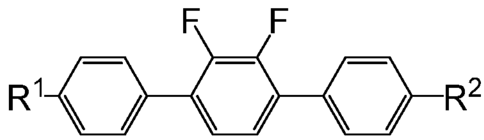

(1-9)

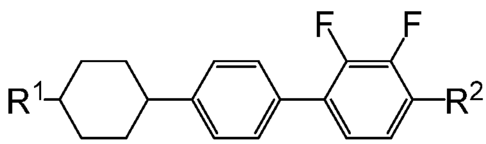

(1-10)

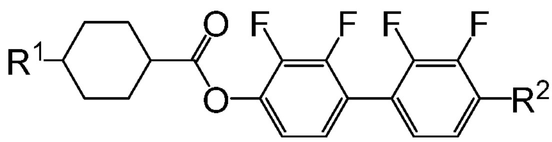

(1-11)

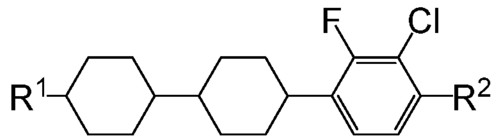

(1-12)

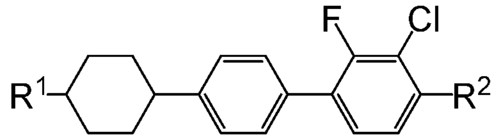

(1-13)

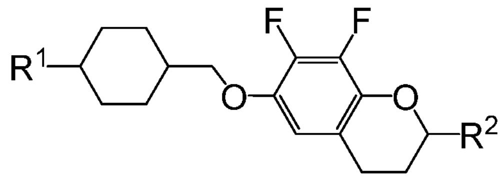

(1-14)

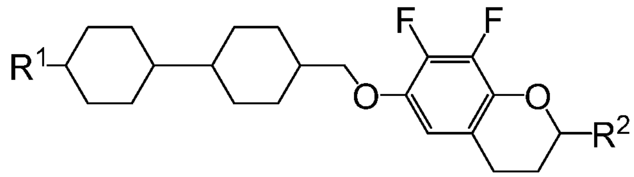

(1-15)

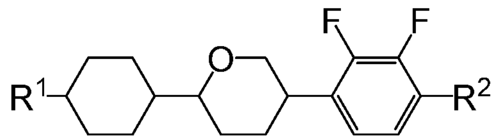

(1-16)

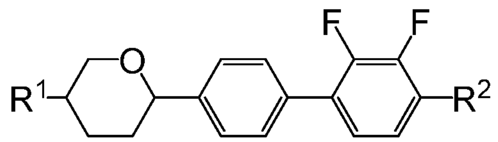

(1-17)

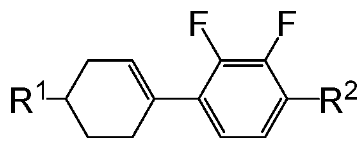

(1-18)

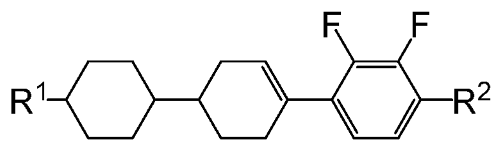

(1-19)

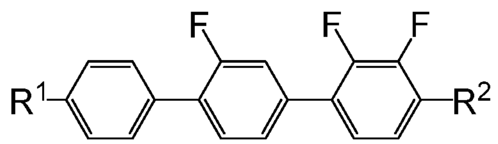

(1-20)

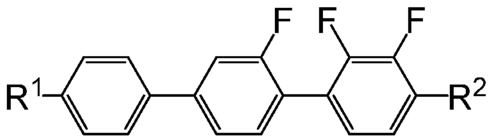

(1-21)

wherein, in formula (1-1) to formula (1-21), $R^1$ is alkenyl having 2 to 12 carbons, or alkenyl having 2 to 12 carbons in which at least one hydrogen is replaced by fluorine or chlorine; and $R^2$ is alkyl having 1 to 12 carbons, alkoxy having 1 to 12 carbons, alkenyl having 2 to 12 carbons or alkenyloxy having 2 to 12 carbons.

**3.** The liquid crystal composition according to claim 1 or 2, wherein a proportion of the first component is in the range of 5% by weight to 85% by weight based on the weight of the liquid crystal composition.

**4.** The liquid crystal composition according to any one of claims 1 to 3, containing a compound represented by formula (2) as a second component:

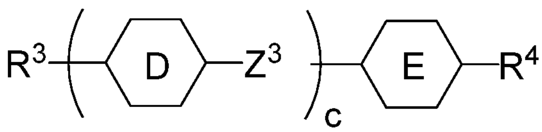

(2)

wherein, in formula (2), $R^3$ and $R^4$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine; ring D and ring E are independently 1,4-cyclohexylene, 1,4-phenylene, 2-fluoro-1,4-phenylene or 2,5-difluoro-1,4-phenylene; $Z^3$ is a single bond, $-CH_2CH_2-$, $-CH_2O-$, $-OCH_2-$, -COO- or -OCO-; and c is 1, 2 or 3.

**5.** The liquid crystal composition according to any one of claims 1 to 4, containing a compound selected from the group of compounds represented by formula (2-1) to formula (2-13) as the second component:

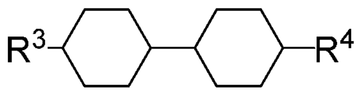

(2-1)

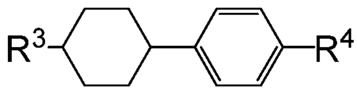

(2-2)

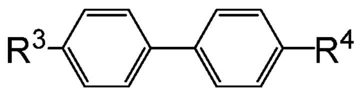

(2-3)

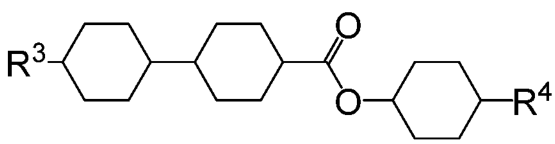

(2-4)

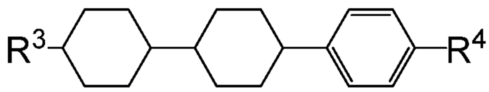

(2-5)

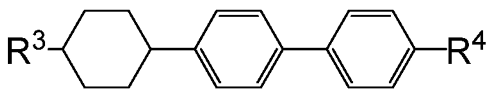

(2-6)

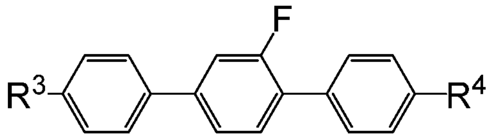

(2-7)

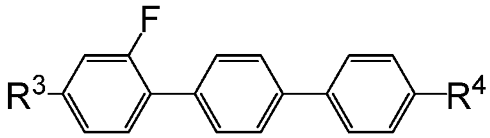

(2-8)

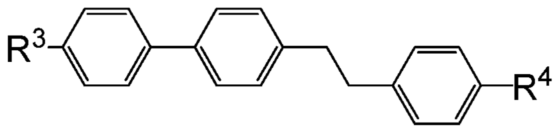

(2-9)

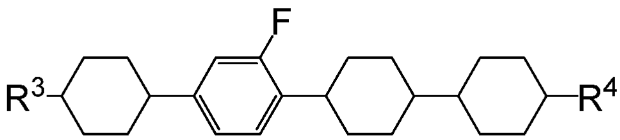

(2-10)

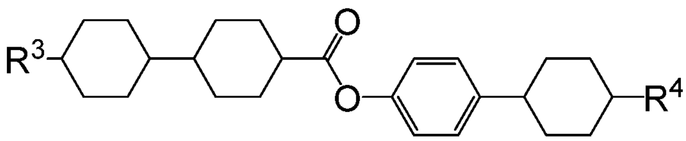

(2-11)

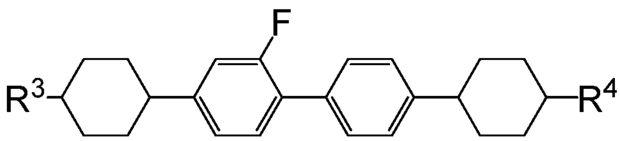

(2-12)

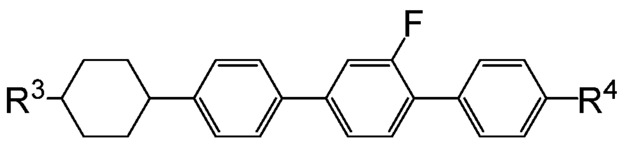

(2-13)

wherein, in formula (2-1) to formula (2-13), $R^3$ and $R^4$ are independently alkyl having 1 to 12 carbons, alkoxy having 1 to 12 carbons, alkenyl having 2 to 12 carbons, or alkenyl having 2 to 12 carbons in which at least one hydrogen is replaced by fluorine or chlorine.

**6.** The liquid crystal composition according to claim 4 or 5, wherein a proportion of the second component is in the range of 5% by weight to 65% by weight based on the weight of the liquid crystal composition.

**7.** The liquid crystal composition according to any one of claims 1 to 6, containing a compound represented by formula (3) as a third component:

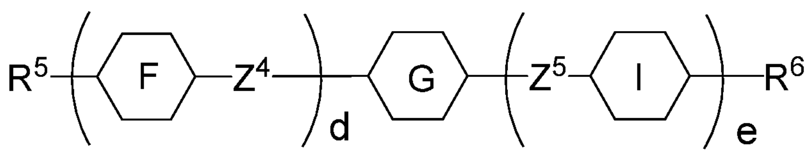

(3)

wherein, in formula (3), $R^5$ and $R^6$ are independently alkyl having 1 to 12 carbons or alkoxy having 1 to 12 carbons; ring F and ring I are independently 1,4-cyclohexylene, 1,4-cyclohexenylene, tetrahydropyran-2,5-diyl, 1,4-phenylene, 1,4-phenylene in which at least one hydrogen is replaced by fluorine or chlorine, naphthalene-2,6-diyl, naphthalene-2,6-diyl in which at least one hydrogen is replaced by fluorine or chlorine, chroman-2,6-diyl, or chroman-2,6-diyl in which at least one hydrogen is replaced by fluorine or chlorine; ring G is 2,3-difluoro-1,4-phenylene, 2-chloro-3-fluoro-1,4-phenylene, 2,3-difluoro-5-methyl-1,4-phenylene, 3,4,5-trifluoronaphthalene-2,6-diyl or 7,8-difluorochroman-2,6-diyl; $Z^4$ and $Z^5$ are independently a single bond, $-CH_2CH_2-$, $-CH_2O-$, $-OCH_2-$, -COO- or -OCO-; d is 1, 2 or 3; e is 0 or 1; and a sum of d and e is 3 or less.

8. The liquid crystal composition according to any one of claims 1 to 7, containing a compound selected from the group of compounds represented by formula (3-1) to formula (3-21) as the third component:

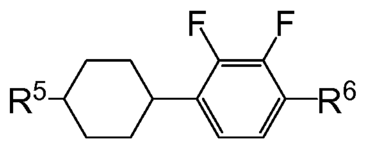
(3-1)

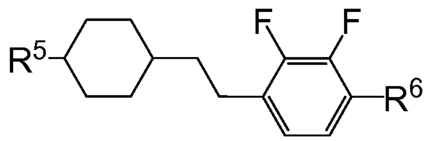
(3-2)

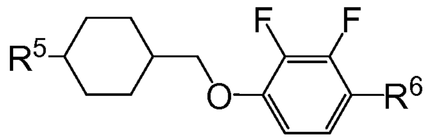
(3-3)

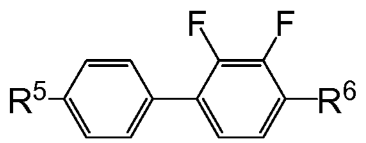
(3-4)

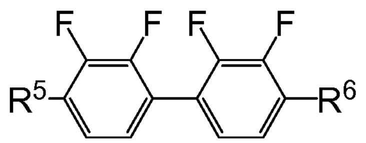
(3-5)

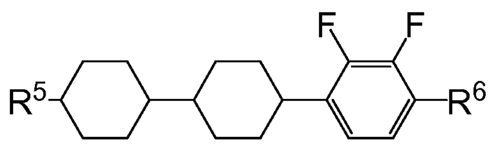
(3-6)

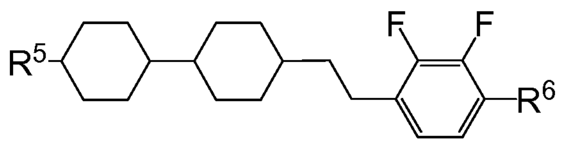
(3-7)

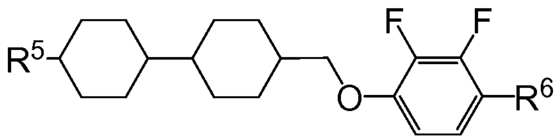

(3-8)

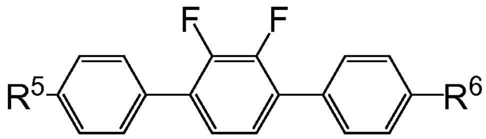

(3-9)

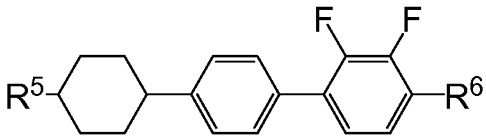

(3-10)

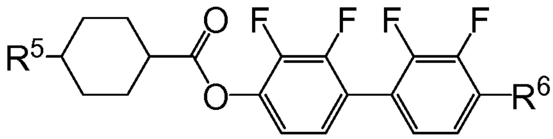

(3-11)

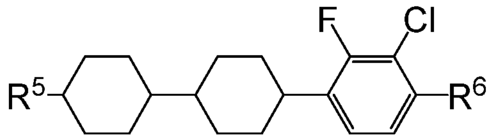

(3-12)

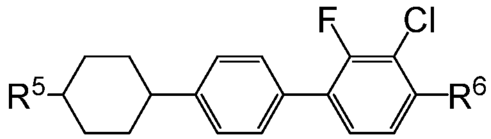

(3-13)

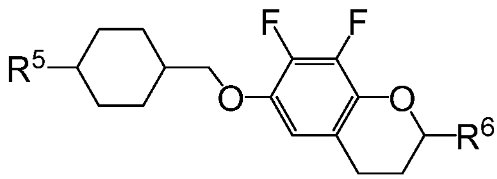

(3-14)

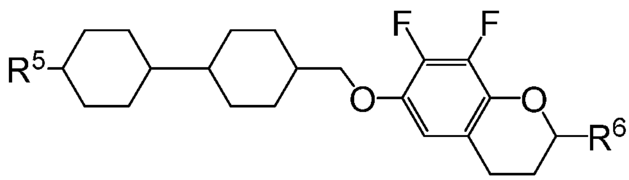

(3-15)

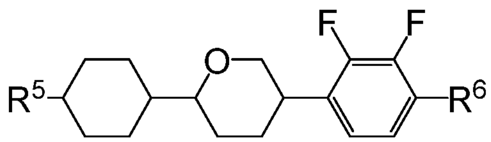

(3-16)

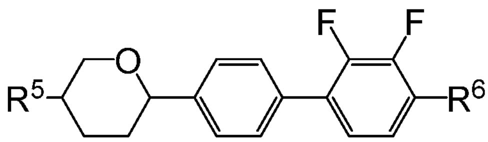

(3-17)

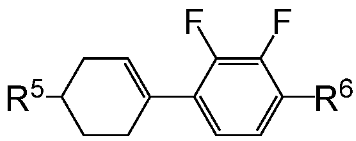

(3-18)

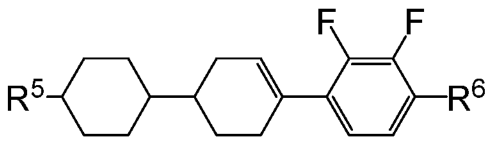

(3-19)

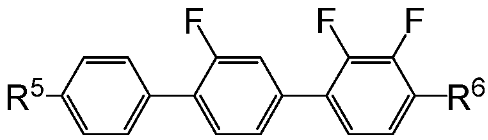

(3-20)

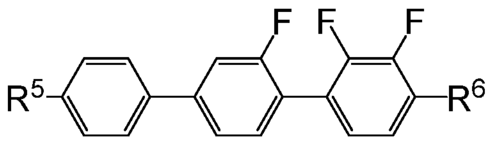

(3-21)

wherein, in formula (3-1) to formula (3-21), $R^5$ and $R^6$ are independently alkyl having 1 to 12 carbons or alkoxy having 1 to 12 carbons.

**9.** The liquid crystal composition according to any one of claims 1 to 8, wherein, in formula (4) described in claim 1, $P^1$, $P^2$ and $P^3$ are independently a polymerizable group selected from the group of groups represented by formula (P-1) to formula (P-5):

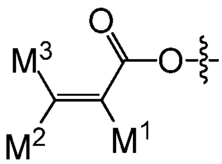

(P-1)

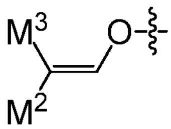

(P-2)

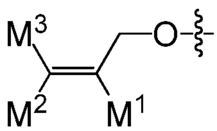

(P-3)

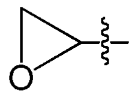

(P-4)

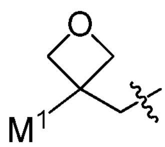

(P-5)

wherein, in formula (P-1) to formula (P-5), $M^1$, $M^2$ and $M^3$ are independently hydrogen, fluorine, alkyl having 1 to 5 carbons, or alkyl having 1 to 5 carbons in which at least one hydrogen is replaced by fluorine or chlorine.

**10.** The liquid crystal composition according to any one of claims 1 to 9, wherein the first additive is a polar compound selected from the group of compounds represented by formula (4-1) to formula (4-15):

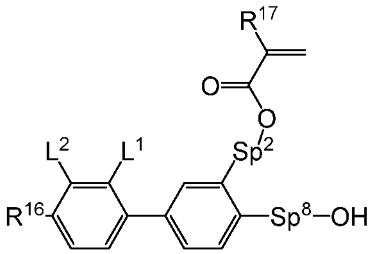

(4-1)

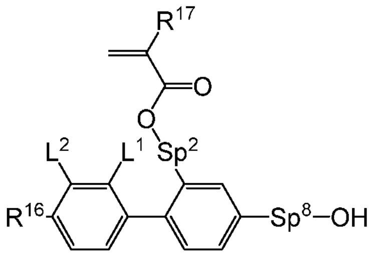

(4-2)

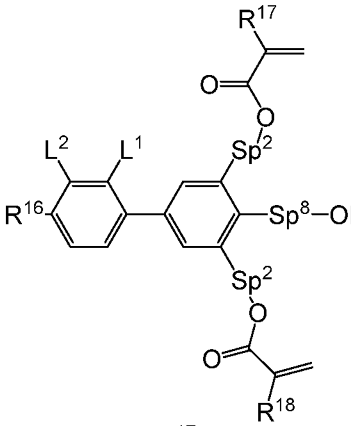

(4-3)

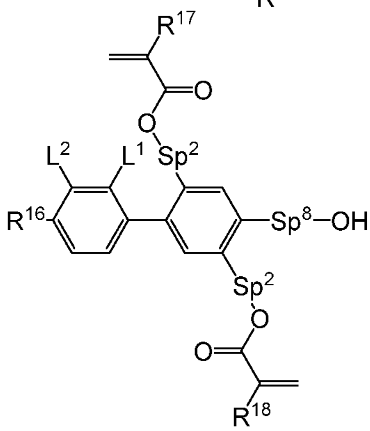

(4-4)

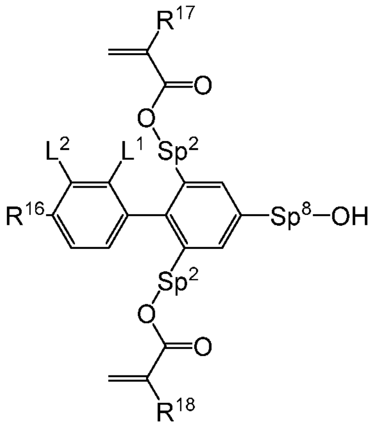

(4-5)

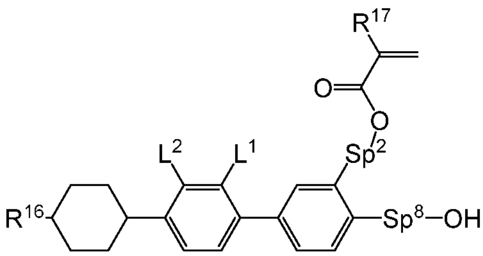

(4-6)

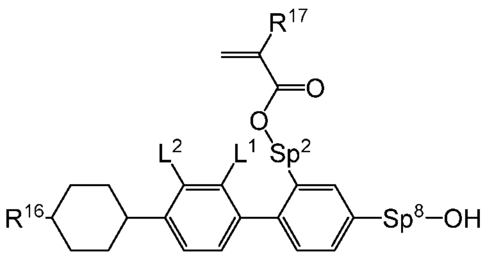

(4-7)

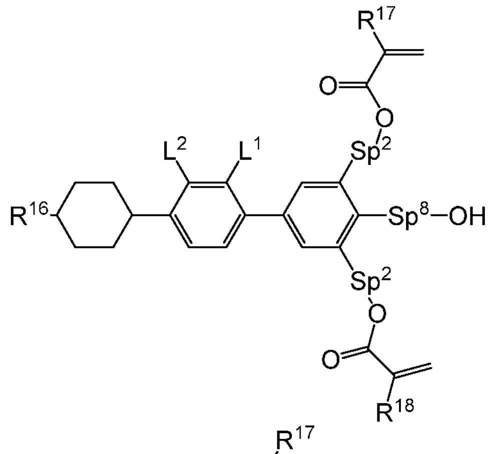
(4-8)

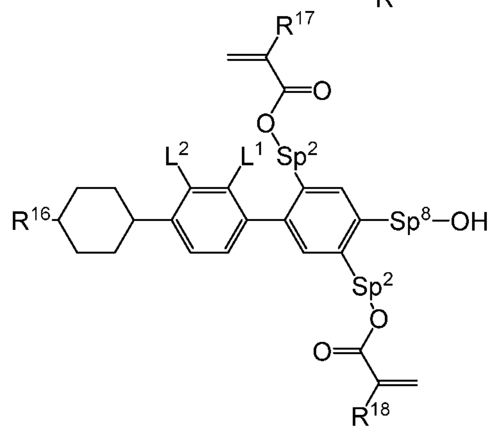
(4-9)

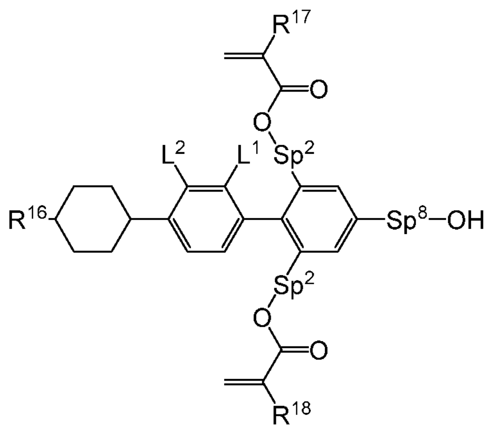
(4-10)

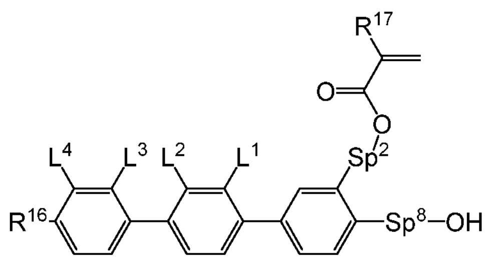
(4-11)

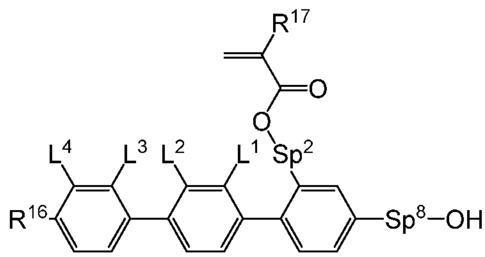

(4-12)

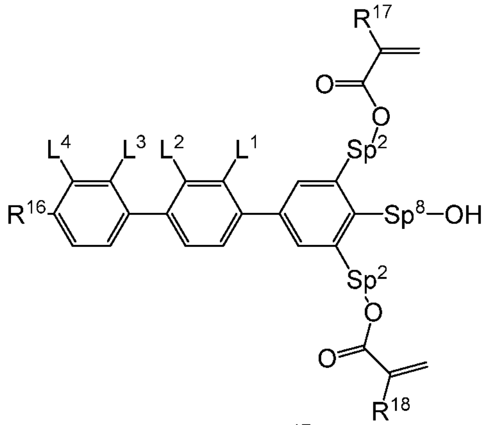

(4-13)

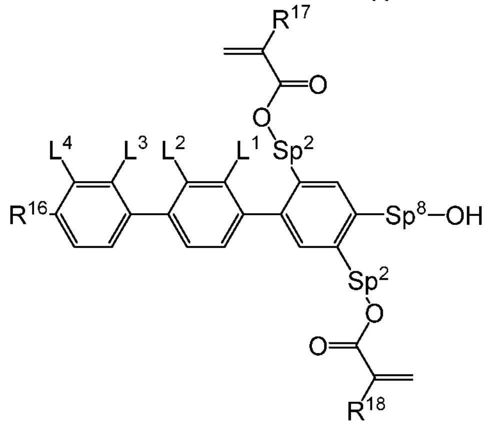

(4-14)

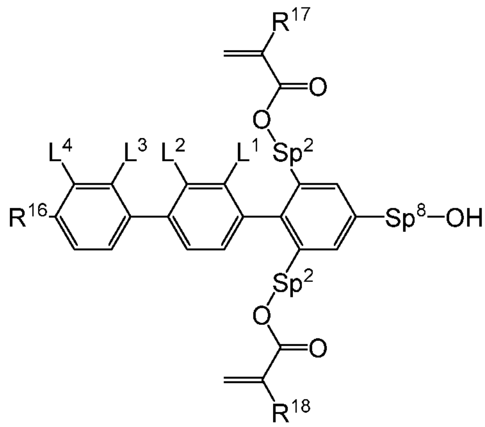

(4-15)

wherein, in formula (4-1) to formula (4-15), $R^{16}$ is hydrogen, fluorine, chlorine or alkyl having 1 to 25 carbons, and in the alkyl, at least one piece of $-CH_2-$ may be replaced by $-NR^0-$, -O-, -S-, -CO-, -CO-O-, -O-CO-, -O-COO- or cycloalkylene having 3 to 8 carbons, and at least one tertiary carbon (>CH-) may be replaced by nitrogen (>N-), and in the groups, at least one hydrogen may be replaced by fluorine or chlorine, in which $R^0$ is hydrogen or alkyl having 1 to 12 carbons; $Sp^2$ is a single bond or alkylene having 1 to 10 carbons, and in the alkylene, at least one

piece of $-CH_2-$ may be replaced by -O-, -COO-, -OCO- or -OCOO-, and at least one piece of $-CH_2CH_2-$ may be replaced by -CH=CH- or -C≡C-, and in the groups, at least one hydrogen may be replaced by fluorine, chlorine, $-OCO-CH=CH_2$ or $-OCO-C(CH_3)=CH_2$; $Sp^8$ is a single bond, alkylene having 1 to 5 carbons, or alkylene having 1 to 5 carbons in which one piece of $-CH_2-$ is replaced by -O-; $L^1$, $L^2$, $L^3$ and $L^4$ are independently hydrogen, fluorine, methyl or ethyl; and $R^{17}$ and $R^{18}$ are independently hydrogen or methyl.

**11.** The liquid crystal composition according to any one of claims 1 to 10, wherein a proportion of the first additive is in the range of 0.05% by weight to 10% by weight based on the weight of the liquid crystal composition.

**12.** The liquid crystal composition according to any one of claims 1 to 11, containing a polymerizable compound selected from the group of compounds represented by formula (6) as a second additive:

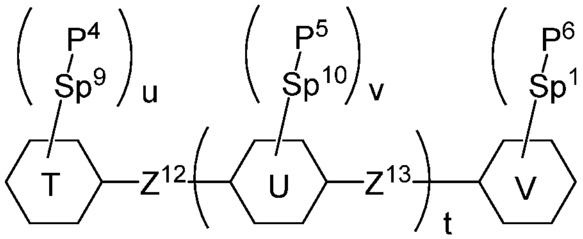

(6)

wherein, in formula (6), ring T and ring V are independently cyclohexyl, cyclohexenyl, phenyl, 1-naphthyl, 2-naphthyl, tetrahydropyran-2-yl, 1,3-dioxane-2-yl, pyrimidine-2-yl or pyridine-2-yl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; ring U is 1,4-cyclohexylene, 1,4-cyclohexenylene, 1,4-phenylene, naphthalene-1,2-diyl, naphthalene-1,3-diyl, naphthalene-1,4-diyl, naphthalene-1,5-diyl, naphthalene-1,6-diyl, naphthalene-1,7-diyl, naphthalene-1,8-diyl, naphthalene-2,3-diyl, naphthalene-2,6-diyl, naphthalene-2,7-diyl, tetrahydropyran-2,5-diyl, 1,3-dioxane-2,5-diyl, pyrimidine-2,5-diyl or pyridine-2,5-diyl, and in the rings, at least one hydrogen may be replaced by fluorine, chlorine, alkyl having 1 to 12 carbons, alkoxy having 1 to 12 carbons, or alkyl having 1 to 12 carbons in which at least one hydrogen is replaced by fluorine or chlorine; $Z^{12}$ and $Z^{13}$ are independently a single bond or alkylene having 1 to 10 carbons, and in the alkylene, at least one piece of $-CH_2-$ may be replaced by -O-, -CO-, -COO- or -OCO-, and at least one piece of $-CH_2CH_2-$ may be replaced by -CH=CH-, $-C(CH_3)=CH-$, $-CH=C(CH_3)-$ or - $C(CH_3)=C(CH_3)-$, and in the groups, at least one hydrogen may be replaced by fluorine or chlorine; $P^4$, $P^5$ and $P^6$ are a polymerizable group; $Sp^9$, $Sp^{10}$ and $Sp^{11}$ are independently a single bond or alkylene having 1 to 10 carbons, and in the alkylene, at least one piece of $-CH_2-$ may be replaced by -O-, -COO-, - OCO- or -OCOO-, and at least one piece of $-CH_2CH_2-$ may be replaced by - CH=CH- or -C≡C-, and in the groups, at least one hydrogen may be replaced by fluorine or chlorine; t is 0, 1 or 2; and u, v and w are independently 0, 1, 2, 3 or 4, and a sum of u, v and w is 1 or more.

**13.** A liquid crystal display device having no alignment film, wherein the liquid crystal display device includes the liquid crystal composition according to any one of claims 1 to 12, the first additive in the liquid crystal composition is polymerized, or the first additive and the second additive are polymerized.

**14.** Use of the liquid crystal composition according to any one of claims 1 to 12 in a liquid crystal display device having no alignment film.

## Patentansprüche

**1.** Flüssigkristallzusammensetzung, die eine negative dielektrische Anisotropie aufweist und Folgendes enthält eine Verbindung der Formel (1) als erste Komponente:

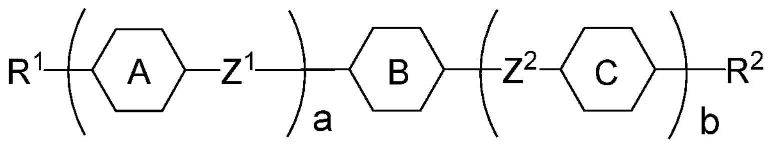

(1)

wobei in der Formel (1) $R^1$ Alkenyl mit 2 bis 12 Kohlenstoffen oder Alkenyl mit 2 bis 12 Kohlenstoffen ist, in dem zumindest ein Wasserstoff durch Fluor oder Chlor ersetzt ist; $R^2$ Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen ist; Ring A und Ring C unabhängig 1,4-Cyclohexylen, 1,4-Cyclohexenylen, Tetrahydropyran-2,5-diyl, 1,4-Phenylen, 1,4-Phenylen, in dem zumindest ein Wasserstoff durch Fluor oder Chlor ersetzt ist, Naphthalin-2,6-diyl, Naphthalin-2,6-diyl, in dem zumindest ein Wasserstoff durch Fluor oder Chlor ersetzt ist, Chroman-2,6-diyl oder Chroman-2,6-diyl ist, in dem zumindest ein Wasserstoff durch Fluor oder Chlor ersetzt ist; Ring B 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorochroman-2,6-diyl ist; $Z^1$ und $Z^2$ unabhängig eine Einfachbindung, $-CH_2CH_2-$, $-CH_2O-$, $-OCH_2-$, -COO- oder -OCO- sind; und a 1, 2 oder 3 ist, b 0 oder 1 ist, und eine Summe von a und b 3 oder weniger ist, und
zumindest eine polare Verbindung mit einer polymerisierbaren Gruppe, ausgewählt aus der Gruppe von Verbindungen der Formel (4), als erstes Additiv:

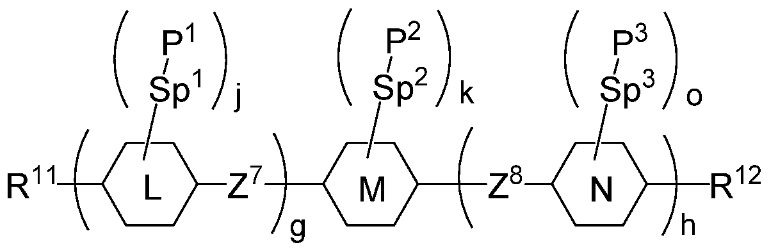

(4)

wobei in der Formel (4) $R^{11}$ Wasserstoff, Fluor, Chlor oder Alkyl mit 1 bis 25 Kohlenstoffen ist, und wobei in dem Alkyl zumindest ein Stück $-CH_2-$ durch $-NR^0-$, -O-, -S-, -CO-, -CO-O-, -O-CO-, -O-CO-O- oder Cycloalkylen mit 3 bis 8 Kohlenstoffen ersetzt sein kann, und zumindest ein tertiärer Kohlenstoff (>CH-) durch Stickstoff (>N-) ersetzt sein kann, und in den Gruppen kann zumindest ein Wasserstoff durch Fluor oder Chlor ersetzt werden, in denen $R^0$ Wasserstoff oder Alkyl mit 1 bis 12 Kohlenstoffen ist; $R^{12}$ eine polare Gruppe mit zumindest einem Sauerstoffatom mit einer OH-Struktur, einem Schwefelatom mit einer SH-Struktur und einem Stickstoffatom mit einer primären, sekundären oder tertiären Aminstruktur ist; Ring L, Ring M und Ring N unabhängig 1,4-Cyclohexylen, 1,4-Cyclohexenylen, 1,4-Phenylen, Naphthalin-1,2-diyl, Naphthalin-1,3-diyl, Naphthalin-1,4-diyl, Naphthalin-1,5-diyl, Naphthalin-1,6-diyl, Naphthalin-1,7-diyl, Naphthalin-1,8-diyl, Naphthalin-2,3-diyl, Naphthalin-2,6-diyl, Naphthalin-2,7-diyl, Tetrahydropyran-2,5-diyl, 1,3-Dioxan-2,5-diyl, Pyrimidin-2,5-diyl oder Pyridin-2,5-diyl sind, und in den Ringen zumindest ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, in dem zumindest ein Wasserstoff durch Fluor oder Chlor ersetzt ist, ersetzt sein kann; $Z^7$ und $Z^8$ unabhängig eine Einfachbindung oder Alkylen mit 1 bis 10 Kohlenstoffen sind, und in dem Alkylen zumindest ein Stück $-CH_2-$ durch -O-, -CO-, -COO- oder -OCO- ersetzt werden kann, und zumindest ein Stück $-CH_2CH_2-$ durch -CH=CH-, $-C(CH_3)=CH-$, $-CH=C(CH_3)-$ oder $-C(CH_3)=C(CH_3)-$ersetzt sein kann, und in den Gruppen kann zumindest ein Wasserstoff durch Fluor oder Chlor ersetzt sein; $P^1$, $P^2$ und $P^3$ eine polymerisierbare Gruppe sind; $Sp^1$, $Sp^2$ und $Sp^3$ unabhängig eine Einfachbindung oder Alkylen mit 1 bis 10 Kohlenstoffen sind, und in dem Alkylen zumindest ein Stück $-CH_2-$ durch -O-, -COO-, -OCO- oder -OCOOersetzt sein kann, und zumindest ein Stück $-CH_2CH_2-$ durch -CH=CH- oder -C≡C- ersetzt sein kann, und in den Gruppen zumindest ein Wasserstoff durch Fluor, Chlor, $-OCO-CH=CH_2$ oder $-OCO-C(CH_3)=CH_2$ ersetzt sein kann; g und h unabhängig 0, 1, 2, 3 oder 4 sind, und eine Summe von g und h 0, 1, 2, 3 oder 4 ist; j und o unabhängig 0, 1, 2, 3 oder 4 sind; und k 1, 2, 3 oder 4 ist.

2. Flüssigkristallzusammensetzung nach Anspruch 1, enthaltend eine Verbindung, ausgewählt aus der Gruppe der Verbindungen der Formel (1-1) bis Formel (1-21), als erste Komponente:

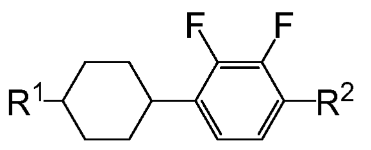

(1-1)

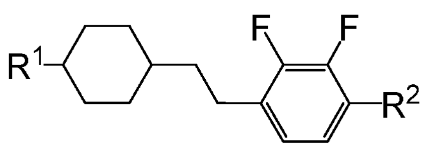

(1-2)

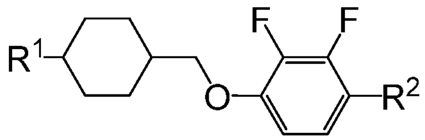

(1-3)

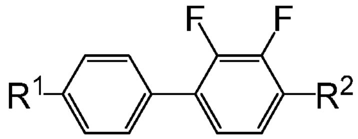

(1-4)

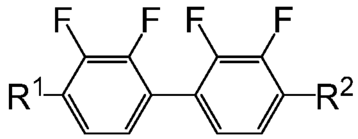

(1-5)

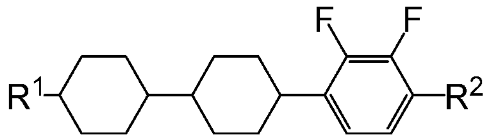

(1-6)

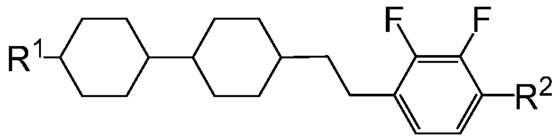

(1-7)

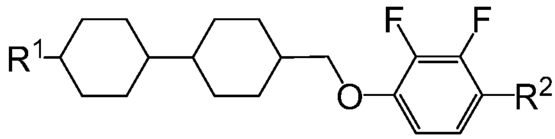

(1-8)

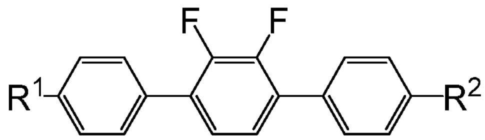

(1-9)

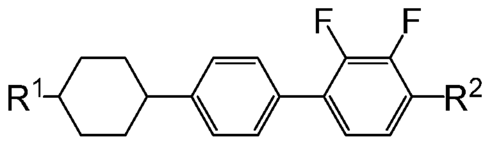

(1-10)

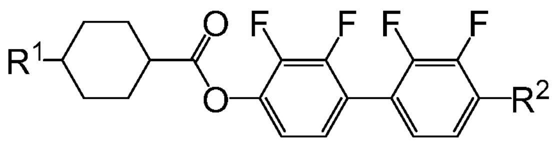

(1-11)

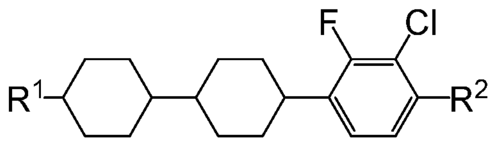
(1-12)

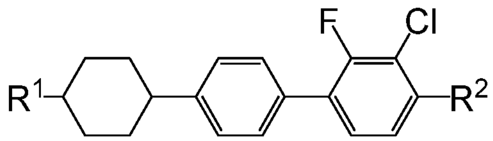
(1-13)

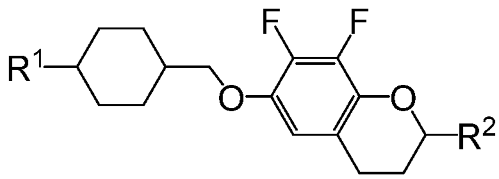
(1-14)

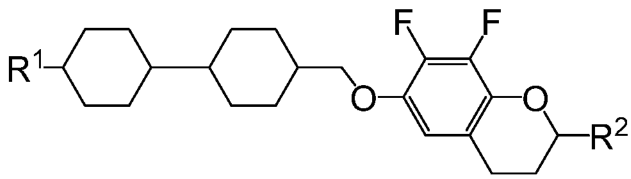
(1-15)

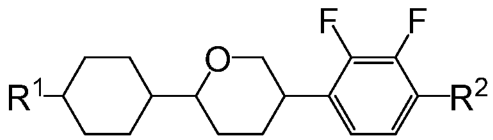
(1-16)

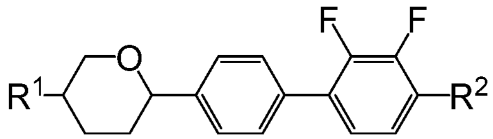
(1-17)

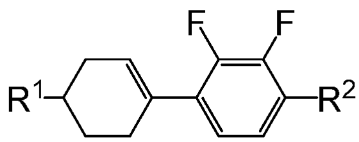
(1-18)

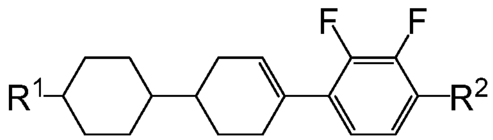
(1-19)

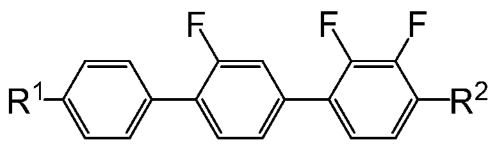
(1-20)

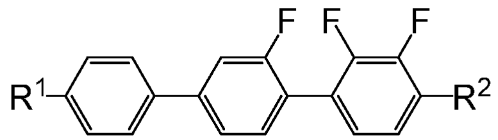

(1-21)

wobei in der Formel (1-1) bis Formel (1-21) $R^1$ Alkenyl mit 2 bis 12 Kohlenstoffen oder Alkenyl mit 2 bis 12 Kohlenstoffen ist, in dem zumindest ein Wasserstoff durch Fluor oder Chlor ersetzt ist; und $R^2$ Alkyl mit 1 bis 12 Kohlenstoffen, Alkoxy mit 1 bis 12 Kohlenstoffen, Alkenyl mit 2 bis 12 Kohlenstoffen oder Alkenyloxy mit 2 bis 12 Kohlenstoffen ist.

**3.** Flüssigkristallzusammensetzung nach Anspruch 1 oder 2, wobei ein Anteil der ersten Komponente im Bereich von 5 Gew.-% bis 85 Gew.-%, bezogen auf das Gewicht der Flüssigkristallzusammensetzung, liegt.

**4.** Flüssigkristallzusammensetzung nach einem der Ansprüche 1 bis 3, enthaltend eine Verbindung der Formel (2) als eine zweite Komponente:

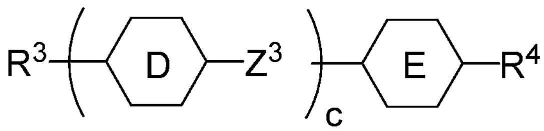

(2)

wobei in der Formel (2) $R^3$ und $R^4$ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen sind, in dem zumindest ein Wasserstoff durch Fluor oder Chlor ersetzt ist; Ring D und Ring E unabhängig 1,4-Cyclohexylen, 1,4-Phenylen, 2-Fluor-1,4-phenylen oder 2,5-Difluor-1,4-phenylen sind; $Z^3$ eine Einfachbindung, $-CH_2CH_2-$, $-CH_2O-$, $-OCH_2-$, -COO- oder -OCO- ist; und c 1, 2 oder 3 ist.

**5.** Flüssigkristallzusammensetzung nach einem der Ansprüche 1 bis 4, enthaltend eine Verbindung, ausgewählt aus der Gruppe der Verbindungen der Formel (2-1) bis Formel (2-13), als zweite Komponente:

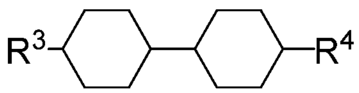

(2-1)

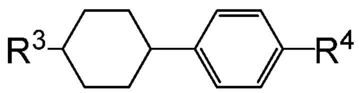

(2-2)

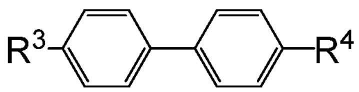

(2-3)

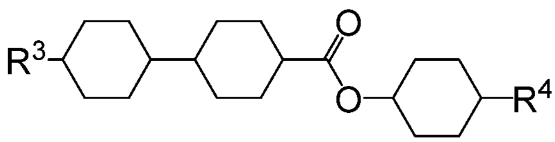

(2-4)

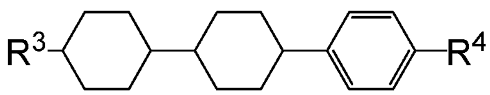

(2-5)

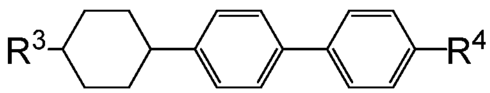

(2-6)

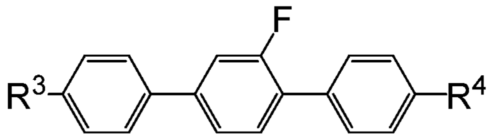

(2-7)

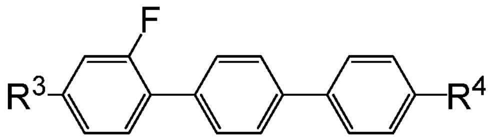

(2-8)

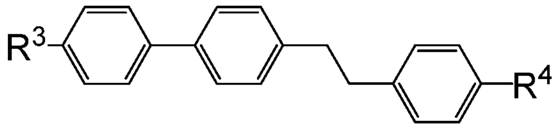

(2-9)

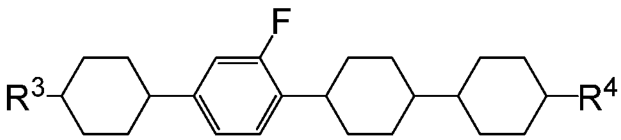

(2-10)

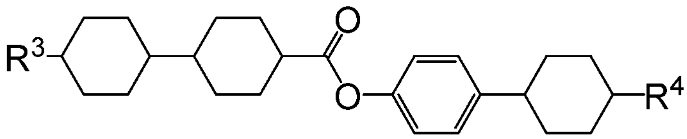

(2-11)

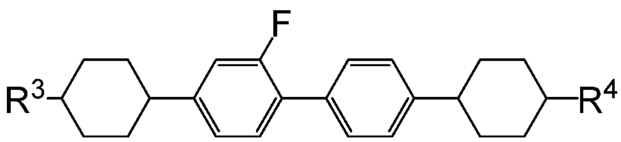

(2-12)

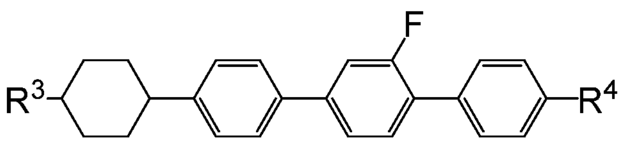

(2-13)

wobei in der Formel (2-1) bis Formel (2-13) $R^3$ und $R^4$ unabhängig Alkyl mit 1 bis 12 Kohlenstoffen, Alkoxy mit 1 bis 12 Kohlenstoffen, Alkenyl mit 2 bis 12 Kohlenstoffen oder Alkenyl mit 2 bis 12 Kohlenstoffen sind, in dem zumindest ein Wasserstoff durch Fluor oder Chlor ersetzt ist.

**6.** Flüssigkristallzusammensetzung nach Anspruch 4 oder 5, wobei ein Anteil der zweiten Komponente im Bereich von 5 Gew.-% bis 65 Gew.-%, bezogen auf das Gewicht der Flüssigkristallzusammensetzung, liegt.

**7.** Flüssigkristallzusammensetzung nach einem der Ansprüche 1 bis 6, enthaltend eine Verbindung der Formel (3) als eine dritte Komponente:

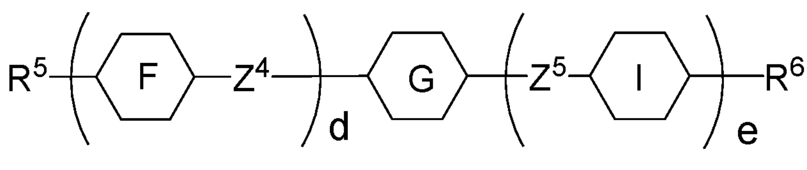

(3)

wobei in der Formel (3) $R^5$ und $R^6$ unabhängig Alkyl mit 1 bis 12 Kohlenstoffen oder Alkoxy mit 1 bis 12 Kohlenstoffen sind; Ring F und Ring I unabhängig 1,4-Cyclohexylen, 1,4-Cyclohexenylen, Tetrahydropyran-2,5-diyl, 1,4-Phenylen, 1,4-Phenylen, in dem zumindest ein Wasserstoff durch Fluor oder Chlor ersetzt ist, Naphthalin-2,6-diyl, Naphthalin-2,6-diyl, in dem zumindest ein Wasserstoff durch Fluor oder Chlor ersetzt ist, Chroman-2,6-diyl oder Chroman-2,6-diyl sind, in dem zumindest ein Wasserstoff durch Fluor oder Chlor ersetzt ist; Ring G 2,3-Difluor-1,4-phenylen, 2-Chlor-3-fluor-1,4-phenylen, 2,3-Difluor-5-methyl-1,4-phenylen, 3,4,5-Trifluornaphthalin-2,6-diyl oder 7,8-Difluorochroman-2,6-diyl ist; $Z^4$ und $Z^5$ unabhängig eine Einfachbindung, $-CH_2CH_2-$, $-CH_2O-$, $-OCH_2-$, -COO- oder - OCO- sind; d 1, 2 oder 3 ist; e 0 oder 1 ist; und eine Summe aus d und e 3 oder weniger ist.

**8.** Flüssigkristallzusammensetzung nach einem der Ansprüche 1 bis 7, enthaltend eine Verbindung, ausgewählt aus der Gruppe der Verbindungen, der Formel (3-1) bis Formel (3-21), als dritte Komponente:

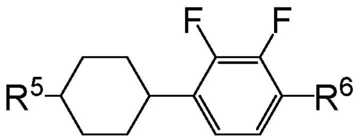
(3-1)

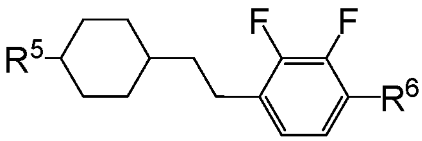
(3-2)

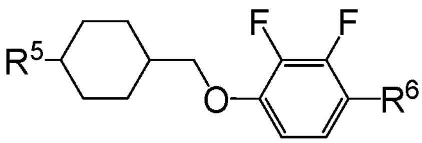
(3-3)

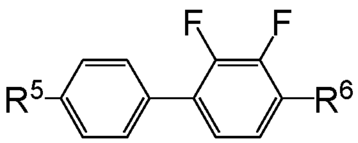
(3-4)

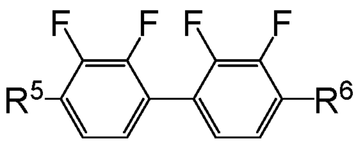
(3-5)

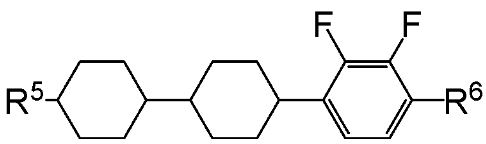
(3-6)

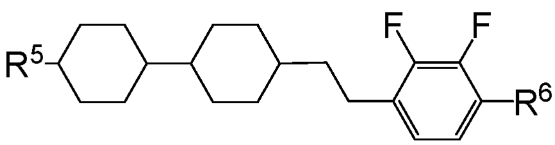
(3-7)

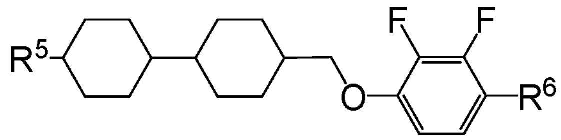
(3-8)

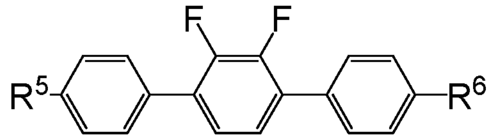
(3-9)

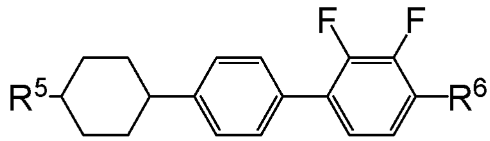
(3-10)

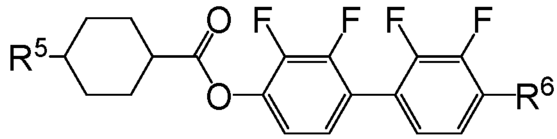
(3-11)

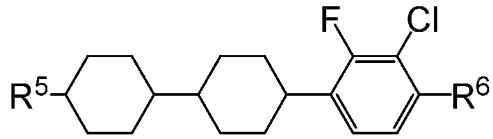
(3-12)

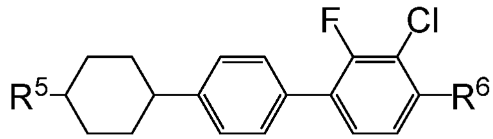
(3-13)

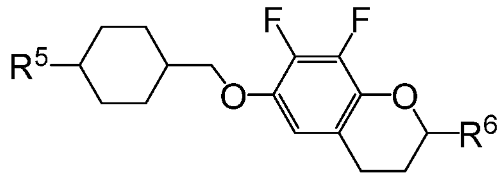
(3-14)

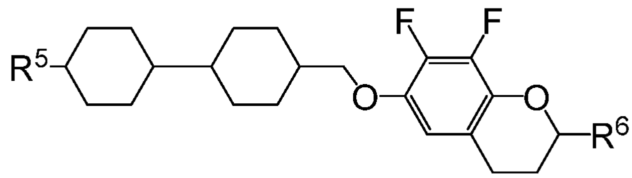
(3-15)

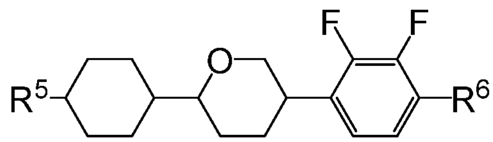
(3-16)

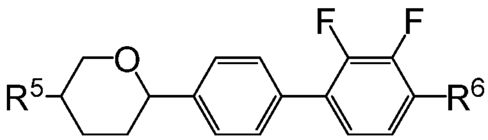

(3-17)

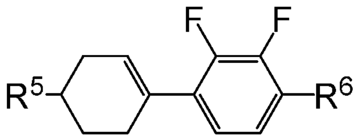

(3-18)

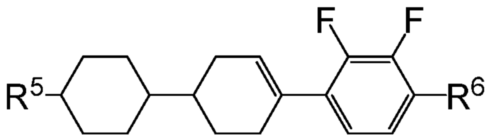

(3-19)

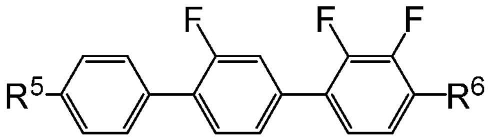

(3-20)

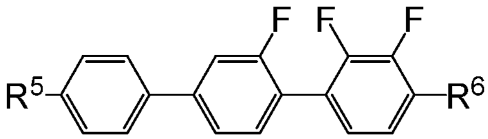

(3-21)

wobei in der Formel (3-1) bis Formel (3-21) $R^5$ und $R^6$ unabhängig Alkyl mit 1 bis 12 Kohlenstoffen oder Alkoxy mit 1 bis 12 Kohlenstoffen sind.

**9.** Flüssigkristallzusammensetzung nach einem der Ansprüche 1 bis 8, wobei in der in Anspruch 1 beschrieben Formel (4) $P^1$, $P^2$ und $P^3$ unabhängig eine polymerisierbare Gruppe sind, ausgewählt aus der Gruppe von Gruppen der Formel (P-1) bis Formel (P-5):

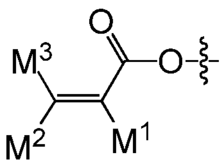

(P-1)

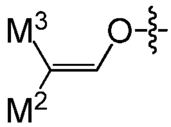

(P-2)

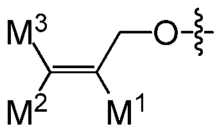

(P-3)

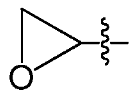

(P-4)

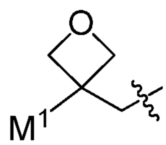

(P-5)

wobei in der Formel (P-1) bis Formel (P-5) $M^1$, $M^2$ und $M^3$ unabhängig Wasserstoff, Fluor, Alkyl mit 1 bis 5 Kohlenstoffen oder Alkyl mit 1 bis 5 Kohlenstoffen sind, in dem zumindest ein Wasserstoff durch Fluor oder Chlor ersetzt ist.

**10.** Flüssigkristallzusammensetzung nach einem der Ansprüche 1 bis 9, wobei das erste Additiv eine polare Verbindung ist, ausgewählt aus der Gruppe von Verbindungen der Formel (4-1) bis Formel (4-15):

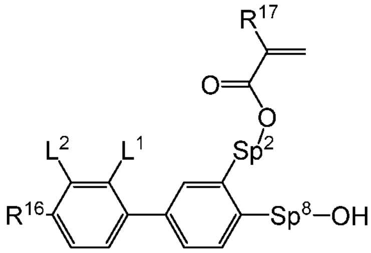

(4-1)

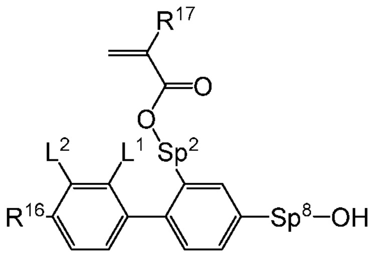

(4-2)

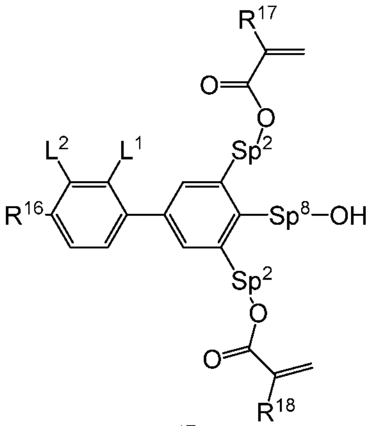

(4-3)

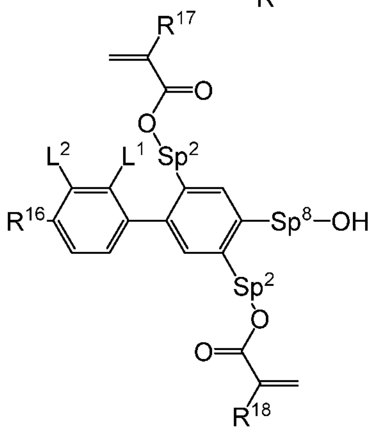

(4-4)

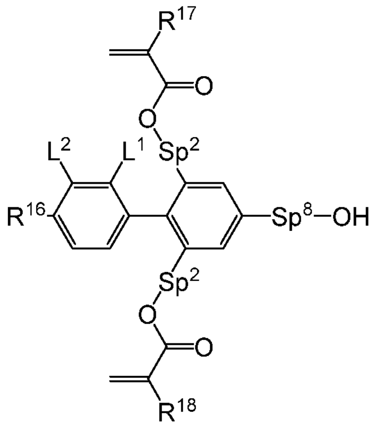

(4-5)

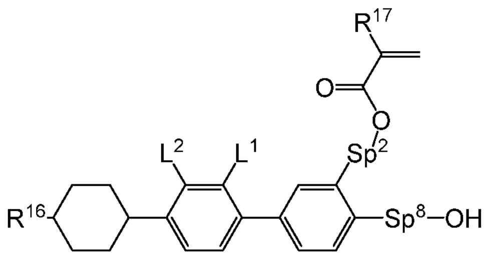

(4-6)

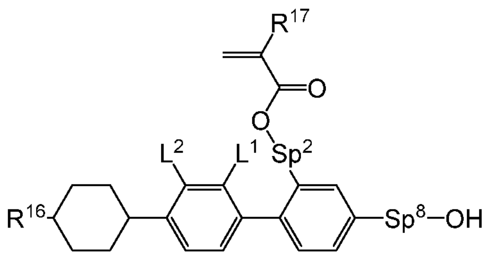

(4-7)

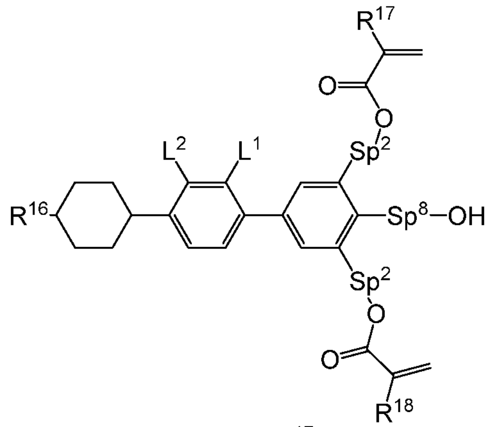

(4-8)

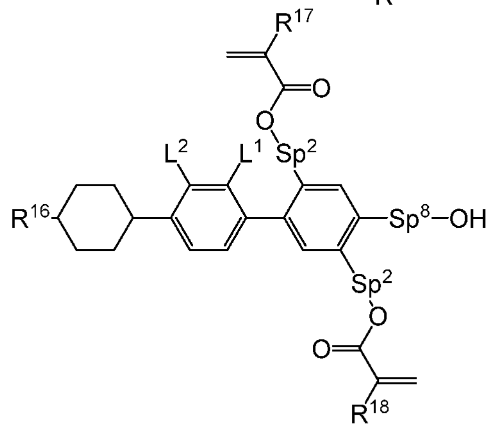

(4-9)

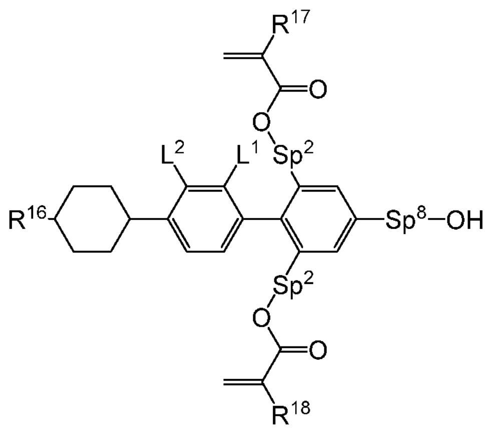

(4-10)

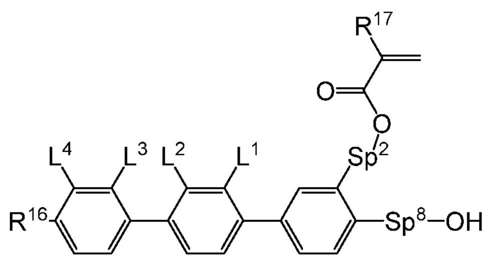

(4-11)

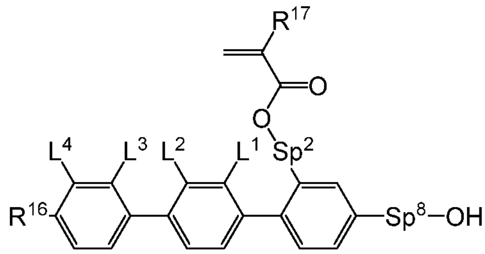

(4-12)

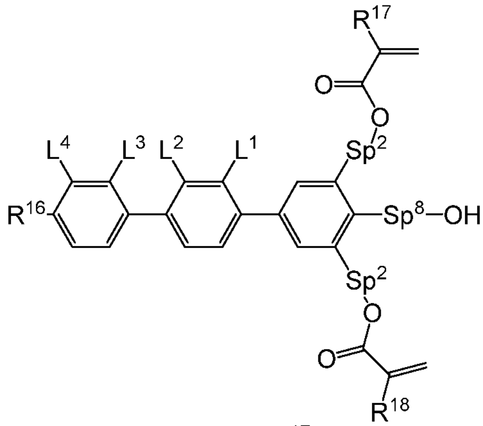

(4-13)

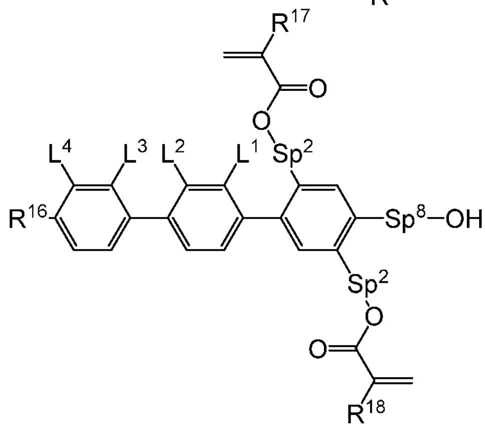

(4-14)

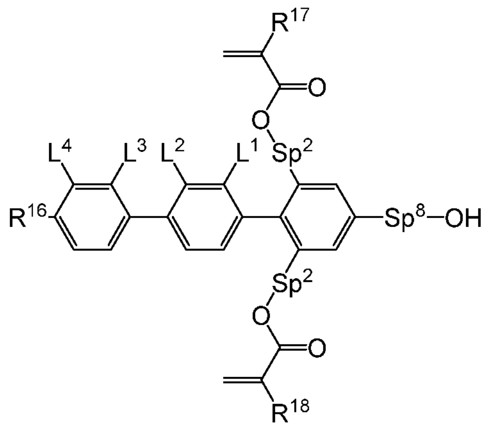

(4-15)

wobei in der Formel (4-1) bis Formel (4-15) $R^{16}$ Wasserstoff, Fluor, Chlor oder Alkyl mit 1 bis 25 Kohlenstoffen ist, und wobei in dem Alkyl zumindest ein Stück $-CH_2-$ durch $-NR^0-$, -O-, -S-, -CO-, -CO-O-, -O-CO-, -O-CO-O- oder Cycloalkylen mit 3 bis 8 Kohlenstoffen ersetzt sein kann und zumindest ein tertiärer Kohlenstoff (>CH-) durch Stickstoff (>N-) ersetzt sein kann, und in den Gruppen zumindest ein Wasserstoff durch Fluor oder Chlor ersetzt sein kann, in denen $R^0$ Wasserstoff oder Alkyl mit 1 bis 12 Kohlenstoffen ist; $Sp^2$ eine Einfachbindung oder Alkylen

mit 1 bis 10 Kohlenstoffen ist, und im Alkylen zumindest ein Stück $-CH_2-$ durch -O-, -COO-, -OCO- oder -OCOO- ersetzt sein kann, und zumindest ein Stück $-CH_2CH_2-$ durch -CH=CH- oder -C≡C- ersetzt sein kann, und in den Gruppen zumindest ein Wasserstoff durch Fluor, Chlor, $-OCO-CH=CH_2$ oder $-OCO-C(CH_3)=CH_2$ ersetzt sein kann; $Sp^8$ eine Einfachbindung, Alkylen mit 1 bis 5 Kohlenstoffen oder Alkylen mit 1 bis 5 Kohlenstoffen ist, in dem ein Stück $-CH_2-$ durch -O- ersetzt ist; $L^1$, $L^2$, $L^3$ und $L^4$ unabhängig Wasserstoff, Fluor, Methyl oder Ethyl sind; und $R^{17}$ und $R^{18}$ unabhängig Wasserstoff oder Methyl sind.

**11.** Flüssigkristallzusammensetzung nach einem der Ansprüche 1 bis 10, wobei ein Anteil des ersten Additivs im Bereich von 0,05 Gew.-% bis 10 Gew.-%, bezogen auf das Gewicht der Flüssigkristallzusammensetzung, liegt.

**12.** Flüssigkristallzusammensetzung nach einem der Ansprüche 1 bis 11, enthaltend eine polymerisierbare Verbindung, ausgewählt aus der Gruppe von Verbindungen der Formel (6), als zweites Additiv:

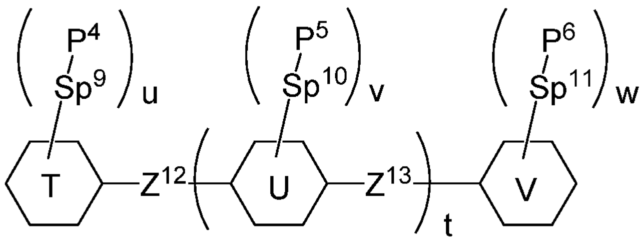

(6)

wobei in der Formel (6) der Ring T und der Ring V unabhängig Cyclohexyl, Cyclohexenyl, Phenyl, 1-Naphthyl, 2-Naphthyl, Tetrahydropyran-2-yl, 1,3-Dioxan-2-yl, Pyrimidin-2-yl oder Pyridin-2-yl sind, und in den Ringen zumindest ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, in dem zumindest ein Wasserstoff durch Fluor oder Chlor ersetzt ist, ersetzt sein kann; Ring U 1,4-Cyclohexylen, 1,4-Cyclohexenylen, 1,4-Phenylen, Naphthalin-1,2-diyl, Naphthalin-1,3-diyl, Naphthalin-1,4-diyl, Naphthalin-1,5-diyl, Naphthalin-1,6-diyl, Naphthalin-1,7-diyl, Naphthalin-1,8-diyl, Naphthalin-2,3-diyl, Naphthalin-2,6-diyl, Naphthalin-2,7-diyl, Tetrahydropyran-2,5-diyl, 1,3-Dioxan-2,5-diyl, Pyrimidin-2,5-diyl oder Pyridin-2,5-diyl ist, und in den Ringen zumindest ein Wasserstoff durch Fluor, Chlor, Alkyl mit 1 bis 12 Kohlenstoffen, Alkoxy mit 1 bis 12 Kohlenstoffen oder Alkyl mit 1 bis 12 Kohlenstoffen, in dem zumindest ein Wasserstoff durch Fluor oder Chlor ersetzt ist, ersetzt kann sein; $Z^{12}$ und $Z^{13}$ unabhängig eine Einfachbindung oder Alkylen mit 1 bis 10 Kohlenstoffen sind, und in dem Alkylen zumindest ein Stück $-CH_2-$ durch -O-, -CO-, -COO- oder -OCO- ersetzt sein kann, und zumindest ein Stück $-CH_2CH_2-$ durch -CH=CH-, $-C(CH_3)=CH-$, $-CH=C(CH_3)-$ oder $-C(CH_3)=C(CH_3)-$ ersetzt sein kann, und in den Gruppen zumindest ein Wasserstoff durch Fluor oder Chlor ersetzt sein kann; $P^4$, $P^5$ und $P^6$ eine polymerisierbare Gruppe sind; $Sp^9$, $Sp^{10}$ und $Sp^{11}$ unabhängig eine Einfachbindung oder Alkylen mit 1 bis 10 Kohlenstoffen sind, und in dem Alkylen zumindest ein Stück $-CH_2-$ durch -O-, -COO-, -OCO- oder -OCOO- ersetzt sein kann, und zumindest ein Stück $-CH_2CH_2-$ kann durch -CH=CH- oder -C≡C- ersetzt sein, und in den Gruppen zumindest ein Wasserstoff durch Fluor oder Chlor ersetzt sein kann; t 0, 1 oder 2 ist; und u, v und w unabhängig 0, 1, 2, 3 oder 4 sind, und eine Summe von u, v und w 1 oder mehr ist.

**13.** Flüssigkristallanzeigevorrichtung ohne Ausrichtungsfilm, wobei die Flüssigkristallanzeigevorrichtung die Flüssigkristallzusammensetzung nach einem der Ansprüche 1 bis 12 beinhaltet, das erste Additiv in der Flüssigkristallzusammensetzung polymerisiert ist oder das erste Additiv und das zweite Additiv polymerisiert sind.

**14.** Verwendung der Flüssigkristallzusammensetzung nach einem der Ansprüche 1 bis 12 in einer Flüssigkristallanzeigevorrichtung ohne Ausrichtungsfilm.

## Revendications

**1.** Composition de cristaux liquides ayant une anisotropie diélectrique négative, et contenant un composé représenté par la formule (1) en tant que premier composant :

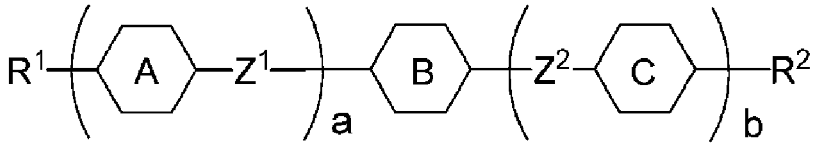

(1)

où, dans la formule (1), $R^1$ est un alcényle ayant 2 à 12 carbones, ou un alcényle ayant 2 à 12 carbones dont au moins un hydrogène est remplacé par un fluor ou un chlore ; $R^2$ est un alkyle ayant 1 à 12 carbones, alcoxy ayant 1 à 12 carbones, alcényle ayant 2 à 12 carbones ou alcényloxy ayant 2 à 12 carbones ; le cycle A et le cycle C sont indépendamment un 1,4-cyclohexylène, 1,4-cyclohexénylène, tétrahydropyrane-2,5-diyle, 1,4-phénylène, 1,4-phénylène dont au moins un hydrogène est remplacé par un fluor ou un chlore, naphtalène-2,6-diyle, naphtalène-2,6-diyle dont au moins un hydrogène est remplacé par un fluor ou un chlore, chromane-2,6-diyle, ou chromane-2,6-diyle dont au moins un hydrogène est remplacé par un fluor ou un chlore ; le cycle B est un 2,3-difluoro-1,4-phénylène, 2-chloro-3-fluoro-1,4-phénylène, 2,3-difluoro-5-méthyl-1,4-phénylène, 3,4,5-trifluoronaphtalène-2,6-diyle ou 7,8-difluorochromane-2,6-diyle ; $Z^1$ et $Z^2$ sont indépendamment une liaison simple, $-CH_2CH_2-$, $-CH_2O-$, $-OCH_2-$, -COO- ou -OCO- ; et a vaut 1, 2 ou 3, b vaut 0 ou 1, et la somme de a et b vaut 3 ou moins, et

au moins un composé polaire ayant un groupe polymérisable choisi dans l'ensemble de composés représentés par la formule (4) en tant que premier additif :

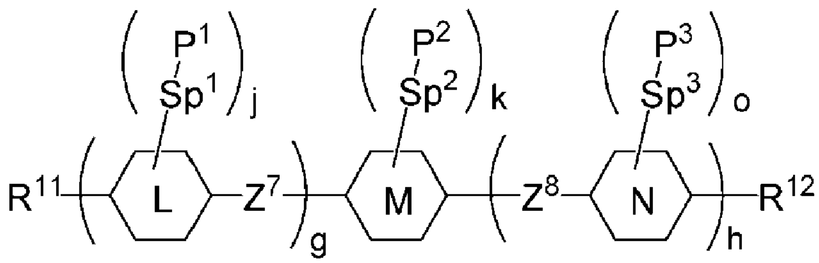

(4)

où, dans la formule (4), $R^{11}$ est un hydrogène, fluor, chlore ou alkyle ayant 1 à 25 carbones et, dans l'alkyle, au moins un fragment $-CH_2-$ peut être remplacé par $-NR^0$, -O-, -S-, -CO-, -CO-O-, -O-CO-, -O-CO-O- ou un cycloalkylène ayant 3 à 8 carbones, et au moins un carbone tertiaire (>CH-) peut être remplacé par un azote (>N-) et, dans les groupes, au moins un hydrogène peut être remplacé par un fluor ou un chlore, où $R^0$ est un hydrogène ou un alkyle ayant 1 à 12 carbones ; $R^{12}$ est un groupe polaire ayant au moins un atome d'oxygène ayant une structure OH, un atome de soufre ayant une structure SH et un atome d'azote ayant une structure d'amine primaire, secondaire ou tertiaire ; le cycle L, le cycle M et le cycle N sont indépendamment un 1,4-cyclohexylène, 1,4-cyclohexénylène, 1,4-phénylène, naphtalène-1,2-diyle, naphtalène-1,3-diyle, naphtalène-1,4-diyle, naphtalène-1,5-diyle, naphtalène-1,6-diyle, naphtalène-1,7-diyle, naphtalène-1,8-diyle, naphtalène-2,3-diyle, naphtalène-2,6-diyle, naphtalène-2,7-diyle, tétrahydropyrane-2,5-diyle, 1,3-dioxane-2,5-diyle, pyrimidine-2,5-diyle ou pyridine-2,5-diyle et, dans les cycles, au moins un hydrogène peut être remplacé par un fluor, chlore, alkyle ayant 1 à 12 carbones, alcoxy ayant 1 à 12 carbones, ou alkyle ayant 1 à 12 carbones dont au moins un hydrogène est remplacé par un fluor ou un chlore ; $Z^7$ et $Z^8$ sont indépendamment une liaison simple ou un alkylène ayant 1 à 10 carbones et, dans l'alkylène, au moins un fragment $-CH_2-$ peut être remplacé par - O-, -CO-, -COO- ou -OCO-, et au moins un fragment $-CH_2CH_2-$ peut être remplacé par -CH=CH-, $-C(CH_3)=CH-$, $-CH=C(CH_3)-$ ou $-C(CH_3)=C(CH_3)-$ et, dans les groupes, au moins un hydrogène peut être remplacé par un fluor ou un chlore ; $P^1$, $P^2$ et $P^3$ sont des groupes polymérisables ; $Sp^1$, $Sp^2$ et $Sp^3$ sont indépendamment une liaison simple ou un alkylène ayant 1 à 10 carbones et, dans l'alkylène, au moins un fragment $-CH_2-$ peut être remplacé par - O-, -COO-, -OCO- ou -OCOO-, et au moins un fragment $-CH_2CH_2-$ peut être remplacé par -CH=CH- ou -C≡C- et, dans les groupes, au moins un hydrogène peut être remplacé par un fluor, chlore, $-OCO-CH=CH_2$ ou $-OCO-C(CH_3)=CH_2$ ; g et h valent indépendamment 0, 1, 2, 3 ou 4, et la somme de g et h vaut 0, 1, 2, 3 ou 4 ; j et o valent indépendamment 0, 1, 2, 3 ou 4 ; et k vaut 1, 2, 3 ou 4.

**2.** Composition de cristaux liquides selon la revendication 1, contenant un composé choisi dans l'ensemble de composés représentés par les formules (1-1) à (1-21) en tant que premier composant :

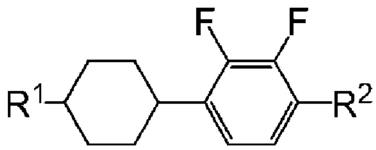
(1-1)

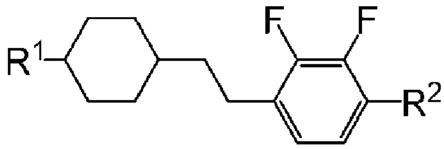
(1-2)

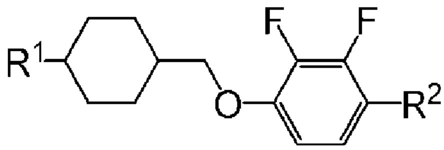
(1-3)

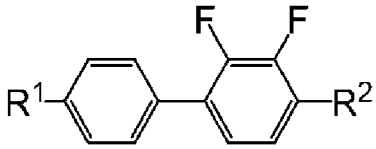
(1-4)

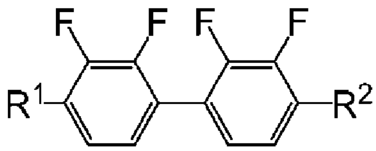
(1-5)

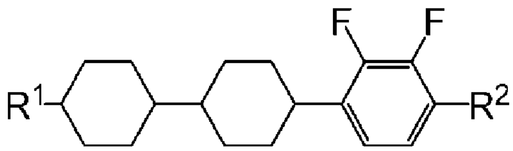
(1-6)

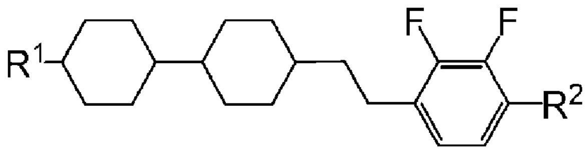
(1-7)

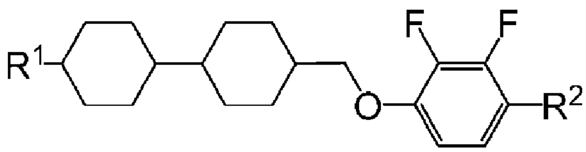
(1-8)

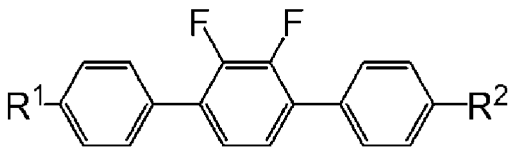
(1-9)

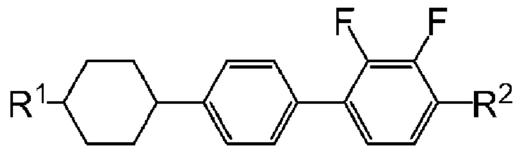
(1-10)

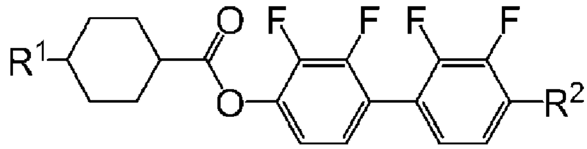
(1-11)

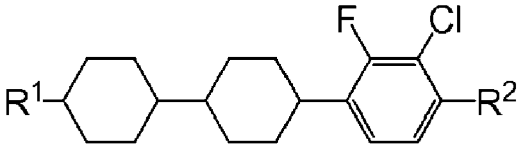
(1-12)

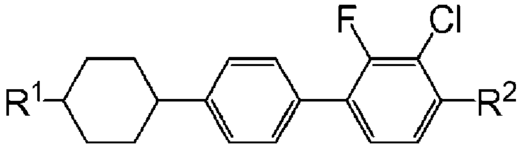
(1-13)

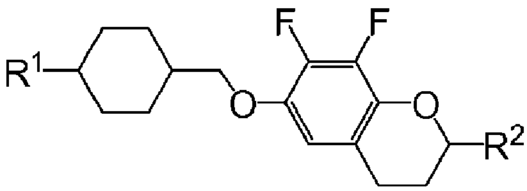
(1-14)

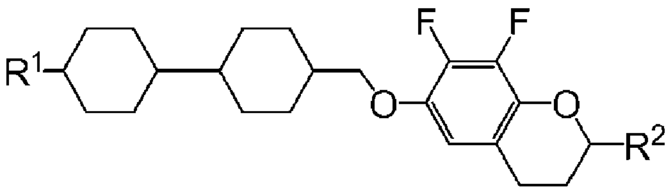
(1-15)

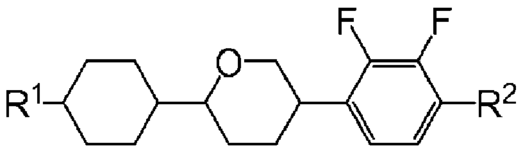
(1-16)

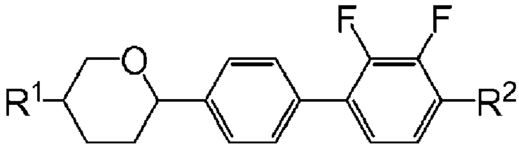
(1-17)

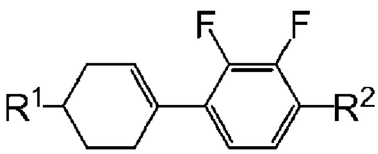
(1-18)

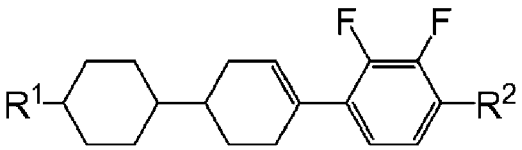

(1-19)

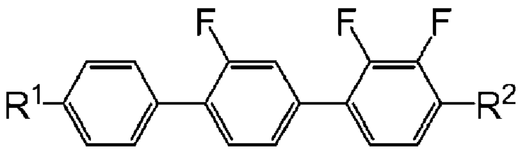

(1-20)

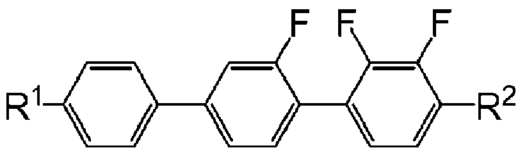

(1-21)

où, dans les formules (1-1) à (1-21), $R^1$ est un alcényle ayant 2 à 12 carbones, ou un alcényle ayant 2 à 12 carbones dont au moins un hydrogène est remplacé par un fluor ou un chlore ; et $R^2$ est un alkyle ayant 1 à 12 carbones, alcoxy ayant 1 à 12 carbones, alcényle ayant 2 à 12 carbones ou alcényloxy ayant 2 à 12 carbones.

**3.** Composition de cristaux liquides selon la revendication 1 ou 2, dans laquelle la proportion du premier composant est située dans la plage allant de 5 % en poids à 85 % en poids par rapport au poids de la composition de cristaux liquides.

**4.** Composition de cristaux liquides selon l'une quelconque des revendications 1 à 3, contenant un composé représenté par la formule (2) en tant que deuxième composant :

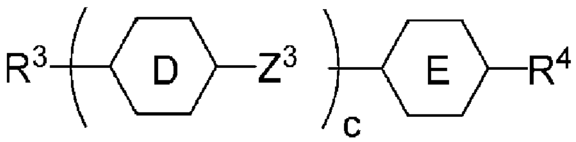

(2)

où, dans la formule (2), $R^3$ et $R^4$ sont indépendamment un alkyle ayant 1 à 12 carbones, alcoxy ayant 1 à 12 carbones, alcényle ayant 2 à 12 carbones, ou alcényle ayant 2 à 12 carbones dont au moins un hydrogène est remplacé par un fluor ou un chlore ; le cycle D et le cycle E sont indépendamment un 1,4-cyclohexylène, 1,4-phénylène, 2-fluoro-1,4-phénylène ou 2,5-difluoro-1,4-phénylène ; $Z^3$ est une liaison simple, $-CH_2CH_2-$, $-CH_2O-$, $-OCH_2-$, -COO- ou -OCO- ; et c vaut 1, 2 ou 3.

**5.** Composition de cristaux liquides selon l'une quelconque des revendications 1 à 4, contenant un composé choisi dans l'ensemble de composés représentés par les formules (2-1) à (2-13) en tant que deuxième composant :

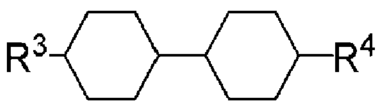

(2-1)

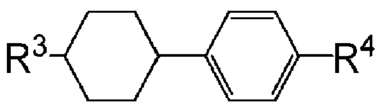

(2-2)

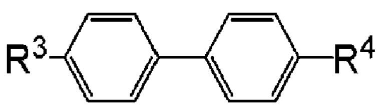

(2-3)

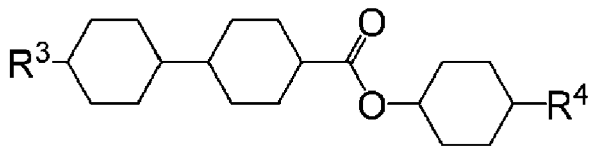

(2-4)

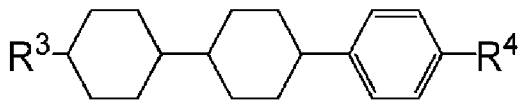

(2-5)

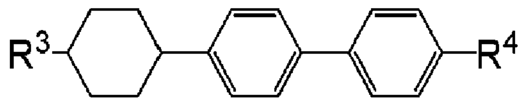

(2-6)

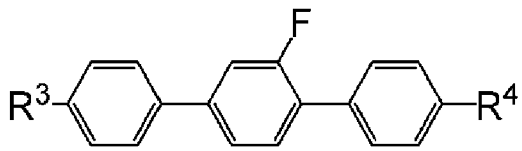

(2-7)

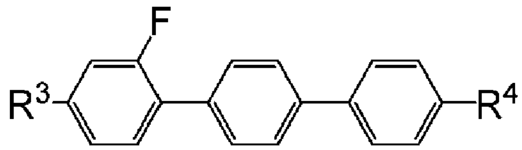

(2-8)

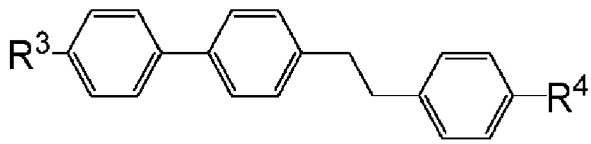

(2-9)

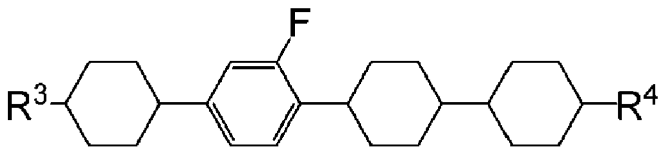

(2-10)

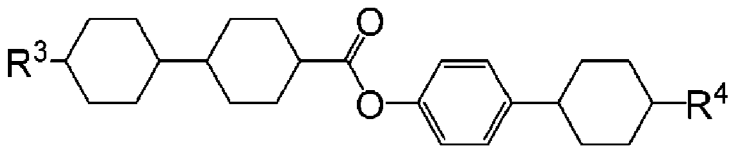

(2-11)

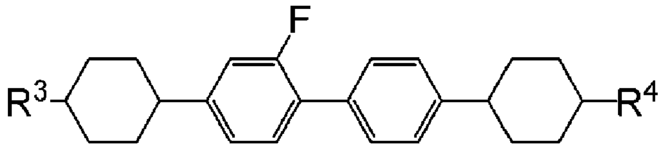

(2-12)

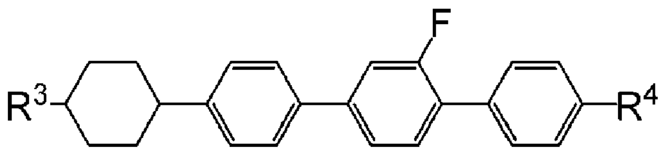

(2-13)

où, dans les formules (2-1) à (2-13), $R^3$ et $R^4$ sont indépendamment un alkyle ayant 1 à 12 carbones, alcoxy ayant 1 à 12 carbones, alcényle ayant 2 à 12 carbones, ou alcényle ayant 2 à 12 carbones dont au moins un hydrogène est remplacé par un fluor ou un chlore.

**6.** Composition de cristaux liquides selon la revendication 4 ou 5, dans laquelle la proportion du deuxième composant est située dans la plage allant de 5 % en poids à 65 % en poids par rapport au poids de la composition de cristaux liquides.

**7.** Composition de cristaux liquides selon l'une quelconque des revendications 1 à 6, contenant un composé représenté par la formule (3) en tant que troisième composant :

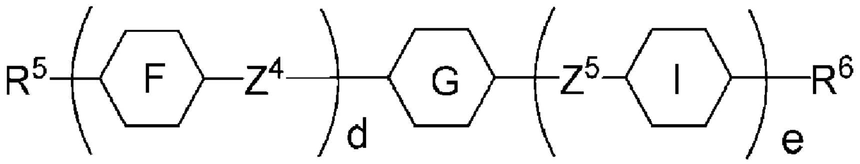
(3)

où, dans la formule (3), $R^5$ et $R^6$ sont indépendamment un alkyle ayant 1 à 12 carbones ou un alcoxy ayant 1 à 12 carbones ; le cycle F et le cycle I sont indépendamment un 1,4-cyclohexylène, 1,4-cyclohexénylène, tétrahydropyrane-2,5-diyle, 1,4-phénylène, 1,4-phénylène dont au moins un hydrogène est remplacé par un fluor ou un chlore, naphtalène-2,6-diyle, naphtalène-2,6-diyle dont au moins un hydrogène est remplacé par un fluor ou un chlore, chromane-2,6-diyle, ou chromane-2,6-diyle dont au moins un hydrogène est remplacé par un fluor ou un chlore ; le cycle G est le 2,3-difluoro-1,4-phénylène, 2-chloro-3-fluoro-1,4-phénylène, 2,3-difluoro-5-méthyl-1,4-phénylène, 3,4,5-trifluoronaphtalène-2,6-diyle ou 7,8-difluorochromane-2,6-diyle ; $Z^4$ et $Z^5$ sont indépendamment une liaison simple, $-CH_2CH_2-$, $-CH_2O-$, $-OCH_2-$, -COO- ou -OCO- ; d vaut 1, 2 ou 3 ; e vaut 0 ou 1 ; et la somme de d et e vaut 3 ou moins.

**8.** Composition de cristaux liquides selon l'une quelconque des revendications 1 à 7, contenant un composé choisi dans l'ensemble de composés représentés par les formules (3-1) à (3-21) en tant que troisième composant :

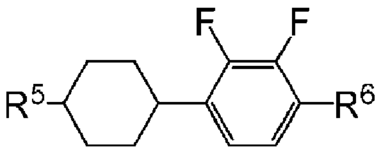
(3-1)

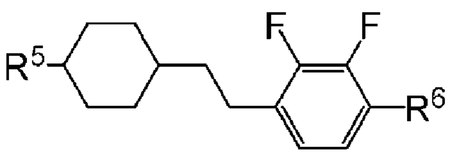
(3-2)

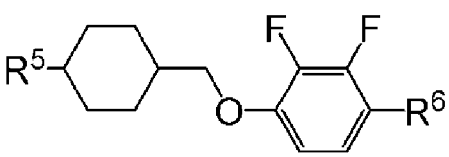
(3-3)

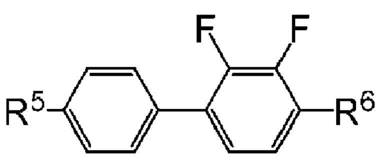
(3-4)

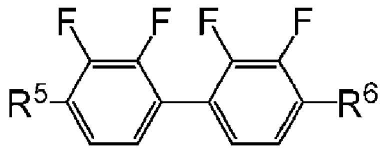

(3-5)

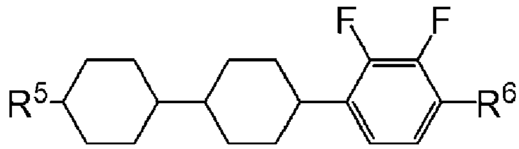

(3-6)

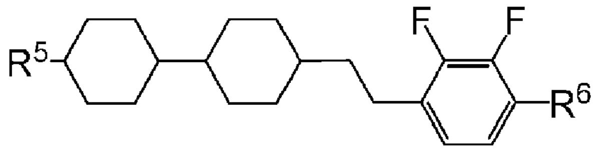

(3-7)

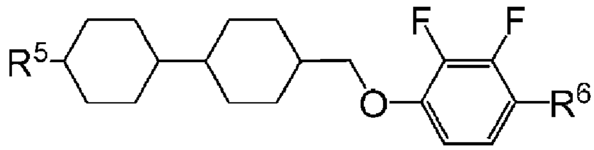

(3-8)

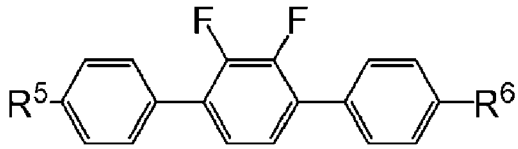

(3-9)

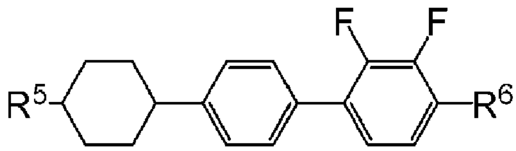

(3-10)

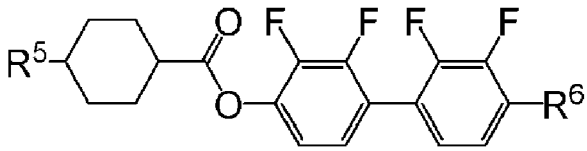

(3-11)

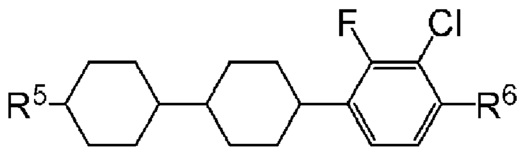

(3-12)

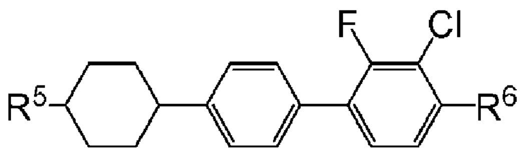

(3-13)

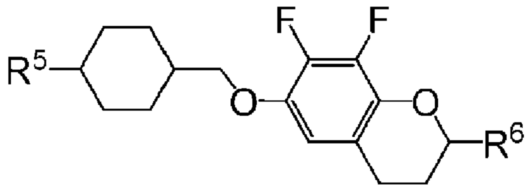

(3-14)

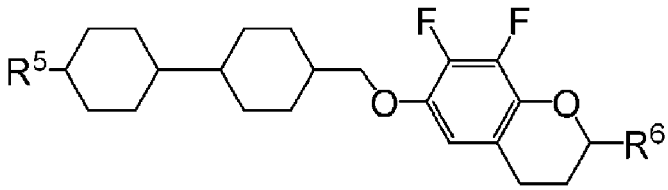

(3-15)

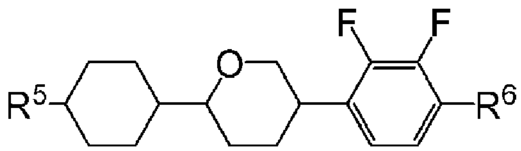

(3-16)

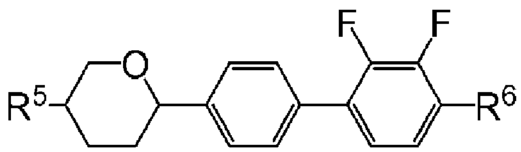

(3-17)

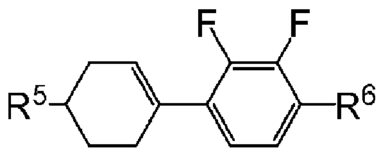

(3-18)

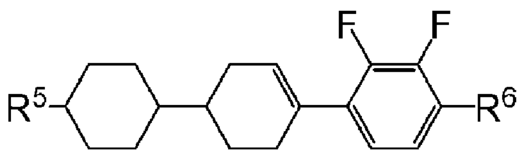

(3-19)

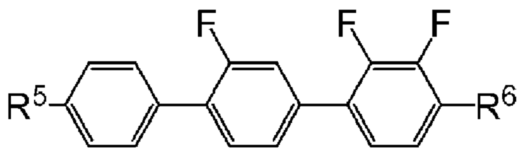

(3-20)

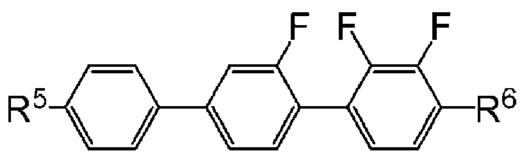

(3-21)

où, dans les formules (3-1) à (3-21), $R^5$ et $R^6$ sont indépendamment un alkyle ayant 1 à 12 carbones ou un alcoxy ayant 1 à 12 carbones.

**9.** Composition de cristaux liquides selon l'une quelconque des revendications 1 à 8, dans laquelle, dans la formule (4) décrite dans la revendication 1, $P^1$, $P^2$ et $P^3$ sont indépendamment des groupes polymérisables choisis dans l'ensemble de groupes représentés par les formules (P-1) à (P-5) :

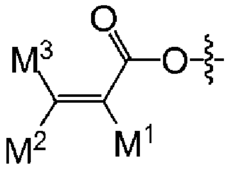
(P-1)

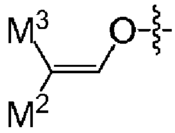
(P-2)

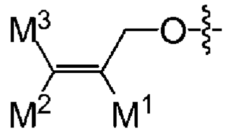
(P-3)

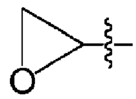
(P-4)

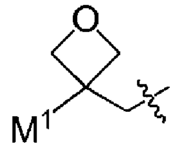
(P-5)

où, dans les formules (P-1) à (P-5), $M^1$, $M^2$ et $M^3$ sont indépendamment un hydrogène, fluor, alkyle ayant 1 à 5 carbones, ou alkyle ayant 1 à 5 carbones dont au moins un hydrogène est remplacé par un fluor ou un chlore.

**10.** Composition de cristaux liquides selon l'une quelconque des revendications 1 à 9, dans laquelle le premier additif est un composé polaire choisi dans l'ensemble de composés représentés par les formules (4-1) à (4-15) :

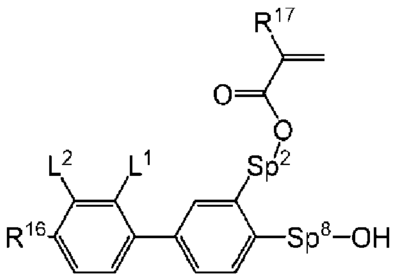
(4-1)

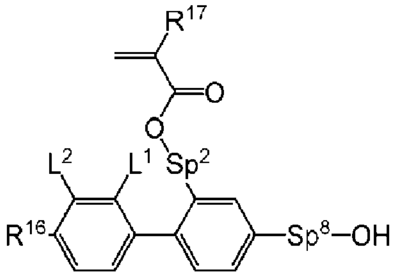
(4-2)

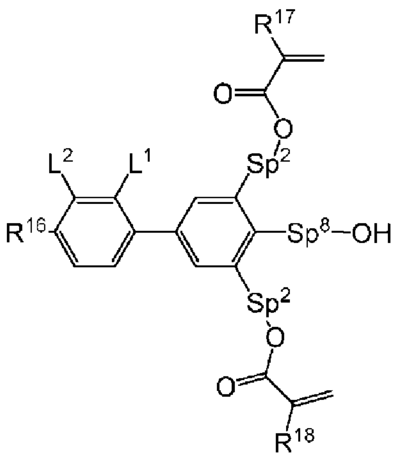
(4-3)

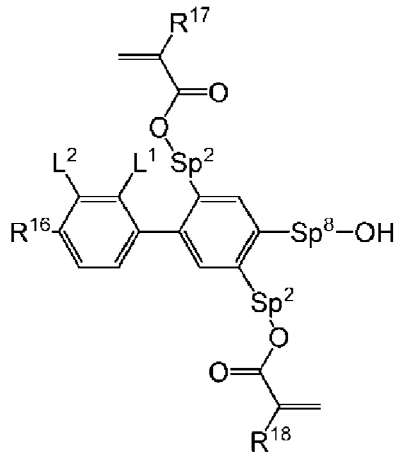

(4-4)

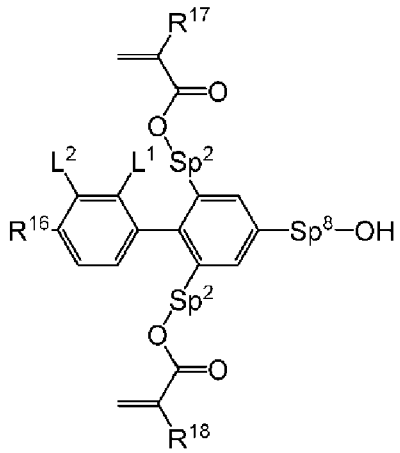

(4-5)

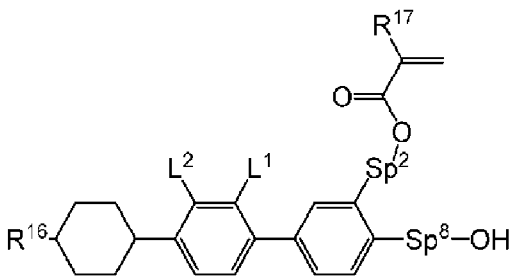

(4-6)

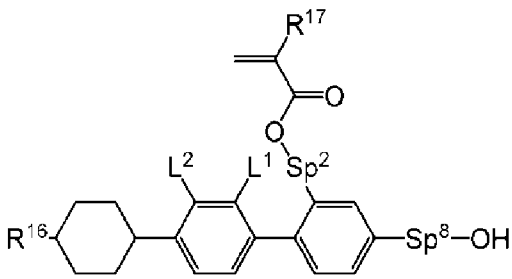

(4-7)

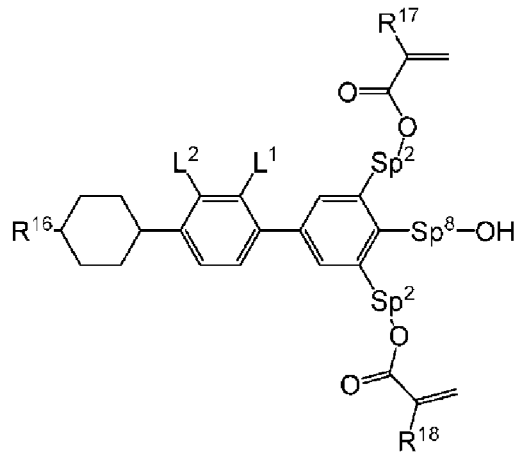

(4-8)

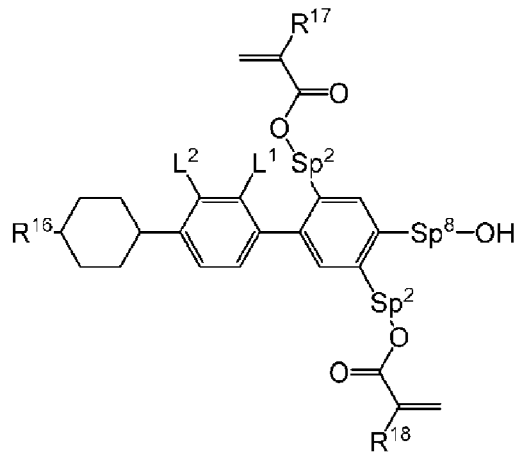

(4-9)

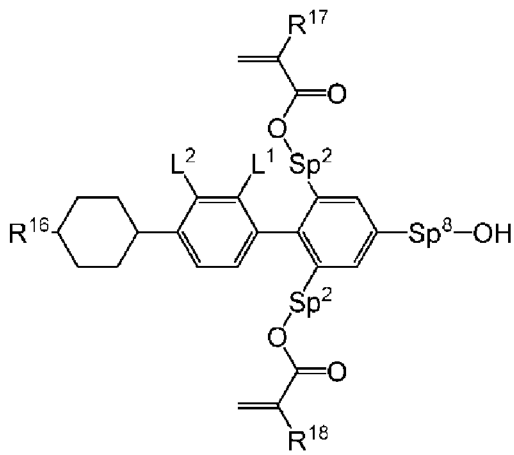

(4-10)

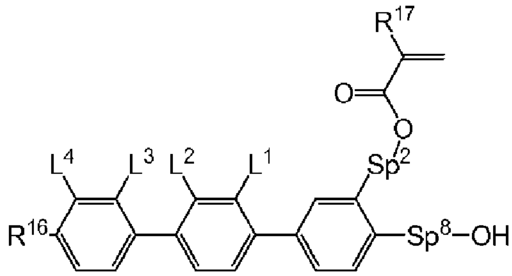

(4-11)

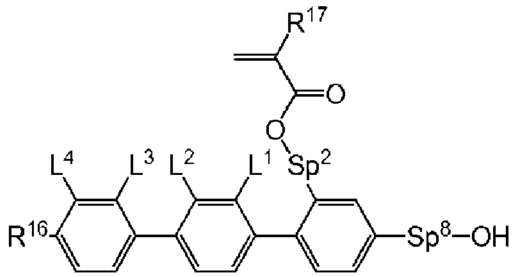

(4-12)

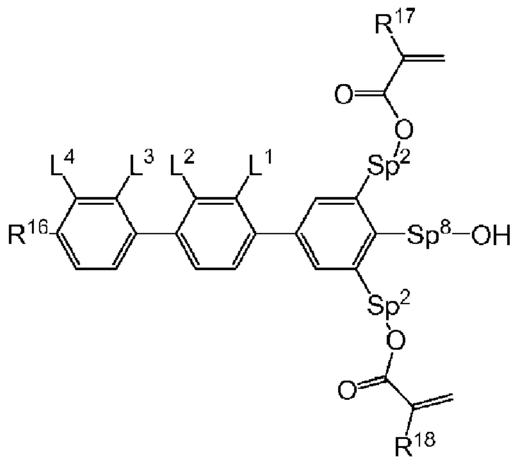

(4-13)

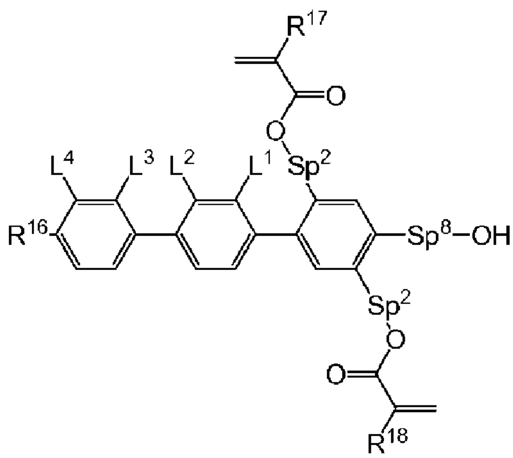

(4-14)

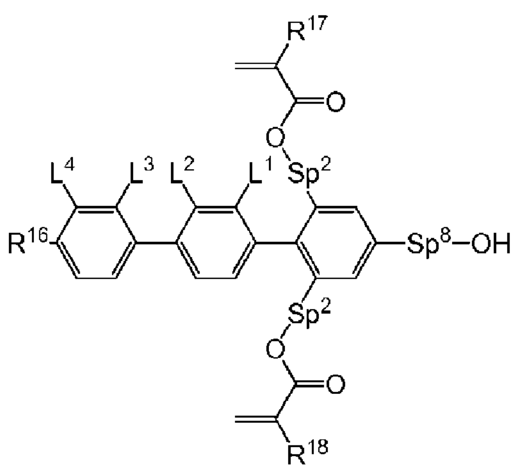

(4-15)

où, dans les formules (4-1) à (4-15), $R^{16}$ est un hydrogène, fluor, chlore ou alkyle ayant 1 à 25 carbones et, dans l'alkyle, au moins un fragment $-CH_2-$ peut être remplacé par $-NR^0-$, -O-, -S-, -CO-, -CO-O-, -O-CO-, -O-CO-O- ou cycloalkylène ayant 3 à 8 carbones, et au moins un carbone tertiaire (>CH-) peut être remplacé par un azote (>N-) et, dans les groupes, au moins un hydrogène peut être remplacé par un fluor ou un chlore, où $R^0$ est un hydrogène ou un alkyle ayant 1 à 12 carbones ; $Sp^2$ est une liaison simple ou un alkylène ayant 1 à 10 carbones et, dans l'alkylène, au moins un fragment $-CH_2-$ peut être remplacé par -O-, -COO-, -OCO- ou -OCOO-, et au moins un fragment $-CH_2CH_2-$peut être remplacé par -CH=CH- ou -C≡C- et, dans les groupes, au moins un hydrogène peut être remplacé par un fluor, chlore, $-OCO-CH=CH_2$ ou $-OCO-C(CH_3)=CH_2$ ; $Sp^8$ est une liaison simple, un alkylène ayant 1 à 5 carbones, ou un alkylène ayant 1 à 5 carbones dans lequel un fragment $-CH_2-$ est remplacé par -O- ; $L^1$, $L^2$, $L^3$ et $L^4$ sont indépendamment un hydrogène, fluor, méthyle ou éthyle ; et $R^{17}$ et $R^{18}$ sont indépendamment un hydrogène ou méthyle.

**11.** Composition de cristaux liquides selon l'une quelconque des revendications 1 à 10, dans laquelle la proportion du premier additif est située dans la plage allant de 0,05 % en poids à 10 % en poids par rapport au poids de la composition de cristaux liquides.

**12.** Composition de cristaux liquides selon l'une quelconque des revendications 1 à 11, contenant un composé polymérisable choisi dans l'ensemble de composés représentés par la formule (6) en tant que deuxième additif :

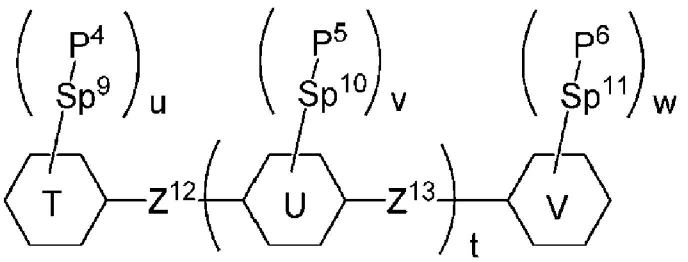

(6)

où, dans la formule (6), le cycle T et le cycle V sont indépendamment un cyclohexyle, cyclohexényle, phényle, 1-naphtyle, 2-naphtyle, tétrahydropyran-2-yle, 1,3-dioxan-2-yle, pyrimidin-2-yle ou pyridin-2-yle et, dans les cycles, au moins un hydrogène peut être remplacé par un fluor, chlore, alkyle ayant 1 à 12 carbones, alcoxy ayant 1 à 12 carbones, ou alkyle ayant 1 à 12 carbones dont au moins un hydrogène est remplacé par un fluor ou un chlore ; le cycle U est un 1,4-cyclohexylène, 1,4-cyclohexénylène, 1,4-phénylène, naphtalène-1,2-diyle, naphtalène-1,3-diyle, naphtalène-1,4-diyle, naphtalène-1,5-diyle, naphtalène-1,6-diyle, naphtalène-1,7-diyle, naphtalène-1,8-diyle, naphtalène-2,3-diyle, naphtalène-2,6-diyle, naphtalène-2,7-diyle, tétrahydropyrane-2,5-diyle, 1,3-dioxane-2,5-diyle, pyrimidine-2,5-diyle ou pyridine-2,5-diyle et, dans les cycles, au moins un hydrogène peut être remplacé par un fluor, chlore, alkyle ayant 1 à 12 carbones, alcoxy ayant 1 à 12 carbones, ou alkyle ayant 1 à 12 carbones dont au moins un hydrogène est remplacé par un fluor ou un chlore ; $Z^{12}$ et $Z^{13}$ sont indépendamment une liaison simple ou un alkylène ayant 1 à 10 carbones et, dans l'alkylène, au moins un fragment $-CH_2-$ peut être remplacé par -O-, -CO-, -COO- ou -OCO-, et au moins un fragment $-CH_2CH_2-$ peut être remplacé par -CH=CH-, $-C(CH_3)=CH-$, $- CH=C(CH_3)-$ ou
$-C(CH_3)=C(CH_3)-$ et, dans les groupes, au moins un hydrogène peut être remplacé par un fluor ou un chlore ; $P^4$, $P^5$ et $P^6$ sont des groupes polymérisables ; $Sp^9$, $Sp^{10}$ et $Sp^{11}$ sont indépendamment une liaison simple ou un alkylène ayant 1 à 10 carbones et, dans l'alkylène, au moins un fragment $-CH_2-$ peut être remplacé par - O-, -COO-, -OCO- ou -OCOO-, et au moins un fragment $-CH_2CH_2-$ peut être remplacé par -CH=CH- ou -C≡C- et, dans les groupes, au moins un hydrogène peut être remplacé par un fluor ou un chlore ; t vaut 0, 1 ou 2 ; et u, v et w valent indépendamment 0, 1, 2, 3 ou 4, et la somme de u, v et w vaut 1 ou plus.

**13.** Dispositif d'affichage à cristaux liquides n'ayant pas de film d'alignement, lequel dispositif d'affichage à cristaux liquides comprend la composition de cristaux liquides de l'une quelconque des revendications 1 à 12, le premier additif dans la composition de cristaux liquides est polymérisé, ou le premier additif et le deuxième additif sont polymérisés.

**14.** Utilisation de la composition de cristaux liquides de l'une quelconque des revendications 1 à 12 dans un dispositif d'affichage à cristaux liquides n'ayant pas de film d'alignement.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2918658 A2
- WO 2014136770 A1
- WO 2013047359 A1
- WO 2013080850 A1
- WO 2013054682 A1
- WO 2014090362 A
- WO 2014094959 A
- WO 2013004372 A
- WO 2012104008 A
- WO 2012038026 A
- JP S5035076 A
- JP 2006199941 A
- JP 2000053602 A
- JP S59176221 A
- JP H2503441 A
- JP H7101900 A
- US 3660505 B
- JP 2013177561 A


### Non-patent literature cited in the description


- Organic Syntheses. John Wiley & Sons, Inc,
- Organic Reactions. John Wiley & Sons, Inc,
- Comprehensive Organic Synthesis. Pergamon Press
- New Experimental Chemistry Course (Shin Jikken Kagaku Koza in Japanese). Maruzen Co., Ltd,
- **M. IMAI et al.** *Molecular Crystals and Liquid Crystals,* 1995, vol. 259, 37
- **J. HILFIKER ; B. JOHS ; C. HERZINGER ; J. F. ELMAN ; E. MONTBACH ; D. BRYANT ; P. J. BOS.** *Thin Solid Films,* 2004, vol. 455-456, 596-600